# EUROPEAN PATENT APPLICATION

(11) **EP 4 733 890 A1**
(43) Date of publication of application: **29.04.2026**
(21) Application number: 25729704.4
(22) Date of filing: 07.05.2025
(51) Int. Cl.: G06F 1/16, F16C 11/04

(54) **FOLDABLE ELECTRONIC DEVICE INCLUDING HINGE STRUCTURE**

(30) Priority: 02.08.2024 KR 20240103344; 23.09.2024 KR 20240128327
(71) Applicant: Samsung Electronics Co., Ltd, Suwon-si, Gyeonggi-do 16677 (KR)
(72) Inventor: SONG, Minsuk, Suwon-si, Gyeonggi-do 16677 (KR); KIM, Jihoon, Suwon-si, Gyeonggi-do 16677 (KR); AHN, Jaeuk, Suwon-si, Gyeonggi-do 16677 (KR); JUNG, Soli, Suwon-si, Gyeonggi-do 16677 (KR); CHOI, Junyoung, Suwon-si, Gyeonggi-do 16677 (KR); YOON, Byounguk, Suwon-si, Gyeonggi-do 16677 (KR); JUN, Jaeyoung, Suwon-si, Gyeonggi-do 16677 (KR); CHOI, Jinug, Suwon-si, Gyeonggi-do 16677 (KR)
(74) Representative: Nederlandsch Octrooibureau
(86) International application number: PCT/KR2025/006043
(87) International publication number: WO 2026/029322

(57) **Abstract**

A foldable electronic device according to various embodiments may include a housing including a first housing, a second housing, and a hinge housing positioned at least in part between the first housing and the second housing, a flexible display accommodated at least in part in the first housing and the second housing, and a hinge module connected to the first housing and the second housing. The hinge module may include a first shaft corresponding to a first rotation axis, a second shaft corresponding to a second rotation axis, and a first sink arm configured to rotate about the first rotation axis while the first housing rotates. The first sink arm may include a first through hole which the first shaft passes through and a first spiral portion. The hinge module may include a second sink arm configured to rotate about the second rotation axis while the second housing rotates. The second sink arm may include a second through hole which the first shaft passes through and a second spiral portion. The hinge module may include a sliding member configured to move in a direction parallel to the first rotation axis and the second rotation axis while at least one of the first housing or the second housing rotates. The sliding member may include a third through hole which the first shaft passes through, a fourth through hole which the second shaft passes through, a third spiral portion corresponding to the first spiral portion, and a fourth spiral portion corresponding to the second spiral portion. A folding portion of the flexible display may be positioned at least in part between a virtual line connecting a top of the third spiral portion and a top of the fourth spiral portion of the sliding member and the hinge housing, with the housing folded.

## Description

### [Technical Field]

The disclosure relates generally to a foldable electronic device including a hinge structure.

### [Background Art]

An electronic device is developed in a portable or wearable manner to improve its mobility and accessibility. Such an electronic device gets lighter and thinner for ease of portability, and evolves for convenience of use.

For example, since a foldable electronic device having a flexible display provides a relatively larger screen than a general bar-type electronic device but reduces in size if folded to thus improve portability, it is spotlighted as an electronic device for satisfying consumer preference.

Such a foldable electronic device may include a flexible display and a plurality of housings, and the plurality of housings and the flexible display may be connected by a hinge assembly, to rotate the housings within a designated range according to a user's manipulation. By rotating the plurality of housings, the electronic device may switch from a folded state to an unfolded state, or may switch from the unfolded state to the folded state.

The foregoing information may be provided as related art for the purpose of aiding understanding of the disclosure. No claim or determination is made as to whether any of the foregoing may be applied as the prior art in connection with the disclosure.

### [Disclosure of Invention]

### [Solution to Problem]

A foldable electronic device according to an embodiment of the disclosure may include a housing including a first housing, a second housing, and a hinge housing positioned at least in part between the first housing and the second housing, a flexible display supported by the first housing and the second housing, and a hinge module rotatably coupling the first housing and the second housing. The hinge module may include a first shaft corresponding to a first rotation axis, a second shaft corresponding to a second rotation axis, and a first sink arm configured to rotate about the first rotation axis while the first housing rotates. The first sink arm may include a first through hole which the first shaft passes through and a first spiral portion extending from the surface in which the first through hole is formed. The hinge module may include a second sink arm configured to rotate about the second rotation axis while the second housing rotates. The second sink arm may include a second through hole which the first shaft passes through and a second spiral portion extending from the surface in which the second through hole is formed. The hinge module may include a sliding member configured to move in a direction parallel to the first rotation axis and the second rotation axis while at least one of the first housing or the second housing rotates. The sliding member may include a third through hole which the first shaft passes through, a fourth through hole which the second shaft passes through, a third spiral portion corresponding to the first spiral portion, and a fourth spiral portion corresponding to the second spiral portion. A folding portion of the flexible display may be positioned at least in part between a virtual line connecting a top of the third spiral portion and a top of the fourth spiral portion of the sliding member and the hinge housing, with the housing folded.

A foldable electronic device according to an embodiment of the disclosure may include a housing including a first housing, a second housing, and a hinge housing positioned at least in part between the first housing and the second housing, a flexible display received at least in part in the first housing and the second housing, and a hinge module connected to the first housing and the second housing. The hinge module may include a first shaft corresponding to a first rotation axis, a second shaft corresponding to a second rotation axis, and a first sink arm configured to rotate about the first rotation axis while the first housing rotates. The first sink arm may include a first through hole which the first shaft passes through and a first spiral portion. A first cam portion may be formed on a surface in a direction parallel to the first rotation axis in a portion surrounding the first through hole of the first sink arm. The hinge module may include a second sink arm configured to rotate about the second rotation axis while the second housing rotates. The second sink arm may include a second through hole which the first shaft passes through and a second spiral portion. A second cam portion may be formed on a surface in a direction parallel to the second rotation axis in a portion surrounding the second through hole of the second sink arm. The hinge module may include a camber member including a third cam portion corresponding to the first cam portion, a fourth cam portion corresponding to the second cam portion, and a connection portion for connecting the third cam portion and the fourth cam portion. A center portion of the connection portion may be positioned at least in part between a virtual line connecting the first shaft and the second shaft and the hinge housing. The hinge module may include a sliding member configured to move in a direction parallel to the first rotation axis and the second rotation axis while at least one of the first housing or the second housing rotates. The sliding member may include a third through hole which the first shaft passes through, a fourth through hole which the second shaft passes through, a third spiral portion corresponding to the first spiral portion, and a fourth spiral portion corresponding to the second spiral portion.

### [Brief Description of Drawings]

FIG. 1 is a side view illustrating an example of a first state of a foldable electronic device including a plurality of hinge structures according to an embodiment.
FIG. 2 is a perspective view illustrating an example of a first state of a foldable electronic device including a plurality of hinge structures according to an embodiment.
FIG. 3 is a side view illustrating an example of a second state of a foldable electronic device including a plurality of hinge structures according to an embodiment.
FIG. 4 is a perspective view illustrating an example of a second state of a foldable electronic device including a plurality of hinge structures according to an embodiment.
FIG. 5 is a side view illustrating an example of a third state of a foldable electronic device including a plurality of hinge structures according to an embodiment.
FIG. 6 is a perspective view illustrating an example of a third state of a foldable electronic device including a plurality of hinge structures according to an embodiment.
FIG. 7 is a diagram illustrating configurations of a foldable electronic device according to an embodiment.
FIG. 8 is a diagram illustrating configurations of a first hinge structure according to an embodiment.
FIG. 9 is a diagram illustrating configurations of a second hinge structure according to an embodiment.
FIG. 10 is a diagram illustrating an accommodation space in which a first housing is disposed with a foldable electronic device folded by a second hinge structure according to an embodiment.
FIG. 11 is a perspective view of a hinge module according to an embodiment.
FIG. 12 is an exploded perspective view of configurations of a hinge module according to an embodiment.
FIG. 13 is an exploded perspective view of configurations of a hinge module according to an embodiment.
FIG. 14 is a perspective view of some configurations of hinge module being coupled according to an embodiment.
FIG. 15 is a perspective view of a first sink arm according to an embodiment.
FIG. 16 is a perspective view of a third sink arm according to an embodiment.
FIG. 17 is a perspective view of a sliding member according to an embodiment.
FIG. 18 is a diagram illustrating a process of coupling some configurations of a hinge module according to an embodiment.
FIG. 19 is a diagram of a first sink arm and a third sink arm coupled according to an embodiment.
FIG. 20 is a diagram illustrating movement of a sliding member according to an embodiment.
FIG. 21 is a cross-sectional view illustrating a cross-section of a flexible display in a folded state of a foldable electronic device according to an embodiment.
FIG. 22 is a diagram illustrating a process of coupling rotation arms, a rotation guide bracket, and a hinge housing according to an embodiment.
FIG. 23 is a perspective view of a rotation guide bracket according to an embodiment.
FIG. 24 is a perspective view of a first rotation arm according to an embodiment.
FIG. 25 is a perspective view of a hinge housing according to an embodiment.
FIG. 26 is a cross-sectional view of a hinge module supporting a flexible display in an unfolded state of a foldable electronic device according to an embodiment.
FIG. 27 is a cross-sectional view of a hinge module supporting a flexible display while a foldable electronic device is folded according to an embodiment.
FIG. 28 is a cross-sectional view of a hinge module supporting a flexible display in a folded state of a foldable electronic device according to an embodiment.
FIG. 29 is a diagram illustrating coupling of a rotation arm and a sink arm having different axes of rotation according to an embodiment.
FIG. 30 is a cross-sectional view of a foldable electronic device in an unfolded state of the foldable electronic device according to an embodiment.
FIG. 31 is a cross-sectional view of a foldable electronic device while the foldable electronic device is folded according to an embodiment.
FIG. 32 is a cross-sectional view of a foldable electronic device in a folded state of the foldable electronic device according to an embodiment.
FIG. 33 is a perspective view of a sliding member including a rib according to an embodiment.
FIG. 34 is a perspective view of a rotation guide bracket including a rib guide portion according to an embodiment.
FIG. 35 is a diagram illustrating movement of a rib of a sliding member within a rib guide portion of a rotation guide bracket according to an embodiment.
FIG. 36 is a perspective view of a hinge module with a sink arm and a cam structure coupled according to an embodiment.
FIG. 37 is a diagram illustrating a first cam portion of a third sink arm and a third cam portion of a first cam member according to an embodiment.
FIG. 38 is an arrangement of a first cam portion of a third sink arm and a third cam of a first cam member in an unfolded state of a foldable electronic device according to an embodiment.
FIG. 39 is an arrangement of a first cam portion of a third sink arm and a third cam portion of a first cam member while a foldable electronic device is folded according to an embodiment.
FIG. 40 is an arrangement of a first cam portion of a third sink arm and a third cam portion of a first cam member in a folded state of a foldable electronic device according to an embodiment.
FIG. 41 is a perspective view of a shaft bracket according to an embodiment.
FIG. 42 is an arrangement of a flexible display, elastic members, and a hinge housing in a folded state of a foldable electronic device according to an embodiment.
FIG. 43 is a perspective view of a first ring member and a third ring member coupled with a first shaft according to an embodiment.
FIG. 44 is a perspective view of a fixing bracket according to an embodiment.
FIG. 45 is a diagram of shafts coupled to a fixing bracket according to an embodiment.
FIG. 46 is a diagram illustrating coupling of a hinge housing and a hinge module according to an embodiment.
FIG. 47 is a diagram of a support plate in an unfolded state of a foldable electronic device according to an embodiment.
FIG. 48 is a diagram illustrating a support plate in a folded state of a foldable electronic device according to an embodiment.
FIG. 49 is an arrangement of a flexible display and a support plate in an unfolded state of a foldable electronic device according to an embodiment.
FIG. 50 is an arrangement of a flexible display and a support plate in a folded state of a foldable electronic device according to an embodiment.

In relation to descriptions of the drawings, like or similar reference numerals may be used for like or similar components.

### [Mode for the Invention]

Hereinafter, various embodiments of the disclosure are disclosed with reference to the attached drawings. However, it should be understood that this is not intended to limit the invention to specific embodiments, and embraces various modifications, equivalents, and/or alternatives of embodiments of the invention.

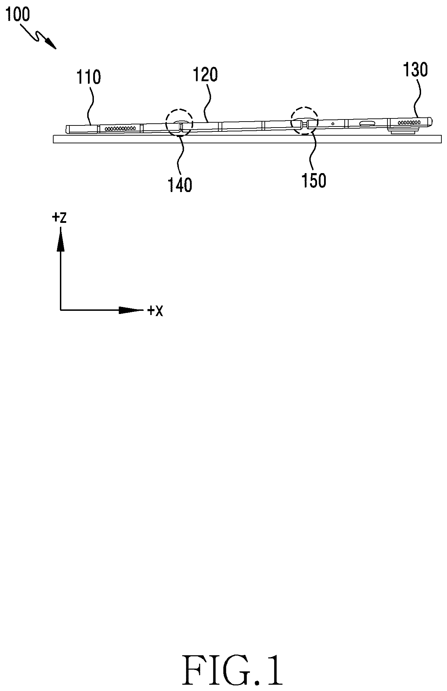

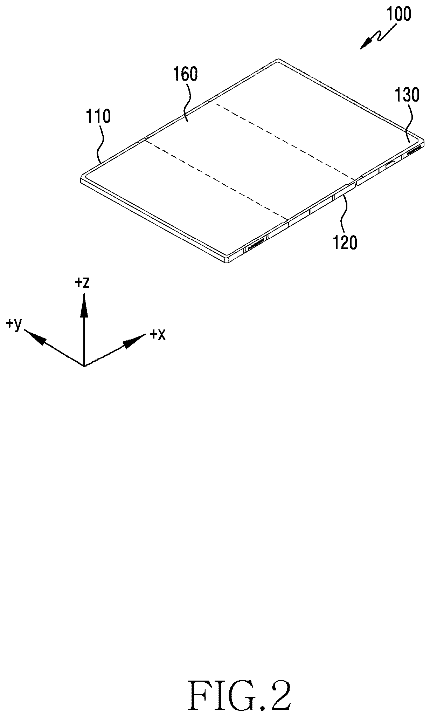

FIG. 1 is a side view illustrating an example of a first state of a foldable electronic device including a plurality of hinge structures according to an embodiment. FIG. 2 is a perspective view illustrating an example of a first state of a foldable electronic device including a plurality of hinge structures according to an embodiment.

According to an embodiment of the disclosure, a foldable electronic device 100 may include a first housing 110, a second housing 120, a third housing 130, a first hinge structure 140, a second hinge structure 150, and a flexible display 160. The first hinge structure 140 may be disposed between the first housing 110 and the second housing 120. The first hinge structure 140 may rotatably connect the first housing 110 and the second housing 120.

According to an embodiment, the second hinge structure 150 may be disposed between the second housing 120 and the third housing 130. The second hinge structure 150 may rotatably connect the second housing 120 and the third housing 130. The flexible display 160 may be disposed at least in the first housing 110, the second housing 120 and the third housing 130.

According to an embodiment, the flexible display 160 may be disposed to cross at least a part of the first hinge structure 140 and the second hinge structure 150. The flexible display 160 may be folded or unfolded by the first hinge structure 140 and the second hinge structure 150.

According to an embodiment of the disclosure, the flexible display 160 may include a first region, a second region, and a third region. For example, the first region may be a region disposed in the first housing 110 in the entire region of the flexible display 160. For example, the second region may be a region disposed in the second housing 120 in the entire region of the flexible display 160. For example, the third region may be a region disposed in the third housing 130 in the entire region of the flexible display 160.

According to an embodiment of the disclosure, referring to FIG. 1 and FIG. 2, a first state of the foldable electronic device 100 may include a state in which the foldable electronic device 100 is unfolded by the first hinge structure 140, and unfolded by the second hinge structure 150. For example, in the first state where the foldable electronic device 100 is unfolded by the first hinge structure 140 and the second hinge structure 150, the first housing 110, the second housing 120, and the third housing 130 may be disposed substantially in parallel. For example, in the first state with the foldable electronic device 100 unfolded, the first region, the second region, and the third region of the flexible display 160 may be disposed substantially in parallel. For example, in the first state with the foldable electronic device 100 unfolded, the first region, the second region, and the third region of the flexible display 160 may be disposed to face a first direction (e.g., in the +z axis direction).

According to an embodiment of the disclosure, the foldable electronic device 100 may be sequentially unfolded by the second hinge structure 150 and the first hinge structure 140. For example, the second housing 120 and the third housing 130 may be rotated by the second hinge structure 150. For example, the first housing 110 and the second housing 120 may be rotated by the first hinge structure 140.

According to an embodiment of the disclosure, as the second housing 120 and the third housing 130 are rotated by the second hinge structure 150, the second region and the third region of the flexible display 160 may be disposed substantially in parallel. For example, the second region and the third region may be disposed to face the first direction. For example, as the second housing 120 and the third housing 130 are rotated by the second hinge structure 150, the second region of the flexible display 160 may move away from the third region.

According to an embodiment of the disclosure, as the first housing 110 and the second housing 120 are rotated by the first hinge structure 140, the first region and the second region of the flexible display 160 may be disposed substantially in parallel. For example, the first region and the second region may be disposed to face the first direction. For example, as the first housing 110 and the second housing 120 are rotated by the second hinge structure 150, the first region of the flexible display 160 may move away from the second region.

According to an embodiment of the disclosure, referring to FIG. 1 and FIG. 2, in the first state of the foldable electronic device 100, all of the first region, the second region, and the third region of the flexible display 160 may be disposed to face the first direction.

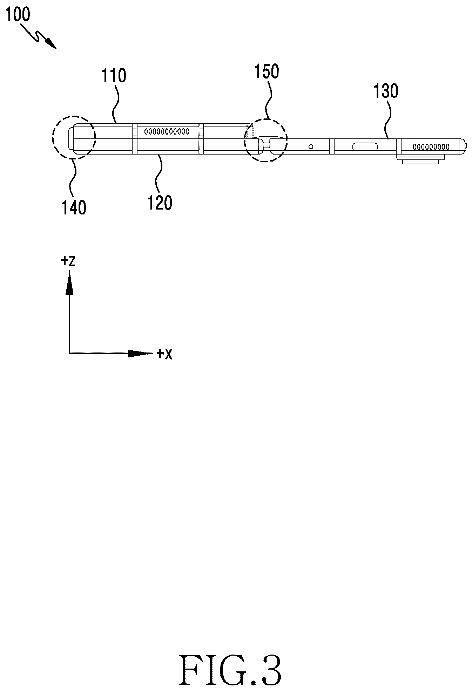

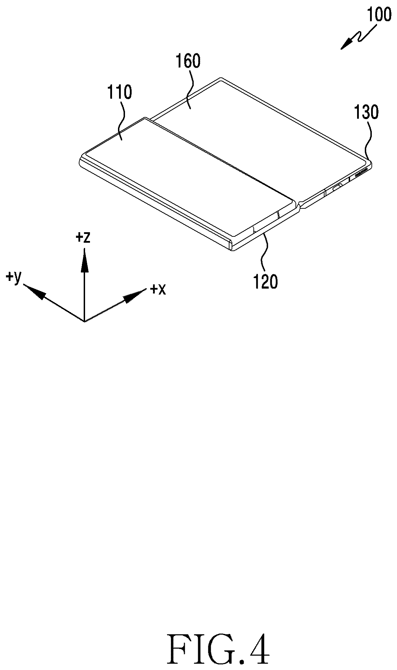

FIG. 3 is a side view illustrating an example of a second state of a foldable electronic device including a plurality of hinge structures, according to an embodiment. FIG. 4 is a perspective view illustrating an example of a second state of a foldable electronic device including a plurality of hinge structures, according to an embodiment.

According to an embodiment of the disclosure, referring to FIG. 3 and FIG. 4, the second state of the foldable electronic device 100 may include a state in which the foldable electronic device 100 is folded by the first hinge structure 140 and unfolded by the second hinge structure 150. The first housing 110 and the second housing 120 may be rotated by the first hinge structure 140. For example, with the foldable electronic device 100 folded by the first hinge structure 140, the first housing 110 may overlap the second housing 120. For example, as the foldable electronic device 100 is folded by the first hinge structure 140, the first region of the flexible display 160 may get close to the second region. For example, with the foldable electronic device 100 folded by the first hinge structure 140, the first region and the second region of the flexible display 160 may overlap. For example, the state in which the first region and the second region are overlapped may include a state in which the first region and the second region are disposed to face each other. For example, the overlapping state of the first region and the second region may include a state in which the first region is disposed to face a second direction (the -z-axis direction) and the second region is disposed to face the first direction.

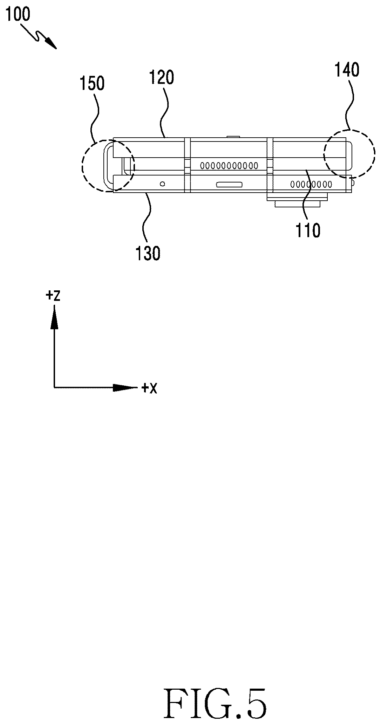

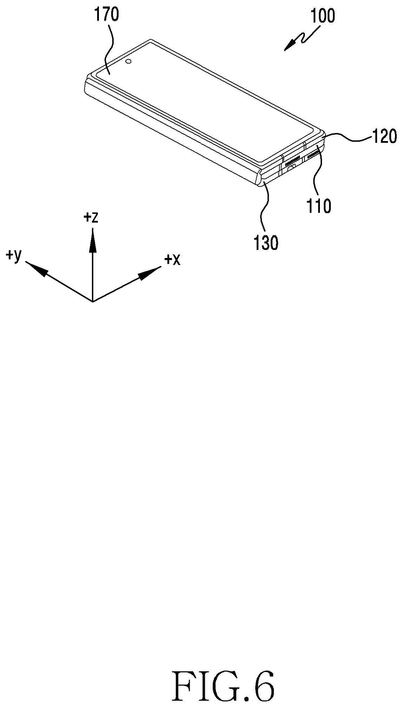

FIG. 5 is a side view illustrating an example of a third state of a foldable electronic device including a plurality of hinge structures according to an embodiment. FIG. 6 is a perspective view illustrating an example of a third state of a foldable electronic device including a plurality of hinge structures according to an embodiment.

According to an embodiment of the disclosure, referring to FIG. 5 and FIG. 6, the third state of the foldable electronic device 100 may include a state in which, in the second state, the foldable electronic device 100 is folded by the first hinge structure 140 and folded by the second hinge structure 150. For example, in the third state, the third housing 130 may be disposed to overlap the first housing 110 and the second housing 120. For example, in the third state, the first housing 110, the second housing 120, and the third housing 130 may be arranged to overlap each other. For example, in the third state, the first region and the third region of the flexible display 160 may be disposed to face the first direction, and the second region may be disposed to face the second direction.

According to an embodiment of the disclosure, in the third state, the second housing 120 may be disposed between the first housing 110 and the third housing 130. In the third state, as the foldable electronic device 100 is folded by the second hinge structure 150, the first housing 110 may be disposed or accommodated in a space formed between the second housing 120 and the third housing 130. To form the space for arranging or receiving the first housing 110, a width of the second hinge structure 150 may be wider than the width of the first hinge structure. For example, since the width of the second hinge structure 150 is wider than a width of the first hinge structure 140, a rotational radius of the second housing 120 or the third housing 130 by the second hinge structure 150 may be greater than a rotational radius of the first housing 110 or the second housing 120 by the first hinge structure 140.

According to an embodiment of the disclosure, the first housing 110 may include a sub-display 170. For example, the sub-display 170 may be disposed on a side opposite to the side on which the flexible display 160 of the first housing 110 is disposed. In the third state of the foldable electronic device 100, the sub-display 170 disposed in the first housing 110 may be disposed to face the first direction.

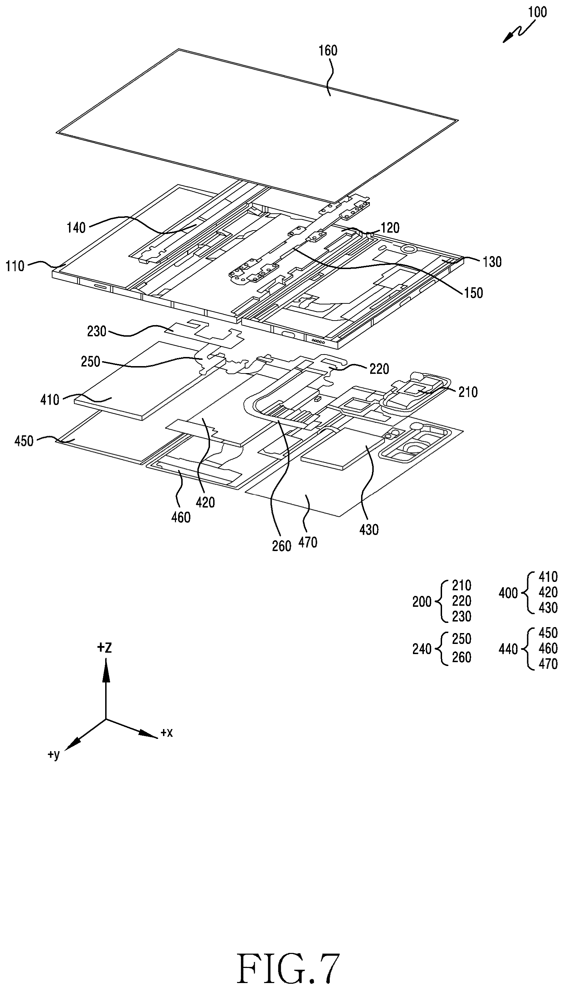

FIG. 7 is a diagram illustrating configurations of a foldable electronic device according to an embodiment.

According to an embodiment of the disclosure, the foldable electronic device 100 may include the first housing 110, the second housing 120, the third housing 130, the first hinge structure 140, the second hinge structure 150, the flexible display 160, printed circuit boards 200, flexible printed circuit boards 240, batteries 400 and covers 440.

According to an embodiment of the disclosure, the first hinge structure 140 may be disposed between the first housing 110 and the second housing 120 and the flexible display 160. The first hinge structure 140 may rotatably connect the first housing 110 and the second housing 120. As the first housing 110 or the second housing 120 is rotated by the first hinge structure 140, the first region or the second region of the flexible display 160 may be folded. The first hinge structure 140 may support at least a part of the first region and the second region of the flexible display 160.

According to an embodiment of the disclosure, the second hinge structure 150 may be disposed between the second housing 120 and the third housing 130 and the flexible display 160. The second hinge structure 150 may rotatably connect the second housing 120 and the third housing 130. As the second housing 120 or the third housing 130 is rotated by the second hinge structure 150, the second region or the third region of the flexible display 160 may be folded. The second hinge structure 150 may support at least a part of the second region and the third region of the flexible display 160.

According to an embodiment of the disclosure, the foldable electronic device 100 may include the printed circuit boards (PCBs) 200 and the flexible printed circuit boards (FPCBs) 240. The PCBs 200 and the FPCBs 240 may electrically connect a plurality of electronic components disposed in the foldable electronic device 100.

According to an embodiment of the disclosure, the PCBs 200 may include a first PCB 210, a second PCB 220, and a third PCB 230. The first PCB 210 may be disposed on the other side which is opposite to one side of the first housing 110 in which the first region of the flexible display 160 is disposed. The second PCB 220 may be disposed on the other side opposite to one side of the second housing 120 in which the second region of the flexible display 160 is disposed. The third PCB 230 may be disposed on the other side opposite to one side of the third housing 130 in which the third region of the flexible display 160 is disposed.

According to an embodiment of the disclosure, the FPCBs 240 may include a first FPCB 250 and a second FPCB 260. For example, the first FPCB 250 may electrically connect the first PCB 210 disposed on the other side of the first housing 110 and the second PCB 220 disposed on the other side of the second housing 120. The first FPCB 250 may be formed of a material which is bendable by the first hinge structure 140. For example, the second FPCB 260 may electrically connect the second PCB 220 disposed on the other side of the second housing 120 and the third PCB 230 disposed on the other side of the third housing 130. The second FPCB 260 may be formed of a material which is bendable by the second hinge structure 150.

According to an embodiment of the disclosure, the foldable electronic device 100 may include the covers 440. The covers 440 may form an exterior of the foldable electronic device 100, and protect a plurality of electronic components disposed inside the foldable electronic device 100. The covers 440 may include a first cover 450, a second cover 460, and a third cover 470. The first cover 450 may be disposed to protect the first housing 110 and the electronic components disposed on the other side of the first housing 110. The second cover 460 may be disposed to protect the second housing 120 and electronic components disposed on the other side of the second housing 120. The third cover 470 may be disposed to protect the third housing 130 and electronic components disposed on the other side of the third housing 130.

According to an embodiment of the disclosure, the foldable electronic device 100 may include the batteries 400 for supplying power to the foldable electronic device 100. The batteries 400 may include a first battery 410, a second battery 420 and a third battery 430. For example, the first battery 410 may be disposed between the first PCB 210 and the first cover 450. For example, the second battery 420 may be disposed between the second PCB 220 and the second cover 460. For example, the third battery 430 may be disposed between the third PCB 230 and the third cover 470.

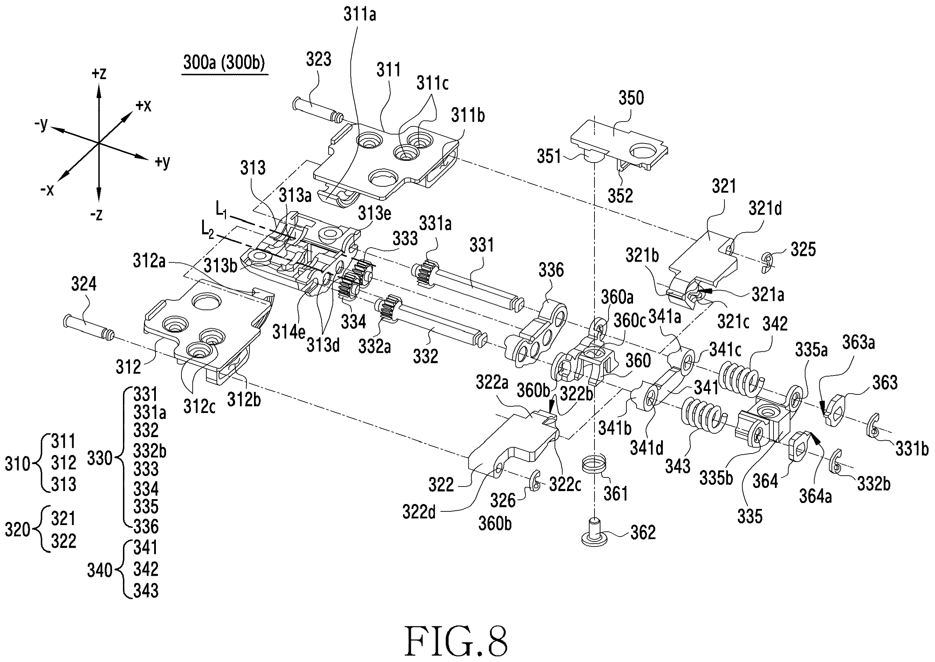

FIG. 8 is a diagram illustrating configurations of a first hinge structure according to an embodiment.

Referring to FIG. 8, a hinge structure 300a or 300b according to an embodiment may include a bracket structure 310, an arm structure 320, a rotation structure 330, a cam structure 340, a support portion 350, a stopper 360, an elastic member 361, and/or a screw 362. The hinge structure 300a or 300b of FIG. 8 may correspond to the first hinge structure 140.

According to an embodiment, the bracket structure 310 may include a first bracket 311, a second bracket 312, and a fixing bracket 313.

In an example, the fixing bracket 313 may be disposed on the hinge housing, to support the first bracket 311 and the second bracket 312. A first groove 313a and a second groove 313b may be formed on a top surface (e.g., a surface in the +z direction of FIG. 8) of the fixing bracket 313, and the first bracket 311 and the second bracket 312 may be coupled to the fixing bracket 313 through the first groove 313a and the second groove 313b. The first groove 313a and the second groove 313b may be formed, for example, in an arc shape having a specific curvature, the first bracket 311 may be coupled to the first groove 313a, and the second bracket 312 may be coupled to the second groove 313b. According to an embodiment, the first groove 313a and the second groove 313b may be formed in an arc shape having the same curvature, but the first groove 313a and the second groove 313b may be formed in an arc shape having different curvatures according to an embodiment. The first groove 313a may be formed in one region (e.g., a region in the +x direction of FIG. 8) of the fixing bracket 313 adjacent to the first bracket 311, and the second groove 313b may be formed in another region (e.g., a region in the -x direction of FIG. 8) of the fixing bracket 313 adjacent to the second bracket 312. A plurality of gear holes 313d and a plurality of shaft holes 313e may be formed on one side (e.g., a side in the +y direction of FIG. 8) of the fixing bracket 313. A first idle gear 333 and a second idle gear 334, and a first shaft 331 and a second shaft 332 may be fastened on one side of the fixing bracket 313 through the gear holes 313d and the shaft holes 313e.

In an example, the first bracket 311 may include a first rail portion 311a, a first slide hole 311b, and a plurality of coupling holes 311c. The first rail portion 311a may be formed by protruding from one region of the first bracket 311. The first rail portion 311a may be formed in a shape corresponding to the first groove 313a of the fixing bracket 313, and the first bracket 311 may be coupled to the first groove 313a of the fixing bracket 313 through the first rail portion 311a. The first slide hole 311b may be formed in one region of the first bracket 311 adjacent to the first arm portion 321, and the first bracket 311 and the first arm portion 321 may be connected through a first fixing member 323 passing through the first slide hole 311b and the first arm portion 321. The first fixing portion 323 may slide inside the first slide hole 311b as the foldable electronic device 100 rotates from the folded state to the unfolded state, or rotates from the unfolded state to the folded state. The plurality of coupling holes 311c may be formed on one surface (e.g., a surface in the +z direction of FIG. 8) facing the first housing 110 of the first bracket 311, and the first bracket 311 may be coupled to one region of the first housing 110 through the plurality of coupling holes 311c. The first bracket 311 coupled to the first housing 110 may slide along the first groove 313a of the fixing bracket 313 in response to the rotation movement of the first housing 110, and rotate about a virtual first rotation axis L1.

In an example, the second bracket 312 may include a second rail portion 312a, a second slide hole 312b, and a plurality of coupling holes 312c. The second rail portion 312a may be formed by protruding from one region of the second bracket 312. The second rail portion 312a may be formed in a shape corresponding to the second groove 313b of the fixing bracket 313, and the second bracket 312 may be coupled to the second groove 313b of the fixing bracket 313 through the second rail portion 312a. The second slide hole 312b may be formed in one region of the second bracket 312 adjacent to the second arm portion 322, and the second bracket 312 and the second arm portion 322 may be connected by a second fixing member 324 which passes through the second slide hole 312b and the second arm portion 322. The second fixing portion 324 may slide inside the second slide hole 312b as the foldable electronic device 100 rotates from the folded state to the unfolded state, or from the unfolded state to the folded state. The plurality of coupling holes 312c may be formed on one surface (e.g., a surface in the +z direction of FIG. 8) facing the second housing 120 of the second bracket 312, and the second bracket 312 may be coupled to one region of the second housing 120 through the plurality of coupling holes 312c. The second bracket 312 coupled to the second housing 120 may slide along the second groove 313b of the fixing bracket 313 in response to the rotation movement of the second housing 120, and rotate about a virtual second rotation axis L2. In this case, the virtual first rotation axis L1 and the virtual second rotation axis L2 are parallel, and may be formed in a plane parallel to the flexible display 160 if the foldable electronic device 100 is in the folded state.

According to an embodiment, the arm structure 320 may include a first arm portion 321 and a second arm portion 322.

In an example, the first arm portion 321 may include a first cam portion 321a, a first support rib 321b, a first insertion hole 321c, and a first through hole 321d. The first insertion hole 321c may be formed in one region of a bottom (e.g., the -z direction of FIG. 8) of the first arm portion 321, and the first shaft 331 may be inserted into the first insertion hole 321c, to connect the first arm portion 321 and the first shaft 331, to be described. As the first cam portion 321 and the first shaft 331 are connected, the first arm portion 321 may rotate about a rotation axis of the first shaft 331. The first cam portion 321a may be formed in a region adjacent to the first insertion hole 321c, and may be formed by protruding in a direction of the cam plate 341 (e.g., the +y direction of FIG. 8). The first cam portion 321a may be formed in a concavo-convex shape in which a plurality of peaks and valleys is repeated, and the first cam portion 321a may be disposed to engage with a third cam portion 341a formed in the cam plate 341, to secure the first arm portion 321 to the cam plate 341. In addition, since the first cam portion 321a is disposed to engage with the third cam portion 341a formed in the cam plate 341 to secure the first arm portion 321 at a designated rotation angle and/or in a designated rotation angle range, the movement of the foldable electronic device 100 may be fixed at the designated rotation angle and/or in the designated rotation angle range (e.g., a range from 30° to 150°). The first support rib 321b may be formed by protruding from one region of the first arm portion 321, and may move the support portion 350 upward (e.g., in the +z direction of FIG. 8) as the foldable electronic device 100 rotates from the folded state to the unfolded state. The first through hole 321d may be formed in one region (e.g., a region in the +x direction of FIG. 8) opposite to the region in which the first insertion hole 321c of the first arm portion 321 is formed. The first fixing portion 323 passing through the first slide hole 311b may pass through the first through hole 321d, thus connecting the first bracket 311 and the first arm portion 321. According to an embodiment, a first washer ring 325 may be fastened at one end of the first fixing portion 323 passing through the first through hole 321d, to thus secure the first fixing portion 323 to the first arm part 321. Although not depicted, according to an embodiment, the first washer ring 325 may be fastened at the other end of the first fixing portion 323, to secure the first fixing portion 323 to the first bracket 311. In addition, according to an embodiment, a protrusion may be formed on one region of the first bracket 311 (or the first arm portion 321), a coupling groove corresponding to the protrusion may be formed in one region of the first arm portion 321 (or the first bracket 311), and accordingly the first bracket 311 and the first arm portion 321 may be connected through the protrusion and the coupling groove. The first arm portion 321 connected to the first bracket 311 may rotate about a different rotation axis from the first bracket 311 while sliding based on the first bracket 311, as the foldable electronic device 100 rotates from the folded state to the unfolded state, or from the unfolded state to the folded state.

In an example, the second arm portion 322 may include a second cam portion 322a, a second support rib 322b, a second insertion hole 322c, and a second through hole 322d. The second insertion hole 322c may be formed in one region of a bottom (e.g., the -z direction of FIG. 8) of the second arm portion 322, the second shaft 332 may be inserted into the second insertion hole 322c, and the second arm portion 322 and the second shaft 332 may be connected. As the second arm portion 322 and the second shaft 332 are connected, the second arm portion 322 may rotate about a rotation axis of the second shaft 332. The second cam portion 322a may be formed in a region adjacent to the second insertion hole 322c, and may be formed by protruding in a direction of the cam plate 341 (e.g., the +y direction of FIG. 8). The second cam portion 322a may be formed in a concavo-convex shape in which a plurality of peaks and valleys is repeated similar to the first cam portion 321a, the second cam portion 322a may be disposed to engage with the fourth cam portion 341b formed on the cam plate 341, and accordingly the second arm portion 322 may be secured to the cam plate 341. In addition, the second cam portion 322a, which is arranged to engage with the fourth cam portion 341b formed on the cam plate 341, may secure the second arm portion 322 at a designated rotation angle and/or in a designated rotation angle range (e.g., a rotation angle range from 30° to 150°), and thus the movement (or the posture) of the foldable electronic device 100 may be fixed at the designated rotation angle and/or in the designated rotation angle range. The second support rib 322b may be formed by protruding from one region of the second arm portion 322, and may move the support portion 350 upward (e.g., in the +z direction of FIG. 8) as the foldable electronic device 100 rotates from the folded state to the unfolded state. The second through hole 322d may be formed in an opposite region of the second insertion hole 322c. The second fixing portion 324 passing through the second slide hole 312b may pass through the second through hole 322d, and thus connect the second bracket 312 and the second arm portion 322. A second washer ring 326 may be fastened to one end of the second fixing portion 324 passing through the second through hole 322d, and the second fixing portion 324 may be secured to the second arm portion 322. Although not depicted, according to an embodiment, the second washer ring 326 may be fastened at the other end of the second fixing portion 324, and the second fixing portion 324 may be secured to the second bracket 312. In addition, according to an embodiment, a protrusion may be formed on one region of the second bracket 312 (or the second arm portion 322), a coupling groove corresponding to the protrusion may be formed on one region of the second arm portion 322 (or the second bracket 312), and accordingly the second bracket 312 and the second arm portion 322 may be connected through the protrusion and the coupling groove. The second arm portion 322 connected with the second bracket 312 may rotate about a different rotation axis from the second bracket 312, if the foldable electronic device 100 rotates from the folded state to the unfolded state, or from the unfolded state to the folded state.

According to an embodiment, the rotation structure 330 may include the first shaft 331 coupled with the first gear 331a, the second shaft 332 coupled with the second gear 332a, the first idle gear 333, the second idle gear 334, a shaft bracket 335, and the gear cover 336.

In an example, one end of the first shaft 331 may be fastened in a shaft hole 313e of the fixing bracket 313, and the other end of the first shaft 331 may pass through a first shaft insertion hole 335a of the shaft bracket 335. The first arm portion 321 may be connected to one region of the first shaft 331, and the first arm portion 321 may be rotatably move based on the first shaft 331 as the rotation axis.

In an example, the second shaft 332 may be disposed in a position adjacent to the first shaft 331, one end of the second shaft 332 may be fastened to the shaft hole 313e of the fixing bracket 313, and the other end of the second shaft 332 may pass through a second shaft insertion hole 335b of the shaft bracket 335. The second arm portion 322 may be connected to one region of the second shaft 332, and the second arm portion 322 may rotatably move based on the second shaft 332 as the rotation axis.

In an example, the first idle gear 333 and the second idle gear 334 may be disposed between the first gear 331a coupled to the first shaft 331 and the second gear 332a coupled to the second shaft 332. The first idle gear 333 and the second idle gear 334 may be fastened in the plurality of gear holes 313d of the fixing bracket 313 respectively, and the first idle gear 333 and the second idle gear 334 may rotate in engagement, thus rotating the first arm portion 321 and the second arm portion 322 at the same rotation angle. According to an embodiment, the first idle gear 333 may rotate in engagement with the first gear 331a and the second idle gear 334, and the second idle gear 334 may rotate in engagement with the first idle gear 333 and the second gear 332a. As the first gear 331a, the second gear 332a, the first idle gear 333, and the second idle gear 334 rotate in engagement with each other at the same angle, the first shaft 331 and the second shaft 332 may rotate in opposite directions by the same rotation angle. In an example, if the first shaft 331 rotates by 30° counterclockwise (e.g., a direction from the +x axis to the +z axis of FIG. 8), the second shaft 332 may rotate by 30° clockwise (e.g., a direction from the -x axis to the +z axis of FIG. 8). As the first shaft 331 and the second shaft 332 rotate by the same rotation angle, the first arm portion 321 and the second arm portion 322 connected to the first shaft 331 and the second shaft 332 may rotatably move by the same rotation angle.

In an example, the shaft bracket 335 may include the first shaft insertion hole 335a into which the first shaft 331 is inserted and the second shaft hole 335b into which the second shaft 332 is inserted. The shaft bracket 335 may be disposed within the hinge housing, to support the first shaft 331 and the second shaft 332 inserted into the shaft bracket 335 through the first shaft insertion hole 335a and the second shaft hole 335b.

In an example, the gear cover 336 may be inserted into the first shaft 331 and the second shaft 332, to protect the first gear 331a, the second gear 332a, the first idle gear 333, and the second idle gear 334. The gear cover 336 may prevent the first gear 331a, the second gear 332a, the first idle gear 333, and the second idle gear 334 from being damaged by external force, and may prevent a foreign material from entering into the first gear 331a, the second gear 332a, the first idle gear 333, and the second idle gear 334.

According to an embodiment, the cam structure 340 may include the cam plate 341, a first spring 342, and a second spring 343.

In an example, a third shaft insertion hole 341c into which the first shaft 331 is inserted may be formed in one region of the cam plate 341, and a fourth shaft insertion hole 341d into which the second shaft 332 is inserted may be formed in another region of the cam plate 341. The cam plate 341 may be connected to the first shaft 331 and the second shaft 332 through the third shaft insertion hole 341c and the fourth shaft insertion hole 341d. The cam plate 341 may include the third cam portion 341a formed by protruding in the direction of the first cam portion 321a of the first arm portion 321 and the fourth cam portion 341b formed by protruding in the direction of the second cam portion 322a of the second arm portion 322. The third cam portion 341a and the fourth cam portion 341b may be formed in a concavo-convex structure with at least one peak and valley repeated. The third cam portion 341a may be disposed to engage with the first cam portion 321a, to secure the movement of the first arm portion 321 at a designated rotation angle, if the foldable electronic device 100 is in the folded state or the unfolded state. Similarly, the fourth cam portion 341b may be disposed to engage with the second cam portion 322a, to secure the movement of the second arm portion 322 at a designated rotation angle, if the foldable electronic device 100 is in the folded state or the unfolded state.

According to an embodiment, a pitch between the peak and the peak or between the valley and the valley of the third cam portion 341a may be formed to be greater than a pitch between the peak and the peak or between the valley and the valley of the first cam portion 321a, and the first arm portion 321 may rotate within a designated rotation range even with the third cam portion 341a and the first cam portion 321a engaged. However, the shape of the third cam portion 341a is not limited to the above-described embodiment, and according to an embodiment, the pitch between the peak and the peak or between the valley and the valley of the third cam portion 341a may be formed to be the same as the pitch between the peak and the peak or between the valley and the valley of the first cam portion 321a, or the pitch between the peak and the peak or between the valley and the valley of the first cam portion 321a may be formed greater than the pitch between the peak and the peak or between the valley and the valley of the third cam portion 341a.

Likewise, the pitch between the peak and the peak or between the valley and the valley of the fourth cam portion 341b may be formed to be greater than the pitch between the peak and the peak or between the valley and the valley of the second cam portion 322a, and the second arm portion 322 may rotate within a designated rotation range even with the fourth cam portion 341b and the second cam portion 322a engaged. However, the shape of the fourth cam part 341b is not limited to the above-described embodiment, and according to an embodiment, the pitch between the peak and the peak or between the valley and the valley of the fourth cam portion 341b may be formed to be the same as the pitch between the peak and the peak or between the valley and the valley of the second cam portion 322a, or the pitch between the peak and the peak or between the valley and the valley of the second cam portion 322a may be formed greater than the pitch between the peak and the peak or between the valley and the valley of the fourth cam portion 341b.

According to an embodiment, the first spring 342 may be disposed to surround one region of the first shaft 331, and the second spring 343 may be disposed to surround one region of the second shaft 332. The first spring 342 and the second spring 343 may be disposed in a compressed state between the cam plate 341 and the shaft bracket 335, to closely contact the cam plate 341 toward the first arm portion 321 and the second arm portion 322. As the cam plate 341 is closely contacted to the first arm portion 321 and second arm portion 322, the engagement of the third cam portion 341a and the first cam portion 321a, and the engagement of the fourth cam portion 341b and the second cam portion 322a may be maintained.

According to an embodiment, if the peak of the third cam portion 341a and the peak of the first cam portion 321a or the peak of the fourth cam portion 341b and the peak of the second cam portion 322a closely contact due to the rotation of the first arm portion 321 and the second arm portion 322, the cam plate 341 may move in one direction (e.g., the +y direction of FIG. 8) of the first shaft 331 and the second shaft 332 to temporarily separate the first cam portion 321a and the third cam portion 341a and/or the second cam portion 322a and the fourth cam portion 341b. As the cam plate 341 moves in one direction, the first spring 342 and the second spring 343 may be compressed. If the first arm portion 321 and the second arm portion 322 further rotate by a specific angle, the cam plate 341 may move again toward the first cam portion 321a and/or the second cam portion 322a by elastic restoring force of the first spring 342 and the second spring 343. As a result, the first cam portion 321a and the third cam portion 341a, and the second cam portion 322a and the fourth cam portion 341b may be engaged again, thus maintaining the engagement of the first cam portion 321a and the third cam portion 341a, and the second cam portion 322a and the fourth cam portion 341b.

According to an embodiment, a flat linear region may be formed in at least one region (e.g., a summit region) of the peak of the first cam portion 321a, the peak of the second cam portion 322a, the peak of the third cam portion 341a, and/or the peak of the fourth cam portion 341b. Similarly, a flat linear region may be also formed in at least one region of the valley of the first cam portion 321a, the valley of the second cam portion 322a, the valley of the third cam portion 341a, and/or the valley of the fourth cam portion 341b. The flat linear region formed in one region of the peak and the flat linear region formed in one region of the valley may be formed to be substantially identical or similar. As the flat linear regions are formed on the peak and the valley of the first cam portion 321a, the second cam portion 322a, the third cam portion 341a, and the fourth cam portion 341b, the movement of the first arm portion 321 and/or the second arm portion 322 may be fixed at a designated rotation angle (e.g., 30° or 60°) and/or in a designated rotation angle range (e.g., a rotation angle range of 30° through 150°). As the movement of the first arm portion 321 and/or the second arm portion 322 is fixed at the designated rotation angle, the movement of the first housing 110, and the second housing 120 of the electronic device may be fixed at the designated rotation angle.

According to an embodiment, the support portion 350 may be disposed in an empty space between the first arm portion 321 and the second arm portion 322, and the first shaft 331 and the second shaft 332. The support portion 350 may support one region of the flexible display 160 not supported by the first arm portion 321 and/or the second arm portion 322, if the foldable electronic device 100 is in the unfolded state. The support portion 350 described above may be moved upward (e.g., in the +z direction of FIG. 8) by the first support rib 321b formed in one region of the first arm portion 321, and the second support rib 322b formed in one region of the second arm portion 322. In an example, the first support rib 321b and the second support rib 322b may contact one region of the support portion 350 as the foldable electronic device 100 rotates from the folded state to the unfolded state, and the support portion 350 may be moved upward (e.g., from the -z direction to the +z direction of FIG. 8) by the first support rib 321b and the second support rib 322b as the first arm portion 321 and the second arm portion 322 rotate.

According to an embodiment, the stopper 360 may be positioned at a lower end (e.g., the -z direction of FIG. 8) of the support portion 350. A fifth shaft insertion hole 360a may be formed in one region of the stopper 360, and a sixth shaft insertion hole 360b may be formed in one region opposite to the fifth shaft insertion hole 360a. The first shaft 331 and the second shaft 332 may be inserted through the fifth shaft insertion hole 360a and the sixth shaft insertion hole 360b, and the first shaft 331, the second shaft 332, and the stopper 360 may be connected through the above-described structure. A through hole 360c may be formed in one region of an upper end (e.g., the +z direction of FIG. 8) of the stopper 360, and a protrusion region 351 of the support portion 350 may be inserted in a lower direction of the stopper 360 by passing through the through hole 360c.

The screw 362 according to an embodiment may be coupled with the protrusion region 351 inserted below the stopper 360, and the elastic member 361 may be disposed between the screw 362 and the stopper 360. The elastic member 361 may be a spring by way of example, but is not limited thereto. The elastic member 361 may contact one region of the stopper 360, and the elastic member 361 may be compressed as the support portion 350 moves upward while the foldable electronic device 100 rotates from the folded state to the unfolded state. By contrast, while the foldable electronic device 100 rotates from the unfolded state to the folded state, the support portion 350 may be moved downward (e.g., the -z direction of FIG. 8) by the elastic restoring force of the elastic member 361.

The hinge structure 300a or 300b according to an embodiment may further include a first auxiliary member 363, and a second auxiliary member 364. The first auxiliary member 363 may be fastened to one end of the first shaft 331 adjacent to the shaft bracket 335, and the second auxiliary member 364 may be fastened to the other end of the second shaft 332 adjacent to the shaft bracket 335. According to an embodiment, a third washer ring 331b may be fastened at one end of the first shaft 331, to secure the first shaft 331 to the first auxiliary member 363. Similarly, a fourth washer ring 332b may be fastened at one end of the second shaft 332, to secure the second shaft 332 to the second auxiliary member 364. According to an embodiment, a screw nut may be fastened at one end of the first shaft 331, to secure the first shaft 331 to the first auxiliary member 363, or a screw nut may be also fastened at one end of the second shaft 332, to secure the second shaft 332 to the second auxiliary member 364.

The first auxiliary member 363 may include a third support rib 363a, and the third support rib 363a may be formed by protruding from one region of the first auxiliary member 363. Similarly, the second auxiliary member 364 may include a fourth support rib 364a, and the fourth support rib 364a may be formed by protruding from one region of the second auxiliary member 364. The first support member 363 may rotate at the same rotation angle as the first arm portion 321 through the first shaft 331, and the second support member 364 may rotate at the same rotation angle as the second arm portion 322 through the second shaft 332. The third support rib 363a and the fourth support rib 364a may move the support portion 350 upward together with the first support rib 321b of the first arm portion 321 and the second support rib 322b of the second arm portion 322, if the electronic device rotates from the folded state to the unfolded state.

According to an embodiment, the configurations of the second hinge structure 150 may be different from the configurations of the first hinge structure 140 of FIG. 8. However, they are not limited thereto, and the configurations of the first hinge structure 140 and the second hinge structure 150 may be the same. For example, the second hinge structure 150 may be implemented by the configurations of the hinge structures 300a or 300b corresponding to the first hinge structure 140 described above in FIG. 8. Alternatively, the first hinge structure 140 mentioned above may be implemented by the configurations of the second hinge structure 150. In this way, a foldable electronic device with an optimized interlocking structure between parts within a defined space is achieved, ensuring that the electronic device developed cannot be over-rotated beyond the third state, and preventing deviation from the hinge module.

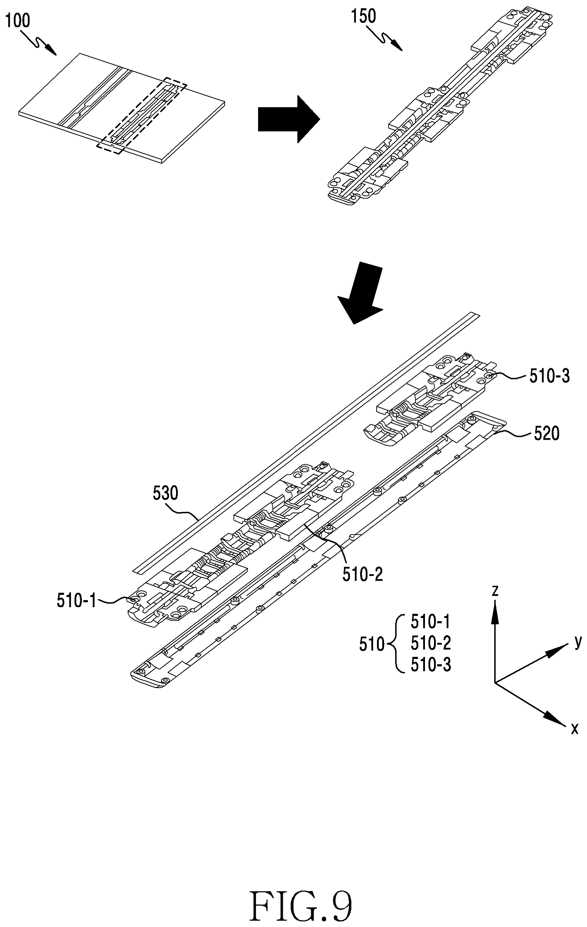

FIG. 9 is a diagram illustrating configurations of a second hinge structure according to an embodiment.

According to an embodiment of the disclosure, the foldable electronic device 100 may include the second hinge structure 150 disposed between the second housing 120 and the third housing 130. The second hinge structure 150 may rotatably connect the second housing 120 and the third housing 130. For example, the second housing 120 and/or the third housing 130 may be rotated by the second hinge structure 150. As the second housing 120 and/or the third housing 130 are rotated, the foldable electronic device 100 may be folded from the second state to the third state or unfolded from the third state to the second state.

According to an embodiment of the disclosure, the second hinge structure 150 may include a hinge module 510, a hinge housing 520, and a support plate 530. The hinge module 510 may include a first hinge module 510-1, a second hinge module 510-2 and a third hinge module 510-3. In the following description, the hinge module 510 may be used as a term indicating at least one of the first hinge module 510-1, the second hinge module 510-2, or the third hinge module 510-3.

According to an embodiment of the disclosure, the hinge module 510 may be disposed on the hinge housing 520. For example, the hinge module 510 may be at least in part seated in the hinge housing 520. For example, the hinge housing 520 may support the hinge module 510. The first hinge module 510-1, the second hinge module 510-2, and the third hinge module 510-3 may be disposed on the hinge housing 520. For example, the first hinge module 510-1 and the second hinge module 510-2 may be disposed adjacent to each other on the hinge housing 520. For example, the first hinge module 510-1 and the third hinge module 510-3 may be disposed symmetrically on the hinge housing 520. For example, at least one electronic component may be disposed in a space between the second hinge module 510-2 and the third hinge module 510-3. The arrangement of the hinge module 510 is not limited thereto, and may be modified as appropriate such that the second hinge structure 150 rotatably connects the second housing 120 and the third housing 130.

According to an embodiment of the disclosure, the support plate 530 may be disposed on the hinge module 510. For example, at least a part of the support plate 530 may be seated on the hinge module 510. For example, by mounting at least a part of the support plate 530 on the hinge module 510, the hinge module 510 may support the support plate 530. The support plate 530 may support the flexible display 160. For example, in the first state and/or the second state of the foldable electronic device 100, the support plate 530 may partially support the flexible display 160.

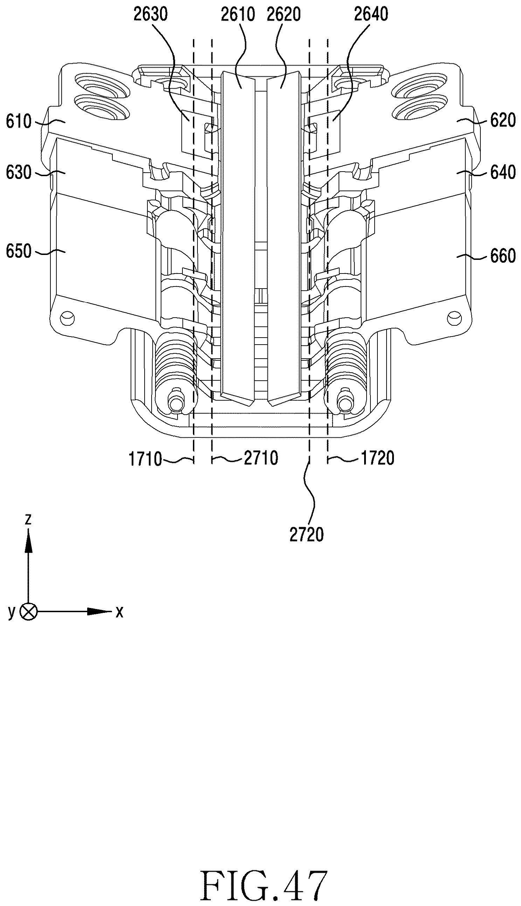

The arrangement of the flexible display 160 and the support plate 530 while the foldable electronic device 100 is folded or unfolded shall be described in detail in FIG. 47 through FIG. 52. In this way, a foldable electronic device with an optimized interlocking structure between parts within a defined space is achieved, ensuring that the electronic device developed cannot be over-rotated beyond the third state and preventing deviation from the hinge module.

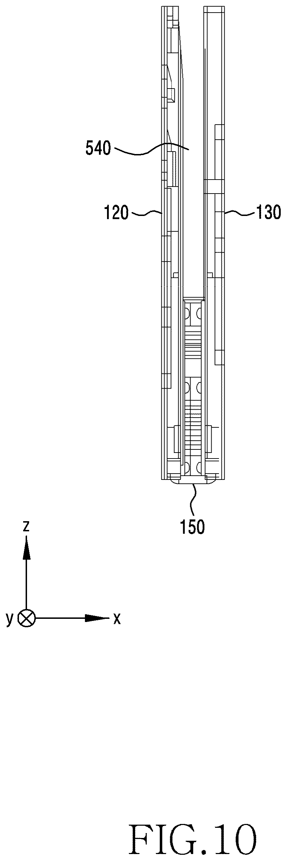

FIG. 10 is a diagram illustrating an accommodation space in which a first housing is disposed with a foldable electronic device folded by a second hinge structure according to an embodiment.

According to an embodiment of the disclosure, the second housing 120 and/or the third housing 130 may be rotated by the second hinge structure 150. For example, as the state of the foldable electronic device 100 changes from the second state to the third state, the second housing 120 and/or the third housing 130 may be rotated. For example, in the third state of the foldable electronic device 100, the second housing 120 and the third housing 130 may be positioned vertically, with respect to the second hinge structure 150.

According to an embodiment of the disclosure, in the third state of the foldable electronic device 100, an accommodation space 540 may be formed by the second housing 120, the second hinge structure 150, and the third housing 130. For example, the first housing 110 may be disposed within the accommodation space 540. For example, as the state of the foldable electronic device 100 changes from the second state to the third state, the first housing 110 may be rotated and disposed inside the accommodation space 540.

According to an embodiment of the disclosure, the width of the second hinge structure 150 may be formed to arrange the first housing 110 within the accommodation space 540. For example, to form the accommodation space 540 in which the first housing 110 is disposed, the width of the second hinge structure 150 may be greater than the width of the first hinge structure 140. For example, when the foldable electronic device 100 is viewed in a direction perpendicular to the second hinge structure 150, the width of the second hinge structure 150 may be greater than the width of the first hinge structure 140. In this way, a foldable electronic device with an optimized interlocking structure between parts within a defined space is achieved, ensuring that the electronic device developed cannot be over-rotated beyond the third state and preventing deviation from the hinge module.

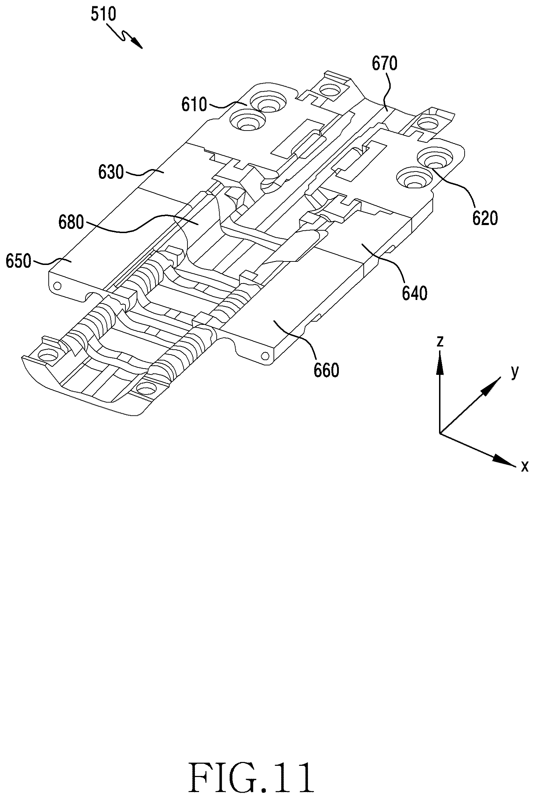

FIG. 11 is a perspective view of a hinge module according to an embodiment.

According to an embodiment of the disclosure, the hinge module 510 may include a first rotation arm 610, a second rotation arm 620, a first sink arm 630, a second sink arm 640, a third sink arm 650, a fourth sink arm 660, a rotation guide bracket 670, and a sliding member 680. The configuration of the hinge module 510 is not limited thereto, some configurations may be omitted, and other configurations may be further included.

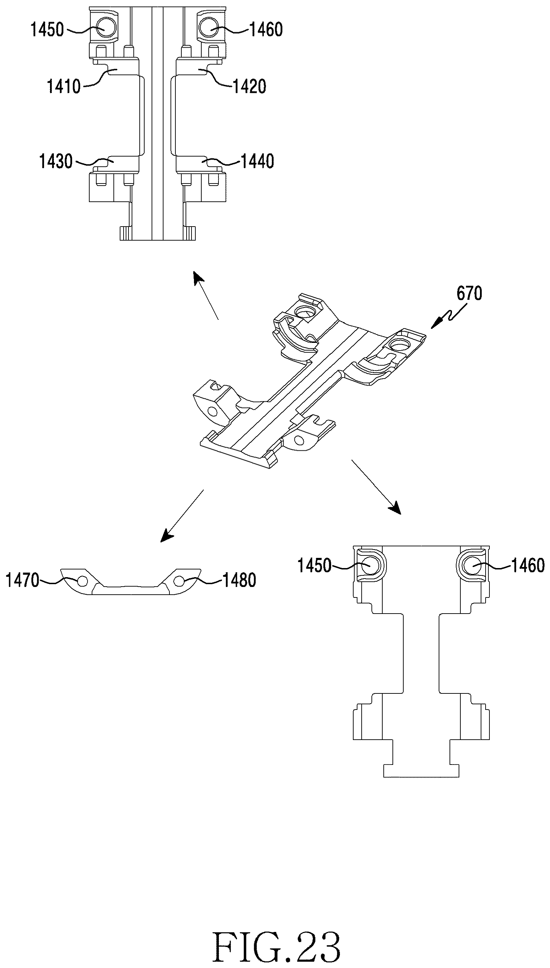

According to an embodiment of the disclosure, the hinge module 510 may include a rotation guide bracket 670 disposed on the hinge housing 520. For example, the rotation guide bracket 670, which is seated on the hinge housing 520, may support the first rotation arm 610 and the second rotation arm 620. For example, the rotation guide bracket 670, which is disposed on the hinge housing 520, may guide rotations of the first rotation arm 610 and the second rotation arm 620. The shape of the rotation guide bracket 670 shall be described in FIG. 23.

According to an embodiment of the disclosure, the first rotation arm 610 and the second rotation arm 620 may be disposed on the rotation guide bracket 670. For example, at least a part of the first rotation arm 610 may be disposed on one side of the rotation guide bracket 670. For example, at least a part of the second rotation arm 620 may be disposed on the other side of the rotation guide bracket 670.

According to an embodiment of the disclosure, the first rotation arm 610 and the second rotation arm 620 may be seated on the rotation guide bracket 670. For example, at least a part of the first rotation arm 610 may be guided in rotation while seating on one side of the rotation guide bracket 670. For example, at least a part of the second rotation arm 620 may be guided in rotation while seating on the other side of the rotation guide bracket 670.

According to an embodiment of the disclosure, the first rotation arm 610 and the second rotation arm 620 may be disposed to overlap with at least a part of the rotation guide bracket 670 to be guided in rotation by the rotation guide bracket 670. For example, at least a part of the first rotation arm 610 may be disposed to overlap with one side of the rotation guide bracket 670. For example, at least a part of the second rotation arm 620 may be disposed to overlap with the other side of the rotation guide bracket 670.

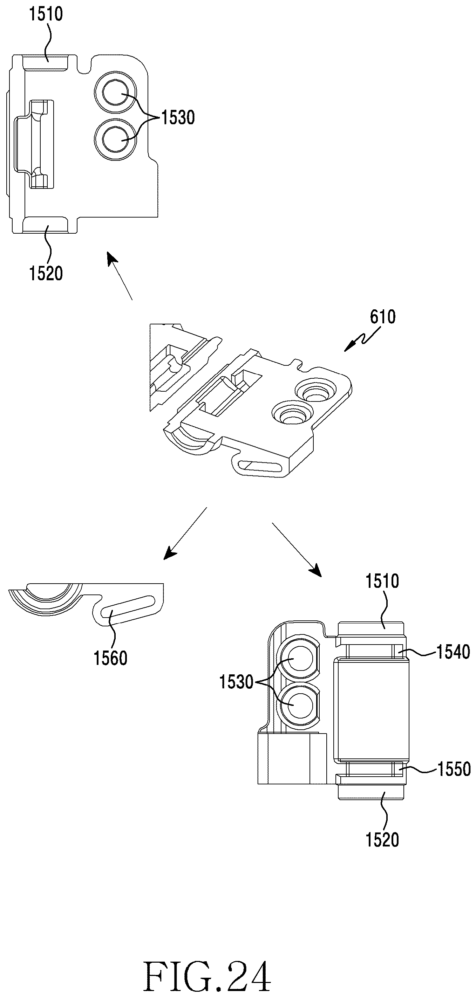

The shape of the first rotation arm 610 and the second rotation arm 620 and the arrangement of the first rotation arm 610, the second rotation arm and the rotation guide bracket 670 will be described in detail in FIG. 23 and FIG. 24.

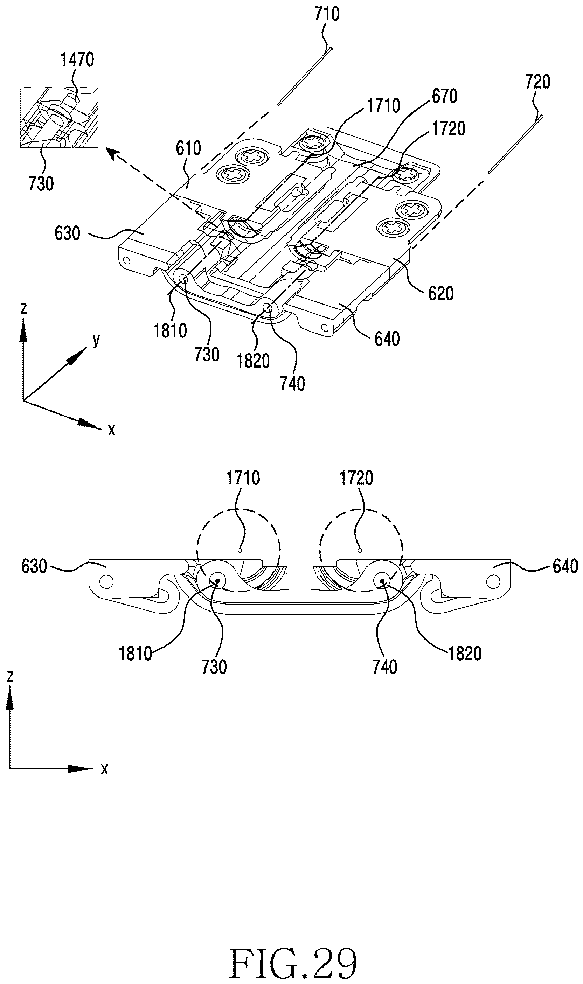

According to an embodiment of the disclosure, the first sink arm 630 may be connected to the first rotation arm 610. For example, as the first rotation arm 610 rotates, the first sink arm 630 connected to the first rotation arm 610 may rotate with the first rotation arm 610. The second sink arm 640 may be connected to the second rotation arm 620. For example, as the second rotation arm 620 rotates, the second sink arm 640 connected to the second rotation arm 620 may rotate with the second rotation arm 620. The connection structure of the first rotation arm 610 and the first sink arm 630 and the connection structure of the second rotation arm 620 and the second sink arm 640 shall be described in FIG. 29 through FIG. 32.

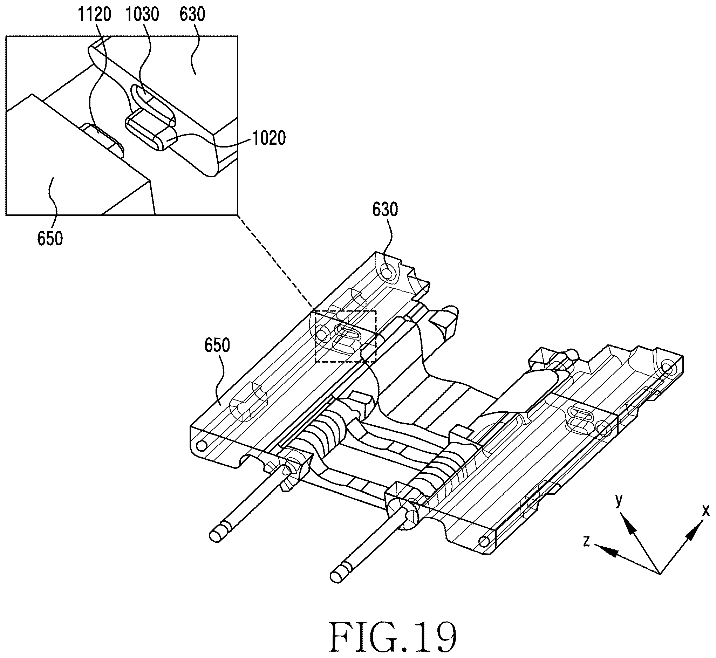

According to an embodiment of the disclosure, the third sink arm 650 may be connected to the first sink arm 630. For example, the first sink arm 630 and the third sink arm 650 may be connected to rotate together. The fourth sink arm 660 may be connected to the second sink arm 640. For example, the second sink arm 640 and the fourth sink arm 660 may be connected to rotate together. The first sink arm 630 and the third sink arm 650 may be formed as separate members, or may be integrally formed. The second sink arm 640 and the fourth sink arm 660 may be formed as separate members, or may be integrally formed. The connection between the first sink arm 630 and the third sink arm 650 shall be described in FIG. 19.

According to an embodiment of the disclosure, the foldable electronic device 100 may include a sliding member 680 formed to guide the rotations of the first sink arm 630, the second sink arm 640, the third sink arm 650, and the fourth sink arm 660. One side of the sliding member 680 may be disposed between the first sink arm 630 and the third sink arm 650. For example, one side of the sliding member 680 may be disposed between at least a part of the first sink arm 630 and at least a part of the third sink arm 650 to contact at least a part of the first sink arm 630 and at least a part of the third sink arm 650. The other side of the sliding member 680 may be disposed between the third sink arm 650 and the fourth sink arm 660. For example, the other side of the sliding member 680 may be disposed between at least a part of the third sink arm 650 and at least a part of the fourth sink arm 660 to contact at least a part of the third sink arm 650 and at least a part of the fourth sink arm 660.

According to an embodiment of the disclosure, a connection portion connecting one side and the other side of the sliding member 680 may be disposed at a position adjacent to the rotation guide bracket 670. For example, the connection portion of the sliding member 680 may be disposed between the first sink arm 630 and the third sink arm 650 being coupled and the second sink arm 640 and the fourth sink arm 660 being coupled.

According to an embodiment of the disclosure, one side of the sliding member 680 may be formed in a helical shape to guide the rotation of the first sink arm 630 and the third sink arm 650, and the other side of the sliding member 680 may be formed in a helical shape to guide the rotation of the third sink arm 650 and the fourth sink arm 660. The sliding member 680 may move as the first sink arm 630, the second sink arm 640, the third sink arm 650, and/or the fourth sink arm 660 are rotated. For example, as the first sink arm 630 and the third sink arm 650 are rotated, one side of the sliding member 680 may move between at least a part of the first sink arm 630 and at least a part of the third sink arm 650. For example, as the second sink arm 640 and the fourth sink arm 660 are rotated, the other side of the sliding member 680 may move between at least a part of the second sink arm 640 and at least a part of the fourth sink arm 660.

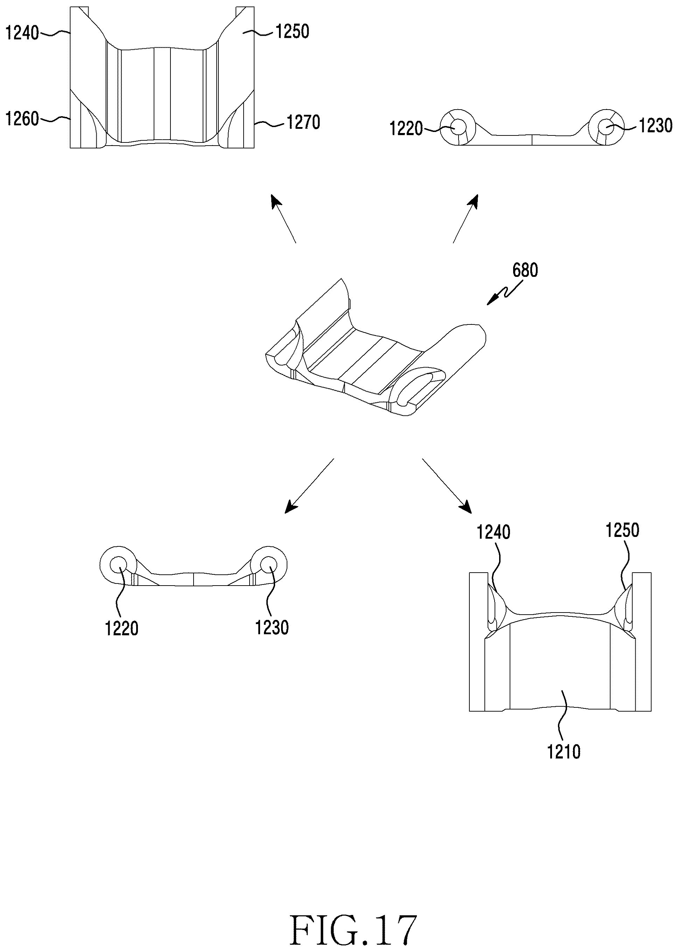

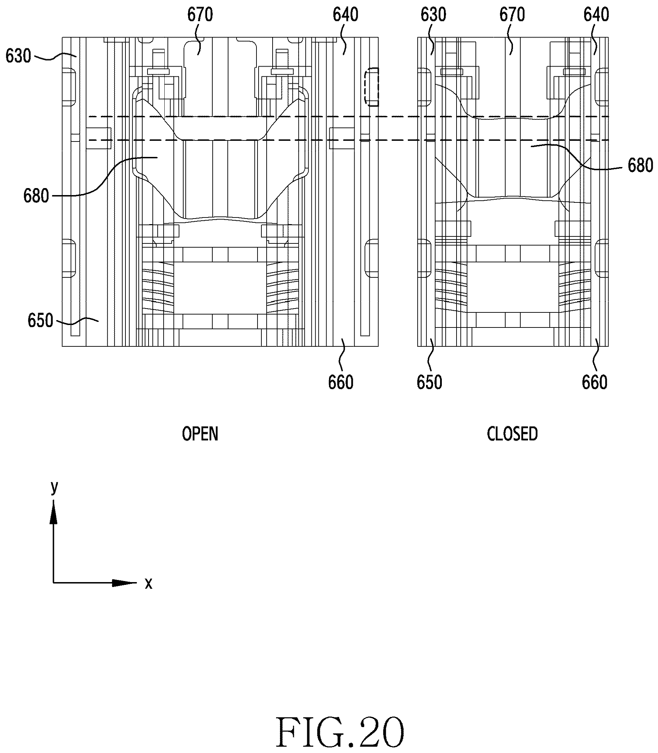

The shape and the movement of the sliding member 680 shall be described in FIG. 17 and FIG. 20. In this way, a foldable electronic device with an optimized interlocking structure between parts within a defined space is achieved, ensuring that the electronic device developed cannot be over-rotated beyond the third state and preventing deviation from the hinge module.

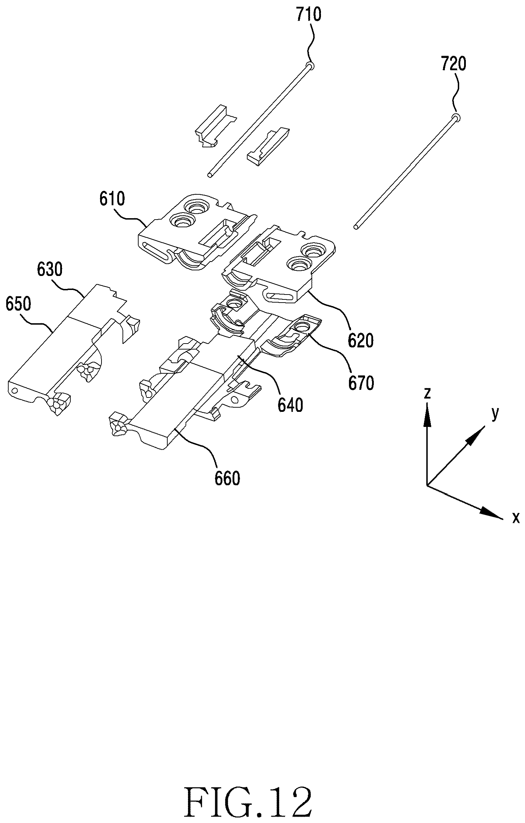

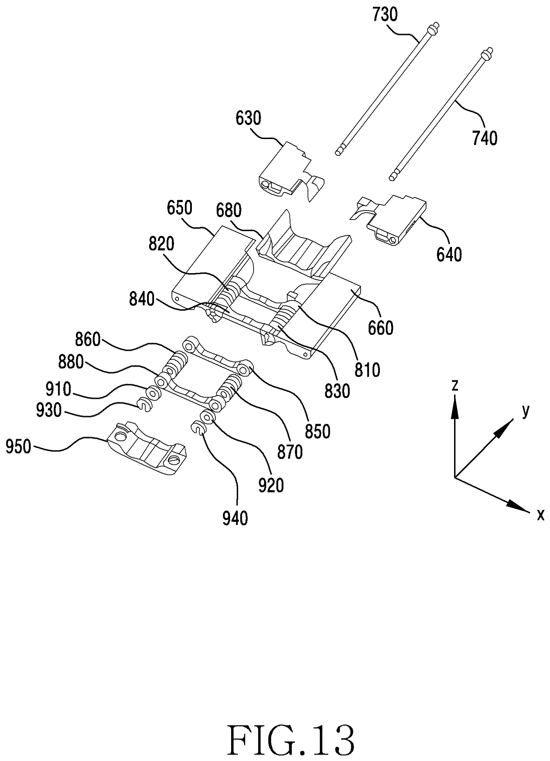

FIG. 12 and FIG. 13 are exploded perspective views of configurations of a hinge module according to an embodiment.

Referring to FIG. 12, according to an embodiment, the foldable electronic device 100 may include a first interlocking pin 710 for connecting the first rotation arm 610, the first sink arm 630 and the third sink arm 650. For example, the first interlocking pin 710 may be disposed to pass through the first rotation arm 610, the first sink arm 630 and the third sink arm 650. Since the first interlocking pin 710 is disposed by passing through the first rotation arm 610, the first sink arm 630 and the third sink arm 650, the first rotation arm 610, the first sink arm 630 and the third sink arm 650 may rotate together.

According to an embodiment of the disclosure, the foldable electronic device 100 may include a second interlocking pin 720 for connecting the second rotation arm 620, the second sink arm 640 and the fourth sink arm 660. For example, the second interlocking pin 720 may be disposed to pass through the second rotation arm 620, the second sink arm 640 and the fourth sink arm 660. Since the second interlocking pin 720 is disposed by passing through the second rotation arm 620, the second sink arm 640 and the fourth sink arm 660, the second rotation arm 620, the second sink arm 640 and the fourth sink arm 660 may rotate together.

The interlocking structure of the first rotation arm 610, the first sink arm 630 and the third sink arm 650, and the interlocking structure of the second rotation arm 620, the second sink arm 640 and the fourth sink arm 660 shall be described in FIG. 29 through FIG. 32. In this way, a foldable electronic device with an optimized interlocking structure between parts within a defined space is achieved, ensuring that the electronic device developed cannot be over-rotated beyond the third state and preventing deviation from the hinge module.

Referring to FIG. 13, according to an embodiment, the foldable electronic device 100 may include a first shaft 730 for connecting the first sink arm 630, the sliding member 680, the third sink arm 650, a first cam member 810, a first elastic member 820, a first shaft bracket 840, a third elastic member 860, and a second shaft bracket 880.

According to an embodiment of the disclosure, at least a part of the first sink arm 630 and at least a part of the third sink arm 650 connected to the first sink arm 630 may be connected to the first shaft 730 to rotate. For example, the first shaft 730 may be disposed to pass through at least a part of the first sink arm 630 and at least a part of the third sink arm 650. The first sink arm 630 and the third sink arm 650 may be connected to the first shaft 730 to rotate about the first shaft 730.

According to an embodiment of the disclosure, the foldable electronic device 100 may include a second shaft 740 for connecting the second sink arm 640, the sliding member 680, the fourth sink arm 660, the first cam member 810, the second elastic member 830, the first shaft bracket 840, the fourth elastic member 870, and the second shaft bracket 880.

According to an embodiment of the disclosure, at least a part of the second sink arm 640 and at least a part of the fourth sink arm 660 connected to the second sink arm 640 may be connected to the second shaft 740 to rotate. For example, the second shaft 740 may be disposed to pass through at least a part of the second sink arm 640 and at least a part of the fourth sink arm 660. The second sink arm 640 and the fourth sink arm 660 may be connected to the second shaft 740 to rotate about the second shaft 740.

According to an embodiment of the disclosure, one side of the sliding member 680 may be connected to the first shaft 730, and the other side of the sliding member 680 may be connected to the second shaft 740. For example, the first shaft 730 may be disposed to pass through one side of the sliding member 680, and the second shaft 740 may be disposed to pass through the other side of the sliding member 680.

According to an embodiment of the disclosure, as the first sink arm 630 and the third sink arm 650 rotate about the first shaft 730, one side of the sliding member 680 may move along the first shaft 730. For example, one side of the sliding member 680 may move along the first shaft 730 between at least a part of the first sink arm 630 and at least a part of the third sink arm 650.

According to an embodiment of the disclosure, as the second sink arm 640 and the fourth sink arm 660 rotate about the second shaft 740, the other side of the sliding member 680 may move along the second shaft 740. For example, the other side of the sliding member 680 may move along the second shaft 740 between at least a part of the second sink arm 640 and at least a part of the fourth sink arm 660.

According to an embodiment of the disclosure, the foldable electronic device 100 may include the first cam member 810 disposed between the third sink arm 650 and the fourth sink arm 660. For example, one side of the first cam member 810 may be disposed to contact at least a part of the third sink arm 650. For example, the other side of the first cam member 810 may be disposed to contact at least a part of the fourth sink arm 660. For example, a connection portion connecting one side of the first cam member 810 and the other side of the first cam member 810 may be disposed between the sliding member 680 and the first shaft bracket 840.

According to an embodiment of the disclosure, the foldable electronic device 100 may include the first elastic member 820 disposed between one side of the first shaft bracket 840 and one side of the first cam member 810. One side of the first cam member 810 may compress the first elastic member 820. For example, as at least a part of the third sink arm 650 applies force to one side of the first cam member 810, one side of the first cam member 810 may compress the first elastic member 820.

According to an embodiment of the disclosure, the foldable electronic device 100 may include the second elastic member 830 disposed between the other side of the first shaft bracket 840 and the other side of the first cam member 810. The other side of the first cam member 810 may compress the second elastic member 830. For example, as at least a part of the fourth sink arm 660 exerts force on the other side of the first cam member 810, one side of the first cam member 810 may compress the first elastic member 820.

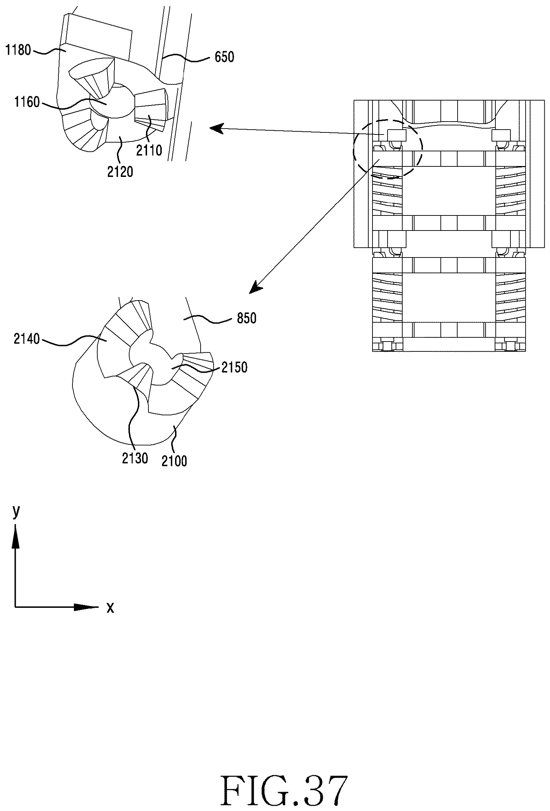

The movement process of the third sink arm 650, the fourth sink arm 660, the first cam member 810, the first elastic member 820, and the second elastic member 830 shall be described in FIG. 37 through FIG. 40.

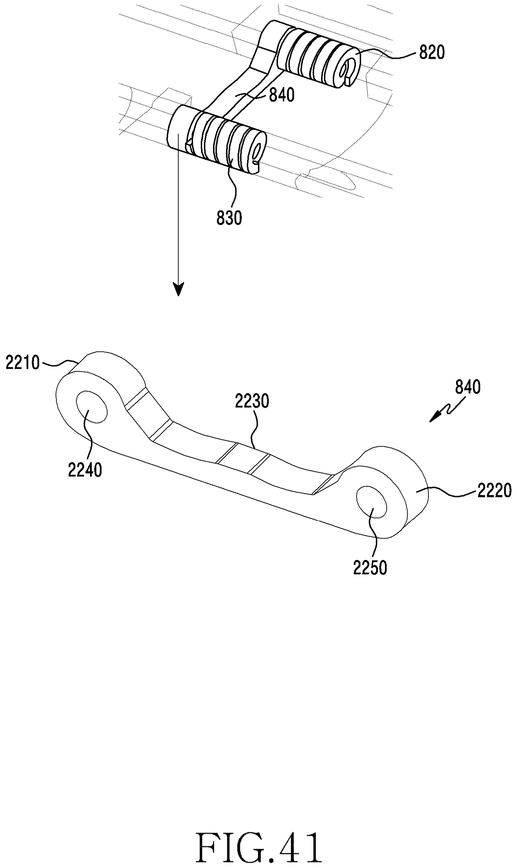

According to an embodiment of the disclosure, the foldable electronic device 100 may include the first shaft bracket 840 for supporting the first elastic member 820 and the second elastic member 830. For example, one side of the first shaft bracket 840 may support the first elastic member 820, and the other side of the first shaft bracket 840 may support the second elastic member 830. For example, the first shaft bracket 840 may support the first elastic member 820 and the second elastic member 830 while the first elastic member 820 and the second elastic member 830 are compressed. For example, the first shaft bracket 840 may prevent the first elastic member 820 and the second elastic member 830 from deviating from the hinge module 510. The shape of the first shaft bracket 840 shall be described in FIG. 41.

According to an embodiment of the disclosure, the first shaft bracket 840 may be supported by at least one part and another part of the third sink arm 650 and at least one part and another part of the fourth sink arm 660. For example, one side of the first shaft bracket 840 may be supported by another part of the third sink arm 650, and the other side of the first shaft bracket 840 may be supported by another part of the fourth sink arm 660.

According to an embodiment of the disclosure, the foldable electronic device 100 may include the second cam member 850 disposed to contact another part of the third sink arm 650 and another part of the fourth sink arm 660. For example, one side of the first shaft bracket 840 may be disposed to contact one side of another part of the third sink arm 650, and one side of the second cam member 850 may be disposed to contact the other side of another part of the third sink arm 650. For example, the other side of the first shaft bracket 840 may be disposed to contact one side of another part of the fourth sink arm 660, and the other side of the second cam member 850 may be disposed to contact the other side of another part of the fourth sink arm 660. For example, a connection portion connecting one side of the second cam member 850 and the other side of the second cam member 850 may be disposed to face the connection portion of the first shaft bracket 840.

According to an embodiment of the disclosure, the foldable electronic device 100 may include the third elastic member 860 disposed between one side of the second cam member 850 and a first ring member 910. One side of the second cam member 850 may compress the third elastic member 860. For example, as at least a part of the third sink arm 650 and another part of the third sink arm apply force to one side of the second cam member 850, one side of the second cam member 850 may compress the third elastic member 860.

According to an embodiment of the disclosure, the foldable electronic device 100 may include the fourth elastic member 870 disposed between the other side of the second cam member 850 and a second ring member 920. The other side of the second cam member 850 may compress the fourth elastic member 870. For example, as at least a part and another part of the fourth sink arm 660 exert force on the other side of the second cam member 850, the other side of the second cam member 850 may compress the fourth elastic member 870.

The second cam member 850, the third elastic member 860, and the fourth elastic member 870 may be configured the same as the first cam member 810, the first elastic member 820 and the second elastic member 830 respectively, or may be configured with appropriate modifications.

According to an embodiment of the disclosure, the foldable electronic device 100 may include the second shaft bracket 880 for supporting the third elastic member 860 and the fourth elastic member 870. For example, one side of the second shaft bracket 880 may support the third elastic member 860, and the other side of the second shaft bracket 880 may support the fourth elastic member 870. For example, the second shaft bracket 880 may support the third elastic member 860 and the fourth elastic member 870 while the third elastic member 860 and the fourth elastic member 870 are compressed. For example, the second shaft bracket 880 may prevent the third elastic member 860 and the fourth elastic member 870 from deviating from the hinge module 510.

The shape of the second shaft bracket 880 may be formed the same as the first shaft bracket 840 and may be appropriately modified.

According to an embodiment of the disclosure, the foldable electronic device 100 may include the first ring member 910 for supporting one side of the second shaft bracket 880 and the second ring member 920 for supporting the other side of the second shaft bracket 880.

According to an embodiment of the disclosure, the foldable electronic device 100 may include a third ring member 930 and a fourth ring member 940 for preventing configurations connected to the first shaft 730 and the second shaft 740 from deviating from the first shaft 730 and the second shaft 740 among the configurations of the hinge module 510. For example, the third ring member 930 may be disposed to face the first ring member 910. For example, the fourth ring member 940 may be disposed to face the second ring member 920.

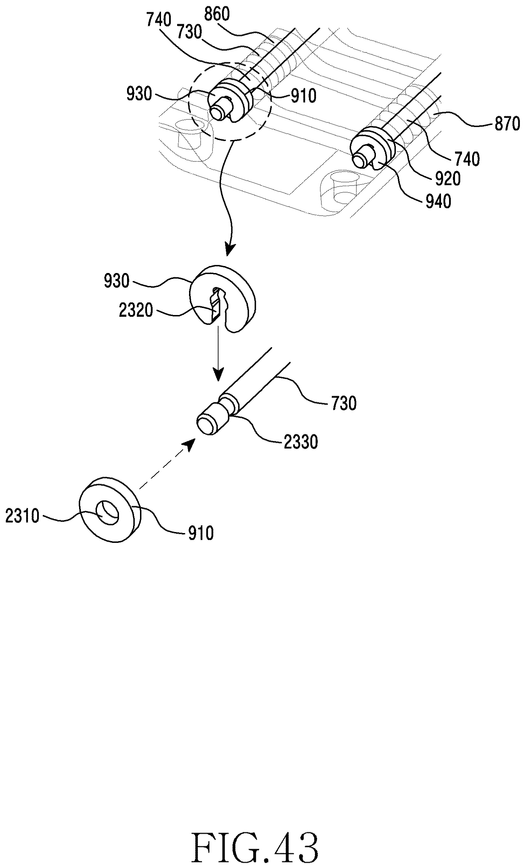

The shape of the first ring member 910, the second ring member 920, the third ring member 930 and the fourth ring member 940 shall be described in FIG. 43.

According to an embodiment of the disclosure, the foldable electronic device 100 may include a fixing bracket 950 connected to one end of the first shaft 730 and one end of the second shaft 740. For example, the first shaft 730 and the second shaft 740 may be secured to the hinge housing 520 through the fixing bracket 950. For example, the fixing bracket 950 connected to the first shaft 730 and the second shaft 740 may be fastened and secured to the hinge housing 520.

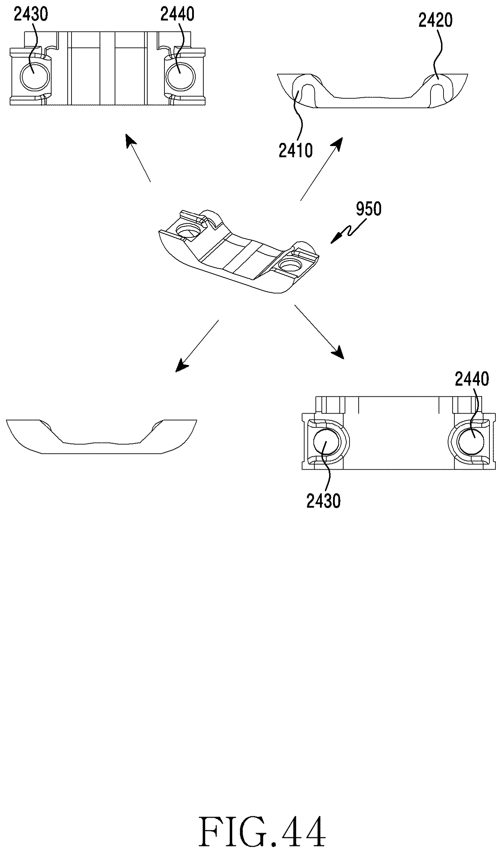

The shape of the fixing bracket 950 and its connection structure with the hinge housing 520 shall be described in FIG. 44 through FIG. 46. In this way, a foldable electronic device with an optimized interlocking structure between parts within a defined space is achieved, ensuring that the electronic device developed cannot be over-rotated beyond the third state, and preventing deviation from the hinge module.

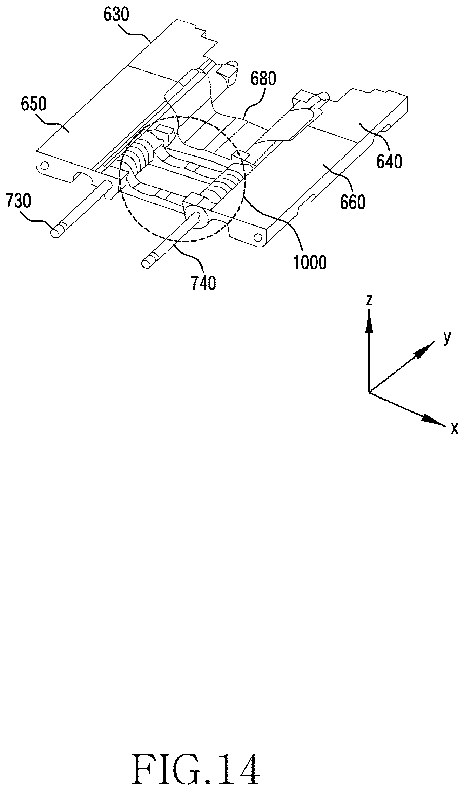

FIG. 14 is a perspective view of some configurations of a hinge module being coupled according to an embodiment.

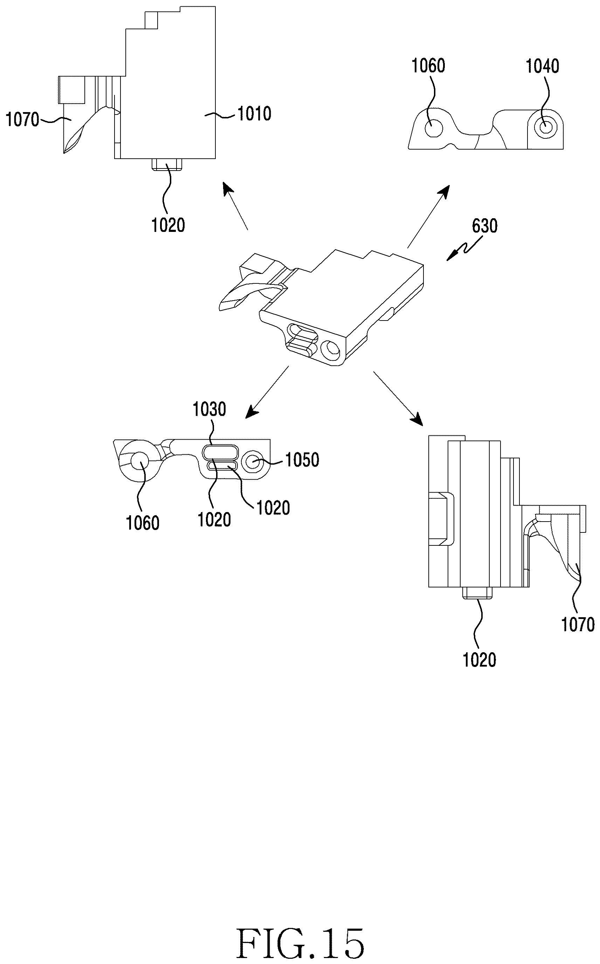

FIG. 14 may illustrate that the first shaft 730, the second shaft 740, the first sink arm 630, the second sink arm 640, the third sink arm 650, the fourth sink arm 660, the sliding member 680 and a first cam structure 1000 which are some configurations of the configurations of the hinge module 510 are coupled, according to an embodiment. For example, the first cam structure 1000 may be a structure where the first cam member 810, the first elastic member 820, the second elastic member 830, and the first shaft bracket 840 are coupled. The shape and the coupling process of some configurations of the hinge module 510 of FIG. 11 will be explained in detail in FIG. 15 through FIG. 18 to be described.

FIG. 15 is a perspective view of a first sink arm according to an embodiment.

According to an embodiment of the disclosure, while only the shape of the first sink arm 630 is depicted in FIG. 15, the shape of the second sink arm 640 may be formed symmetrically to the first sink arm 630.

According to an embodiment of the disclosure, the first sink arm 630 may include a first body portion 1010 including a first protrusion 1020, a first recess 1030, a first insertion hole 1040, a second insertion hole 1050, a first through hole 1060, and a first spiral portion 1070.

According to an embodiment of the disclosure, the first protrusion 1020 may be formed on one side of the first body portion 1010. For example, the first protrusion 1020 may be formed to protrude in a direction aligned with the rotation axis of the first sink arm 630. For example, the first protrusion 1020 may be formed in line with the first shaft 730 corresponding to the rotation axis of the first sink arm 630.

According to an embodiment of the disclosure, the first recess 1030 may be formed on one side of the first body portion 1010. For example, the first recess 1030 may be formed to be recessed in a direction aligned with the rotation axis of the first sink arm 630. For example, the first recess 1030 may be formed in line with the first shaft 730 corresponding to the rotation axis of the first sink arm 630. The first recess 1030 may be formed on one side of the first body portion 1010 adjacent to the first protrusion 1020.

According to an embodiment of the disclosure, the first sink arm 630 may be connected to the third sink arm 650 through the first protrusion 1020 and the first recess 1030. For example, the first sink arm 630 and the third sink arm 650 may be connected through the first protrusion 1020 and the first recess 1030 such that the first sink arm 630 and the third sink arm 650 rotate together. The coupling of the first sink arm 630 and the third sink arm 650 shall be described in FIG. 19.

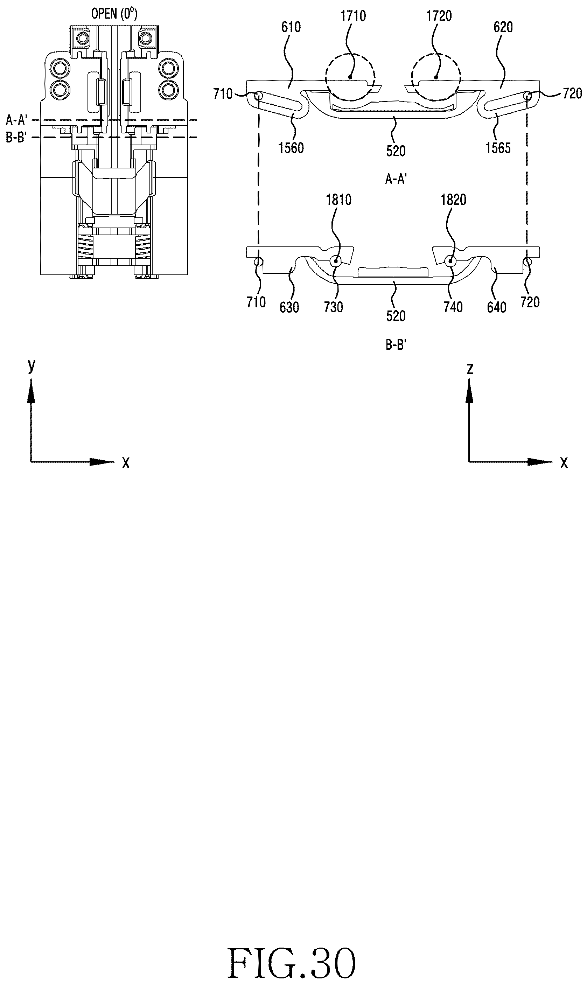

According to an embodiment of the disclosure, the first body portion 1010 of the first sink arm 630 may include the first insertion hole 1040 formed on the other side opposite to one side of the first body portion 1010 and the second insertion hole 1050 formed on one side of the first body portion 1010. For example, the first insertion hole 1040 and the second insertion hole 1050 may be formed symmetrically. The first interlocking pin 710 coupled to the first rotation arm 610 may be disposed to pass through the first insertion hole 1040 and the second insertion hole 1050 of the first sink arm 630. For example, since the first interlocking pin 710 coupled to the first rotation arm 610 is disposed to pass through the first insertion hole 1040 and the second insertion hole 1050 of the first sink arm 630, the first rotation arm 610 and the first sink arm 630 may be connected to rotate together. The interlocking structure of the first rotation arm 610 and the first sink arm 630 shall be described in FIG. 30 through FIG. 32.

According to an embodiment of the disclosure, the first sink arm 630 may include the first through hole 1060 formed in a surface perpendicular to one side and/or the other side of the first body portion 1010. The first shaft 730 may be disposed to pass through the first through hole 1060 of the first sink arm 630. For example, the first sink arm 630 may rotate about the first shaft 730 coupled to the first sink arm 630 through the first through hole 1060. For example, the surface including the first through hole 1060 may be a surface facing in a direction aligned with the first shaft 730 corresponding to the rotation axis.

According to an embodiment of the disclosure, the first sink arm 630 may include the first spiral portion 1070 extending from the surface in which the first through hole 1060 is formed. For example, the first spiral portion 1070 of the first sink arm 630 may be a portion extending in the direction of one side of the first body portion 1010 of the first sink arm 630. For example, the first spiral portion 1070 may be formed to surround at least a part of the first shaft 730 disposed by passing through the first through hole 1060. For example, the first spiral portion 1070 may be formed in a spiral shape to surround at least a part of the first shaft 730. The first spiral portion 1070 of the first sink arm 630 may be formed in a shape corresponding to a spiral portion (e.g., a fifth spiral portion 1240 of FIG. 17) of the sliding member 680 of FIG. 17 to be described.

According to an embodiment of the disclosure, the second sink arm 640 may include a second body portion including a second protrusion, a second recess, a third insertion hole, a fourth insertion hole, a second through hole and a second spiral portion.

According to an embodiment of the disclosure, the second protrusion may be formed on one side of the second body portion. For example, the second protrusion may be formed to protrude in a direction aligned with the rotation axis of the second sink arm 640. For example, the second protrusion may be formed in line with the second shaft 740 corresponding to the rotation axis of the second sink arm 640.

According to an embodiment of the disclosure, the second recess may be formed on one side of the second body portion. For example, for example, the second recess may be formed to be recessed in a direction aligned with the rotation axis of the second sink arm 640. For example, the second recess may be formed in line with the second shaft 740 corresponding to the rotation axis of the second sink arm 640. The second recess may be formed on one side of the second body portion adjacent to the second protrusion.

According to an embodiment of the disclosure, the second sink arm 640 may be connected to the fourth sink arm 660 through the second protrusion and the second recess. For example, the second sink arm 640 and the fourth sink arm 660 may be connected through the second protrusion and the second recess such that the second sink arm 640 and the fourth sink arm 660 rotate together. The coupling of the second sink arm 640 and the fourth sink arm 660 shall be explained in FIG. 19 to be described.

According to an embodiment of the disclosure, the second body portion of the second sink arm 640 may include the third insertion hole formed on the other side opposite to one side of the second body portion and the fourth insertion hole formed on one side of the second body portion. For example, the third insertion hole and the fourth insertion hole may be formed symmetrically. The second interlocking pin 720 coupled to the second rotation arm 620 may be disposed to pass through the third insertion hole and the fourth insertion hole of the second sink arm 640. For example, since the second interlocking pin 720 coupled to the second rotation arm 620 is disposed to pass through the third insertion hole and the fourth insertion hole of the second sink arm 640, the second rotation arm 620 and the second sink arm 640 may be connected to rotate together. The interlocking structure of the second rotation arm 620 and the second sink arm 640 shall be explained in FIG. 30 through FIG. 32 to be described.

According to an embodiment of the disclosure, the second sink arm 640 may include a second through hole formed in a surface perpendicular to one side and/or the other side of the second body portion. The second shaft 740 may be disposed to pass through the second through hole of the second sink arm 640. For example, the second sink arm 640 may rotate about the second shaft 740 coupled to the second sink arm 640 through the second through hole. For example, the surface including the second through hole may be a surface facing in a direction aligned with the second shaft 740 corresponding to the rotation axis.

According to an embodiment of the disclosure, the second sink arm 640 may include a second spiral portion protruding from the surface in which the second through hole is formed. For example, the second spiral portion of the second sink arm 640 may be a portion extending in the direction of one side of the second body portion of the second sink arm 640. For example, the second spiral portion may be formed to surround at least a part of the second shaft 740 disposed by passing through the second through hole. For example, the second spiral portion may be formed in a spiral shape to surround at least a part of the second shaft 740. The second spiral portion of the second sink arm 640 may be formed in a shape corresponding to a spiral portion (e.g., a sixth spiral portion 1250 of FIG. 17) of the sliding member 680 of FIG. 17 to be described. In this way, a foldable electronic device with an optimized interlocking structure between parts within a defined space is achieved, ensuring that the electronic device developed cannot be over-rotated beyond the third state and preventing deviation from the hinge module.

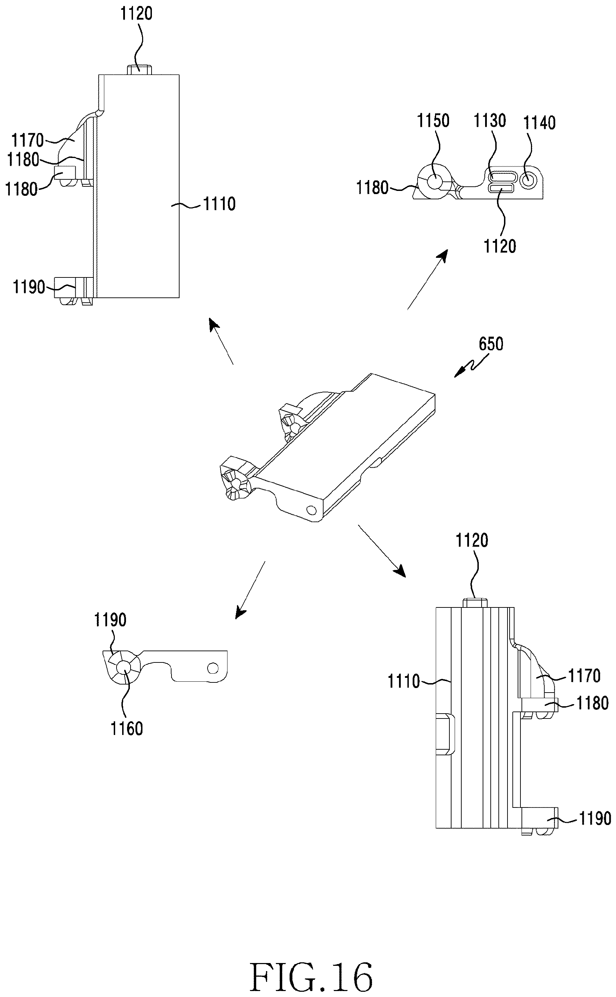

FIG. 16 is a perspective view of a third sink arm according to an embodiment.

According to an embodiment of the disclosure, while only the shape of the third sink arm 650 is depicted in FIG. 16, the shape of the fourth sink arm 660 may be formed symmetrically to the third sink arm 650.

According to an embodiment of the disclosure, the third sink arm 650 may include a third body portion 1110 including a third protrusion 1120, a third recess 1130, a fifth insertion hole 1140, a third through hole 1150, a fifth through hole 1160, a third spiral portion 1170, a first cam portion 1180 and a third cam portion 1190.

According to an embodiment of the disclosure, the third protrusion 1120 may be formed on one side of the third body portion 1110. For example, one side of the third body portion 1110 may be a side which faces one side of the first sink arm 630. For example, the third protrusion 1120 may be formed to protrude in a direction aligned with the rotation axis of the third sink arm 650. For example, the third protrusion 1120 may be formed to protrude in line with the first shaft 730 corresponding to the rotation axis of the third sink arm 650. For example, the third protrusion 1120 may protrude toward the first recess 1030 of the first sink arm 630.

According to an embodiment of the disclosure, the third recess 1130 may be formed on one side of the third body portion 1110. For example, the third recess 1130 may be formed to be recessed in a direction aligned with the rotation axis of the third sink arm 650. For example, the third recess 1130 may be formed in line with the first shaft 730 corresponding to the rotation axis of the third sink arm 650. The third recess 1130 may be formed on one side of the third body portion 1110 to be adjacent to the third protrusion 1120. For example, the third recess 1130 may be formed at a position facing the first protrusion 1020 of the first sink arm 630.

According to an embodiment of the disclosure, the third sink arm 650 may be connected to the first sink arm 630 through the third protrusion 1120 and the third recess 1130. For example, the third sink arm 650 and the first sink arm 630 may be connected through the third protrusion 1120 and the third recess 1130 such that the third sink arm 650 and the first sink arm 630 rotate together. The coupling of the first sink arm 630 and the third sink arm 650 shall be explained in FIG. 19 to be described.

According to an embodiment of the disclosure, the third body portion 1110 of the third sink arm 650 may include the fifth insertion hole 1140 formed on one side of the third body portion 1110. For example, the fifth insertion hole 1140 may be formed at a position facing the second insertion hole 1050 of the first sink arm 630. The first interlocking pin 710 connected to the first sink arm 630 through the first insertion hole 1040 and the second insertion hole 1050 of the first sink arm 630 may be disposed to pass through the fifth insertion hole 1140 of the third sink arm 650. For example, since the first interlocking pin 710 coupled to the first sink arm 630 is disposed to pass through the fifth insertion hole 1140 of the third sink arm 650, the first sink arm 630 and the third sink arm 650 may be connected to rotate together. The interlocking structure of the first rotation arm 610, the first sink arm 630 and the third sink arm 650 shall be explained in FIG. 30 through FIG. 32 to be described.

According to an embodiment of the disclosure, the third sink arm 650 may include the third through hole 1150 formed on one surface perpendicular to one side and/or the other side of the third body portion 1110. The third sink arm 650 may include the fifth through hole 1160 formed on the other surface parallel to one surface perpendicular to one side and/or the other side of the third body portion 1110. For example, the third sink arm 650 may be disposed by separating one surface and the other surface formed perpendicular to one side and/or the other side of the third body portion 1110 by a specific distance.

According to an embodiment of the disclosure, the first shaft 730 may be disposed to pass through the third through hole 1150 and the fifth through hole 1160 of the third sink arm 650. For example, the third sink arm 650 may rotate about the first shaft 730 coupled to the third sink arm 650 through the third through hole 1150 and the fifth through hole 1160. For example, one surface including the third through hole 1150 and the other surface including the fifth through hole 1160 may be surfaces facing in a direction aligned with the first shaft 730 corresponding to the rotation axis.

According to an embodiment of the disclosure, the third sink arm 650 may include the third spiral portion 1170 extending from one surface in which the third through hole 1150 is formed. For example, the third spiral portion 1170 of the third sink arm 650 may be a portion extending in a direction of one side of the third body portion 1110 of the third sink arm 650. For example, the third spiral portion 1170 may be a portion extending toward the first spiral portion 1070 of the first sink arm 630. For example, the third spiral portion 1170 may be formed to surround at least a part of the first shaft 730 disposed by passing through the third through hole 1150. For example, the third spiral portion 1170 may be formed in a spiral shape to surround at least a part of the first shaft 730. The third spiral portion 1170 of the third sink arm 650 may be formed in a shape corresponding to a spiral portion (e.g., a seventh spiral portion 1260 of FIG. 17) of the sliding member 680 of FIG. 17 to be described.

According to an embodiment of the disclosure, the third sink arm 650 may include the first cam portion 1180 formed on one surface surrounding the third through hole 1150. For example, one surface surrounding the third through hole 1150 may be a surface facing a direction parallel to the rotation axis of the third sink arm 650. For example, the first cam portion 1180 may be a portion which contacts one side of the first cam member 810.

According to an embodiment of the disclosure, the third sink arm 650 may include the third cam portion 1190 formed on one surface surrounding the fifth through hole 1160. For example, one surface surrounding the fifth through hole 1160 may be a surface facing a direction parallel to the rotation axis of the third sink arm 650. For example, the third cam portion 1190 may be a portion which contacts one side of the second cam member 850.

The shape of the first cam portion 1180 and the third cam portion 1190, and the example in which the first cam portion 1180 the third cam portion 1190 contact the first cam member 810 and the second cam member 850 respectively as the third sink arm 650 rotates shall be explained in FIG. 37 through FIG. 40 to be described.

According to an embodiment of the disclosure, the fourth sink arm 660 may include a fourth body portion including a fourth protrusion, a fourth recess, a sixth insertion hole, a fourth through hole, a sixth through hole, a fourth spiral portion, a second cam portion and a fourth cam portion.

According to an embodiment of the disclosure, the fourth protrusion may be formed on one side of the fourth body portion. For example, one side of the fourth body portion may be a side facing one side of the second sink arm 640. For example, the fourth protrusion may be formed to protrude in a direction aligned with the rotation axis of the fourth sink arm 660. For example, the fourth protrusion may be formed in line with the second shaft 740 corresponding to the rotation axis of the fourth sink arm 660. For example, the fourth protrusion may protrude toward the second recess of the second sink arm 640.

According to an embodiment of the disclosure, the fourth recess may be formed on one side of the fourth body portion. For example, the fourth recess may be formed to be recessed in a direction aligned with the rotation axis of the fourth sink arm 660. For example, the fourth recess may be formed in line with the second shaft 740 corresponding to the rotation axis of the fourth sink arm 660. The fourth recess may be formed on one side of the fourth body portion to be adjacent to the fourth protrusion. For example, the fourth recess may be formed at a position facing the second protrusion of the second sink arm 640.

According to an embodiment of the disclosure, the fourth sink arm 660 may be connected to the second sink arm 640 through the fourth protrusion and the fourth recess. For example, the fourth sink arm 660 and the second sink arm 640 may be connected through the fourth protrusion and the fourth recess such that the fourth sink arm 660 and the second sink arm 640 rotate together. The coupling of the second sink arm 640 and the fourth sink arm 660 shall be described in FIG. 19.

According to an embodiment of the disclosure, the fourth portion of the fourth sink arm 660 may include the sixth insertion hole formed on one side of the fourth body portion. For example, the sixth insertion hole may be formed at a position facing the fourth insertion hole of the second sink arm 640. The second interlocking pin 720 connected to the second sink arm 640 through the third insertion hole and the fourth insertion hole of the second sink arm 640 may be disposed to pass through the sixth insertion hole of the fourth sink arm 660. For example, since the second interlocking pin 720 coupled to the second sink arm 640 is disposed to pass through the sixth insertion hole of the fourth sink arm 660, the second sink arm 640 and the fourth sink arm 660 may be connected to rotate together. The interlocking structure of the second rotation arm 620, the second sink arm 640 and the fourth sink arm 660 shall be explained in FIG. 30 through FIG. 32 to be described.

According to an embodiment of the disclosure, the fourth sink arm 660 may include the fourth through hole formed in one surface perpendicular to one side and/or the other side of the fourth body portion. The fourth sink arm 660 may include the sixth through hole formed in the other surface parallel to one surface perpendicular to one side and/or the other side of the fourth body portion. For example, the fourth sink arm 660 may be disposed by separating one surface and the other surface formed perpendicular to one side and/or the other side of the fourth body portion by a specific distance.

According to an embodiment of the disclosure, the second shaft 740 may be disposed to pass through the fourth through hole and the sixth through hole of the fourth sink arm 660. For example, the fourth sink arm 660 may rotate about the second shaft 740 coupled to the fourth sink arm 660 through the fourth through hole and the sixth through hole. For example, one surface including the fourth through hole and the other surface including the sixth through hole may be surfaces facing in a direction aligned with the second shaft 740 corresponding to the rotation axis.

According to an embodiment of the disclosure, the fourth sink arm 660 may include the fourth spiral portion extending from one surface in which the fourth through hole is formed. For example, the fourth spiral portion of the fourth sink arm 660 may be a portion extending in the facing direction of one side of the fourth body portion of the fourth sink arm 660. For example, the fourth spiral portion may be a portion extending toward the second spiral portion of the second sink arm 640. For example, the fourth spiral portion may be formed to surround at least a part of the second shaft 740 disposed by passing through the fourth through hole. For example, the fourth spiral portion may be formed in a spiral shape to surround at least a part of the second shaft 740. The fourth spiral portion of the fourth sink arm 660 may be formed in a shape (e.g., an eighth spiral portion 1270 of FIG. 17) corresponding to a spiral portion of the sliding member 680 of FIG. 17 to be described.

According to an embodiment of the disclosure, the fourth sink arm 660 may include the second cam portion formed on one surface surrounding the fourth through hole. For example, one surface surrounding the fourth through hole may be a surface facing a direction parallel to the rotation axis of the fourth sink arm 660. For example, the second cam portion may be a portion which contacts the other side of the first cam member 810.

According to an embodiment of the disclosure, the fourth sink arm 660 may include the fourth cam portion formed on one surface surrounding the sixth through hole. For example, one surface surrounding the sixth through hole may be a surface facing a direction parallel to the rotation axis of the fourth sink arm 660. For example, the fourth cam portion may be a portion which contacts the other side of the second cam member 850.

The shape of the second cam portion and the fourth cam portion, and the example in which the second cam portion and the fourth cam portion contact the first cam member 810 and the second cam member 850 respectively as the fourth sink arm 660 rotates shall be explained in FIG. 37 through FIG. 40 to be described. In this way, a foldable electronic device with an optimized interlocking structure between parts within a defined space is achieved, ensuring that the electronic device developed cannot be over-rotated beyond the third state and preventing deviation from the hinge module.

FIG. 17 is a perspective view of a sliding member according to an embodiment.

According to an embodiment of the disclosure, the sliding member 680 may include a connection portion 1210, a seventh through hole 1220, an eighth through hole 1230, a fifth spiral portion 1240, a sixth spiral portion 1250, a seventh spiral portion 1260 and an eighth spiral portion 1270. For example, the seventh through hole 1220, the fifth spiral portion 1240 and the seventh spiral portion 1260 may be formed in one side of the sliding member 680. For example, the eighth through hole 1230, the sixth spiral portion 1250 and the eighth spiral portion 1270 may be formed on the other side opposite to one side of the sliding member 680. For example, the connection portion 1210 of the sliding member 680 may connect one side of the sliding member 680 having the seventh through hole 1220, the fifth spiral portion 1240 and the seventh spiral portion 1260 to the other side of the sliding member 680 having the eighth through hole 1230, the sixth spiral portion 1250 and the eighth spiral portion 1270.

According to an embodiment of the disclosure, the connection portion 1210 of the sliding member 680 may be disposed between the rotation guide bracket 670 and the first cam member 810 of the hinge module 510. At least a part of the connection portion 1210 of the sliding member 680 may be convexly formed in a direction toward the hinge housing 520 compared to the top of one side and the top of the other side of the sliding member 680. For example, at least a part of the connection portion 1210 of the sliding member 680 may be convexly formed in a direction perpendicular to the rotation axis of the first sink arm 630 and/or the rotation axis of the second sink arm 640. For example, the connection portion 1210 of the sliding member 680 may be positioned between a virtual straight line connecting a top portion of the fifth spiral portion 1240 and a top portion of the sixth spiral portion 1250 of the sliding member 680 and the hinge housing 520.

According to an embodiment of the disclosure, the seventh through hole 1220 through which the first shaft 730 passes may be formed in one side of the sliding member 680. For example, the first through hole 1060 of the first sink arm 630 may be connected to the seventh through hole 1220 of the sliding member 680 by the first shaft 730 inserted into the first through hole 1060 of the first sink arm 630 and the seventh through hole 1220 of the sliding member 680. For example, the first shaft 730 connected to one side of the sliding member 680 through the seventh through hole 1220 of the sliding member 680 may be connected to the third sink arm 650 through the third through hole 1150 of the third sink arm 650.

According to an embodiment of the disclosure, the eighth through hole 1230 through which the second shaft 740 passes may be formed in the other side of the sliding member 680. For example, the second through hole of the second sink arm 640 may be connected to the eighth through hole of the sliding member 680 by the second shaft 740 inserted into the second through hole of the second sink arm 640 and the eighth through hole 1230 of the sliding member 680. For example, the second shaft 740 connected to the other side of the sliding member 680 through the eighth through hole 1230 of the sliding member 680 may be connected to the fourth sink arm 660 through the fourth through hole of the fourth sink arm 660.

According to an embodiment of the disclosure, one side of the sliding member 680 may include the fifth spiral portion 1240 corresponding to the first spiral portion 1070 of the first sink arm 630. For example, the fifth spiral portion 1240 of the sliding member 680 may be formed in a spiral shape corresponding to the spiral shape of the first spiral portion 1070 of the first sink arm 630. For example, the fifth spiral portion 1240 of the sliding member 680 may be formed to engage with the first spiral portion 1070 of the first sink arm 630.

According to an embodiment of the disclosure, one side of the sliding member 680 may include the seventh spiral portion 1260 corresponding to the third spiral portion 1170 third sink arm 650. For example, the seventh spiral portion 1260 of the sliding member 680 may be formed in a spiral shape corresponding to the spiral shape of the third spiral portion 1170 of the third sink arm 650. For example, the seventh spiral portion 1260 of the sliding member 680 may be formed to engage with the third spiral portion 1170 third sink arm 650.

According to an embodiment of the disclosure, the other side of the sliding member 680 may include the sixth spiral portion 1250 corresponding to the second spiral portion of the second sink arm 640. For example, the sixth spiral portion 1250 of the sliding member 680 may be formed in a spiral shape corresponding to the spiral shape of the second spiral portion of the second sink arm 640. For example, the sixth spiral portion 1250 of the sliding member 680 may be formed to engage with the second spiral portion of the second sink arm 640.

According to an embodiment of the disclosure, the other side of the sliding member 680 may include the eighth spiral portion 1270 corresponding to the fourth spiral portion of the fourth sink arm 660. For example, the eighth spiral portion 1270 of the sliding member 680 may be formed in a spiral shape corresponding to the spiral shape of the fourth spiral portion of the fourth sink arm 660. For example, the eighth spiral portion 1270 of the sliding member 680 may be formed to engage with the fourth spiral portion of the fourth sink arm 660.

According to an embodiment of the disclosure, as the first sink arm 630 and the third sink arm 650 coupled to the first sink arm 630 rotate about the first shaft 730, one side of the sliding member 680 coupled to the first shaft 730 may move along the first shaft 730 in a direction aligned with the rotation axis. As the second sink arm 640 and the fourth sink arm 660 coupled to the second sink arm 640 rotate about the second shaft 740, the other side of the sliding member 680 coupled to the second shaft 740 may move along the second shaft 740 in a direction aligned with the rotation axis.

According to an embodiment of the disclosure, as the first sink arm 630 and the third sink arm 650 rotate about the first shaft 730, the third spiral portion 1170 of the third sink arm 650 may spiral along the seventh spiral portion 1260 of the sliding member 680, and the fifth spiral portion 1240 of the sliding member 680 may spiral along the first spiral portion 1070 of the first sink arm 630. As the third spiral portion 1170 of the third sink arm 650 and the fifth spiral portion 1240 of the sliding member 680 spirally move, one side of the sliding member 680 may translationally move in a direction aligned with the first shaft 730.

According to an embodiment of the disclosure, as the second sink arm 640 and the fourth sink arm 660 rotate about the second shaft 740, the fourth spiral portion of the fourth sink arm 660 may spirally move along the eighth spiral portion 1270 of the sliding member 680, and the sixth spiral portion 1250 of the sliding member 680 may spiral along the second spiral portion of the second sink arm 640. As the fourth spiral portion of the fourth sink arm 660 and the sixth spiral portion 1250 of the sliding member 680 spirally move, the other side of the sliding member 680 may translationally move in a direction aligned with the second shaft 740.

The translational movement of the sliding member 680 will be explained in FIG. 20 to be described. In this way, a foldable electronic device with an optimized interlocking structure between parts within a defined space is achieved, ensuring that the electronic device developed cannot be over-rotated beyond the third state and preventing deviation from the hinge module.

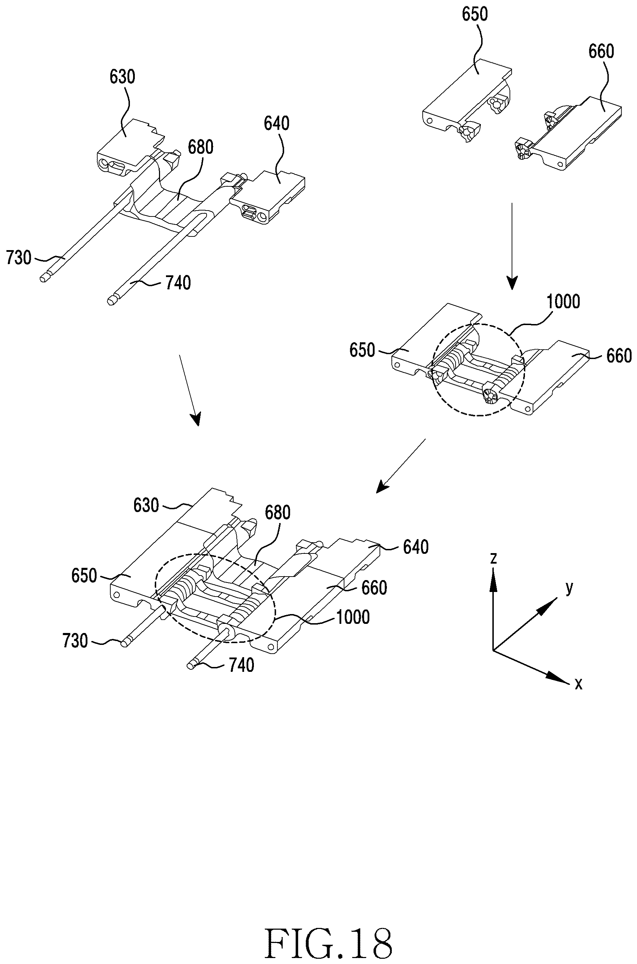

FIG. 18 is a diagram illustrating a process of coupling some configurations of a hinge module according to an embodiment.

Referring to FIG. 18, according to an embodiment, for example, a first module may be assembled by coupling one side of the sliding member 680 to the first shaft 730 and the other side of the sliding member 680 to the second shaft 740, with the first shaft 730 coupled to the first sink arm 630 and the second shaft 740 coupled to the second sink arm 640. For example, a second module may be assembled by coupling one side of the first cam structure 1000 to the third sink arm 650 and the other side of the first cam structure 1000 to the fourth sink arm 660. For example, a third module may be assembled by coupling one side of the first cam structure 1000 of the second module to the first shaft 730 of the first module and the other side of the first cam structure 1000 of the second module to the second shaft 740 of the first module. In this way, a foldable electronic device with an optimized interlocking structure between parts within a defined space is achieved, ensuring that the electronic device developed cannot be over-rotated beyond the third state and preventing deviation from the hinge module.

FIG. 19 is a diagram illustrating that a first sink arm and a third sink arm are coupled according to an embodiment.

Referring to FIG. 19, according to an embodiment, the first sink arm 630 and the third sink arm 650 may be coupled. In an embodiment, the first protrusion 1020 of the first sink arm 630 and the third recess 1130 of the third sink arm 650 may be coupled. For example, the third recess 1130 may be formed to correspond to the first protrusion 1020. In an embodiment, the third protrusion 1120 of the third sink arm 650 and the first recess 1030 of the first sink arm 630 may be coupled. For example, the first recess 1030 may be formed to correspond to the third protrusion 1120. While FIG. 19 depicts only the coupling of the first sink arm 630 and the third sink arm 650, it may be applied to the coupling of the second sink arm 640 and the fourth sink arm 660 in the same manner. In this way, a foldable electronic device with an optimized interlocking structure between parts within a defined space is achieved, ensuring that the electronic device developed cannot be over-rotated beyond the third state and preventing deviation from the hinge module.

FIG. 20 is a diagram illustrating movement of a sliding member according to an embodiment.

According to an embodiment of the disclosure, as the second housing 120 of the foldable electronic device 100 rotates, the first sink arm 630 and the third sink arm 650 coupled to the first sink arm 630 may rotate about the first shaft 730. As the third housing 130 of the foldable electronic device 100 rotates, the second sink arm 640 and the fourth sink arm 660 coupled to the second sink arm 640 may rotate about the second shaft 740.

According to an embodiment of the disclosure, if the first sink arm 630 and the third sink arm 650 rotate, one side of the sliding member 680 may translationally move in a direction aligned with the rotation axis of the first sink arm 630 and the third sink arm 650. If the second sink arm 640 and the fourth sink arm 660 rotate, the other side of the sliding member 680 may translationally move in a direction aligned with the rotation axis of the second sink arm 640 and the fourth sink arm 660.

According to an embodiment of the disclosure, as one side of the sliding member 680 and the other side of the sliding member 680 translationally move along the first shaft 730 and the second shaft 740 in the direction aligned with the rotation axis, the connection portion 1210 of the sliding member 680 may move toward the rotation guide bracket 670.

According to an embodiment of the disclosure, a movement distance of the sliding member 680 in the translational movement of the sliding member 680 may be determined by a slope of the spiral shape of the fifth spiral portion 1240, the sixth spiral portion 1250, the seventh spiral portion 1260, and the eighth spiral portion 1270 of the sliding member 680. For example, the translational movement distance of the sliding member 680 may increase if the spiral of the fifth spiral portion 1240 of the sliding member 680 which spirals within the first spiral portion 1070 of the first sink arm 630 corresponding to the fifth spiral portion 1240 of the sliding member 680 is lengthened. For example, the translational movement distance of the sliding member 680 may increase if the spiral of the seventh spiral portion 1260 of the sliding member 680 which spirals within the third spiral portion 1170 of the third sink arm 650 corresponding to the seventh spiral portion 1260 of the sliding member 680 is lengthened. For example, the translational movement distance of the sliding member 680 may increase, if the spiral of the fifth spiral portion 1240 and/or the seventh spiral portion 1260 of the sliding member 680 spirally moving is lengthened along the rotation axis of the first sink arm 630 and/or the third sink arm 650. In this way, a foldable electronic device with an optimized interlocking structure between parts within a defined space is achieved, ensuring that the electronic device developed cannot be over-rotated beyond the third state and preventing deviation from the hinge module.

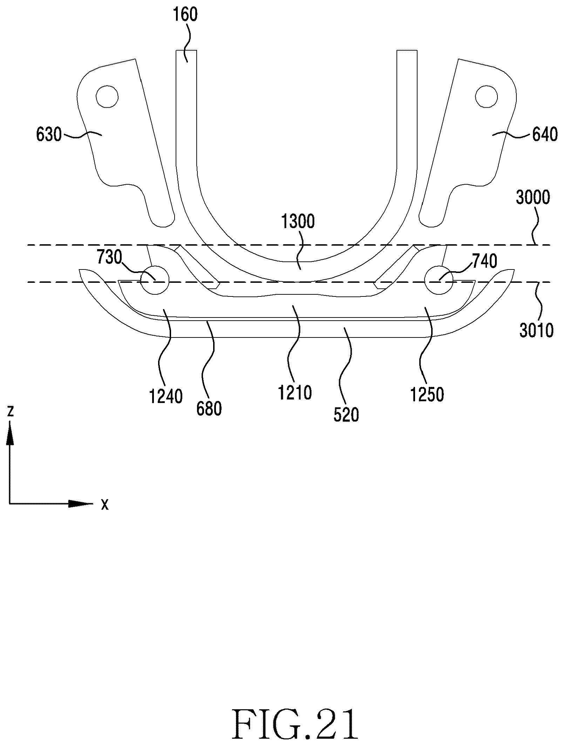

FIG. 21 is a cross-sectional view illustrating a cross section of a flexible display in a folded state of a foldable electronic device according to an embodiment.

According to an embodiment of the disclosure, as the second housing 120 and/or the third housing 130 rotates, the first sink arm 630 and/or the second sink arm 640 may rotate. As the first sink arm 630 and the second sink arm 640 rotate, the flexible display 160 may be folded. For example, as the state of the foldable electronic device 100 changes from the second state to the third state, the flexible display 160 may include a folding portion 1300 which is a folding region.

According to an embodiment of the disclosure, in the third state of the foldable electronic device 100, the folding portion 1300 of the flexible display 160 may be positioned between a virtual straight line 3000 connecting an upper portion of the fifth spiral portion 1240 and an upper portion of the sixth spiral portion 1250 of the sliding member 680 and the hinge housing 520. For example, in the third state of the foldable electronic device 100, the folding portion 1300 of the flexible display 160 may be positioned at least in part between the first shaft 730 and the second shaft 740. For example, in the third state of the foldable electronic device 100, the folding portion 1300 of the flexible display 160 may be disposed to contact a virtual straight line 3010 connecting the center of the first shaft 730 and the center of the second shaft 740. For example, as the state of the foldable electronic device 100 changes from the second state to the third state, the folding portion 1300 of the flexible display 160 may move toward the connection portion 1210 of the sliding member 680. In this way, a foldable electronic device with an optimized interlocking structure between parts within a defined space is achieved, ensuring that the electronic device developed cannot be over-rotated beyond the third state and preventing deviation from the hinge module.

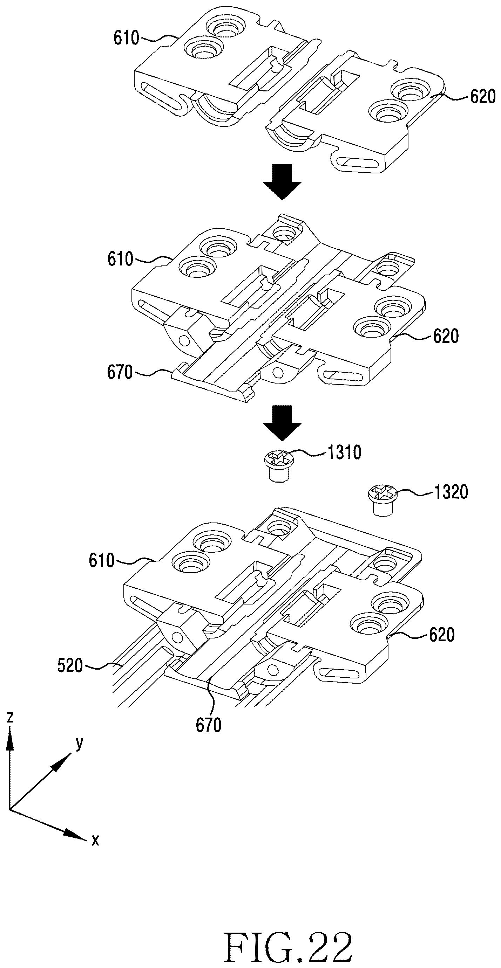

FIG. 22 is a diagram illustrating a process of coupling rotation arms, a rotation guide bracket and a hinge housing according to an embodiment.

According to an embodiment of the disclosure, the hinge module 510 may include the rotation guide bracket 670 for guiding the rotation of the first rotation arm 610 and the second rotation arm 620. The first rotation arm 610 may be disposed on one side of the rotation guide bracket 670. For example, the first rotation arm 610 may be seated on one side of the rotation guide bracket 670, and guided in rotation. The second rotation arm 620 may be disposed on the other side of the rotation guide bracket 670 opposite to one side. For example, the second rotation arm 620 may be disposed on the other side of the rotation guide bracket 670, and guided in rotation.

According to an embodiment of the disclosure, the hinge module 510 may be coupled to the hinge housing 520. For example, the hinge module 510 may be secured to the hinge housing 520 by coupling the rotation guide bracket 670 to the hinge housing 520. For example, the hinge module 510 may be secured to the hinge housing 520 through a first fastening member 1310 and a second fastening member 1320. For example, the first fastening member 1310 may be disposed on one edge adjacent to the second housing 120 of the rotation guide bracket 670. For example, the second fastening member 1320 may be disposed on the other edge adjacent to the third housing 130 of the rotation guide bracket 670 and opposite to one edge. In this way, a foldable electronic device with an optimized interlocking structure between parts within a defined space is achieved, ensuring that the electronic device developed cannot be over-rotated beyond the third state and preventing deviation from the hinge module.

FIG. 23 is a perspective view of a rotation guide bracket according to an embodiment.

According to an embodiment of the disclosure, a first rotation support portion 1410 and a third rotation support portion 1430 may be formed on one side of the rotation guide bracket 670. For example, at least a part of the first rotation arm 610 may be seated on the first rotation support portion 1410 and the third rotation support portion 1430 on one side of the rotation guide bracket 670 to be guided in rotation. For example, at least a part of the first rotation arm 610 may rotate along the first rotation support portion 1410 and the third rotation support portion 1430 of the rotation guide bracket 670. For example, the first rotation support portion 1410 and the third rotation support portion 1430 may be formed in a fan shape. For example, the first rotation arm 610 may rotate about a virtual center of the first rotation support portion 1410 and the third rotation support portion 1430 having the fan shape.

According to an embodiment of the disclosure, a second rotation support portion 1420 and a fourth rotation support portion 1440 may be formed on the other side of the rotation guide bracket 670 opposite to one side. For example, at least a part of the second rotation arm 620 may be seated on the second rotation support portion 1420 and the fourth rotation support portion 1440 on the other side of the rotation guide bracket 670 to be guided in rotation. For example, at least a part of the second rotation arm 620 may rotate along the second rotation support portion 1420 and fourth rotation support portion 1440 of the rotation guide bracket 670. For example, the second rotation support portion 1420 and the fourth rotation support portion 1440 may be formed in a fan shape. For example, the second rotation arm 620 may rotate about a virtual center of the second rotation support portion 1420 and the fourth rotation support portion 1440 having the fan shape.

According to an embodiment of the disclosure, the rotation guide bracket 670 may include a first opening 1450 formed on an edge of one side of the rotation guide bracket 670. For example, the first fastening member 1310 may be disposed to pass through the first opening 1450 of the rotation guide bracket 670. In an embodiment, the rotation guide bracket 670 may include a second opening 1460 formed on an edge of the other side of the rotation guide bracket 670. For example, the second fastening member 1320 may be disposed to pass through the second opening 1460 of the rotation guide bracket 670. In an embodiment, the rotation guide bracket 670 may be secured to the hinge housing 520, through the first fastening member 1310 disposed to pass through the first opening 1450 and the second fastening member 1320 disposed to pass through the second opening 1460.

According to an embodiment of the disclosure, the rotation guide bracket 670 may include a first fixing portion 1470 formed in a portion adjacent to the third rotation support portion 1430. For example, one end of the first shaft 730 may be coupled to the first fixing portion 1470 to connect with the rotation guide bracket 670. The rotation guide bracket 670 may include a second fixing portion 1480 formed in a portion adjacent to the fourth rotation support portion 1440. For example, one end of the second shaft 740 may be coupled to the second fixing portion 1480 to connect with the rotation guide bracket 670.

The coupling of the first fixing portion 1470 and the first shaft 730 and the coupling of the second fixing portion 1480 and the second shaft 740 shall be explained in FIG. 29 to be described. In this way, a foldable electronic device with an optimized interlocking structure between parts within a defined space is achieved, ensuring that the electronic device developed cannot be over-rotated beyond the third state and preventing deviation from the hinge module.

FIG. 24 is a perspective view of a first rotation arm according to an embodiment.

According to an embodiment of the disclosure, while only the shape of the first rotation arm 610 is depicted in FIG. 24, the second rotation arm 620 may be formed symmetrically to the first rotation arm 610.

According to an embodiment of the disclosure, the first rotation arm 610 may include a first rotation portion 1510 and a third rotation portion 1520 which are seated on the rotation guide bracket 670 to rotate. For example, at least a part of the first rotation portion 1510 may be seated on the first rotation support portion 1410 of the rotation guide bracket 670. For example, at least a part of the third rotation portion 1520 may be seated on the third rotation support portion 1430 of the rotation guide bracket 670. For example, the first rotation arm 610 may rotate, with at least a part of the first rotation portion 1510 overlapping the first rotation support portion 1410 of the rotation guide bracket 670 and at least a part of the third rotation portion 1520 overlapping the third rotation support portion 1430 of the rotation guide bracket 670. For example, the first rotation portion 1510 of the first rotation arm 610 may be formed to correspond to the shape of the first rotation support portion 1410 of the rotation guide bracket 670. For example, the third rotation portion 1520 of the first rotation arm 610 may be formed to correspond to the shape of the third rotation support portion 1430 of the rotation guide bracket 670.

According to an embodiment of the disclosure, the second rotation arm 620 may include a second rotation portion and a fourth rotation portion which are seated on the rotation guide bracket 670 to rotate. For example, at least a part of the second rotation portion may be seated on the second rotation support portion 1420 of the rotation guide bracket 670. For example, at least a part of the fourth rotation portion may be seated on the fourth rotation support portion 1440 of the rotation guide bracket 670. For example, the second rotation arm 620 may rotate, with at least a part of the second rotation portion overlapping the second rotation support portion 1420 of the rotation guide bracket 670 and at least a part of the fourth rotation portion overlapping the fourth rotation support portion 1440 of the rotation guide bracket 670. For example, the second rotation portion of the second rotation arm 620 may be formed to correspond to the shape of the second rotation support portion 1420 of the rotation guide bracket 670. For example, the fourth rotation portion of the second rotation arm 620 may be formed to correspond to the shape of the fourth rotation support portion 1440 of the rotation guide bracket 670.

According to an embodiment of the disclosure, the first rotation arm 610 may include at least one third opening 1530 extending from the portion in which the first rotation portion 1510 and the third rotation portion 1520 are formed, and formed in a portion adjacent to the second housing 120. For example, the first rotation arm 610 may be connected to the second housing 120 through the at least one third opening 1530. For example, the first rotation arm 610 may be coupled to the second housing 120 through at least one fastening member disposed to pass through the at least one third opening 1530. The first rotation arm 610 coupled to the second housing 120 may rotate as the second housing 120 rotates.

According to an embodiment of the disclosure, the second rotation arm 620 may include at least one fourth opening extending from the portion in which the second rotation portion and the fourth rotation portion are formed, and formed in a portion adjacent to the third housing 130. For example, the second rotation arm 620 may be connected to the third housing 130 through the at least one fourth opening. For example, the second rotation arm 620 may be coupled to the third housing 130 through at least one fastening member disposed to pass through the at least one fourth opening. The second rotation arm 620 coupled to the third housing 130 may rotate as the third housing 130 rotates.

According to an embodiment of the disclosure, the first rotation arm 610 may include a first seating portion 1540 formed at a position adjacent to the first rotation portion 1510 and a second seating portion 1550 formed at a position adjacent to the third rotation portion 1520. For example, while the first rotation arm 610 is rotated, the foldable electronic device 100 may not be over-rotated more than the third state by the first seating portion 1540 and the second seating portion 1550. For example, in the third state of the foldable electronic device 100, the first seating portion 1540 and the second seating portion 1550 may contact a part of the hinge housing 520. For example, the first seating portion 1540 and the second seating portion 1550 may be formed with a surface for contacting the part of the hinge housing 520.

According to an embodiment of the disclosure, the second rotation arm 620 may include a third seating portion formed at a position adjacent to the second rotation portion and a fourth seating portion formed at a position adjacent to the fourth rotation portion. For example, while the second rotation arm 620 is rotated, the foldable electronic device 100 may not be over-rotated more than the third state by the third seating portion and the fourth seating portion and the fourth seating portion. For example, in the third state of the foldable electronic device 100, the third seating portion and the fourth seating portion may contact another part of the hinge housing 520 which is opposite to a part of the hinge housing 520. For example, the third seating portion and the fourth seating portion may be formed with a surface for contacting another part of the hinge housing 520.

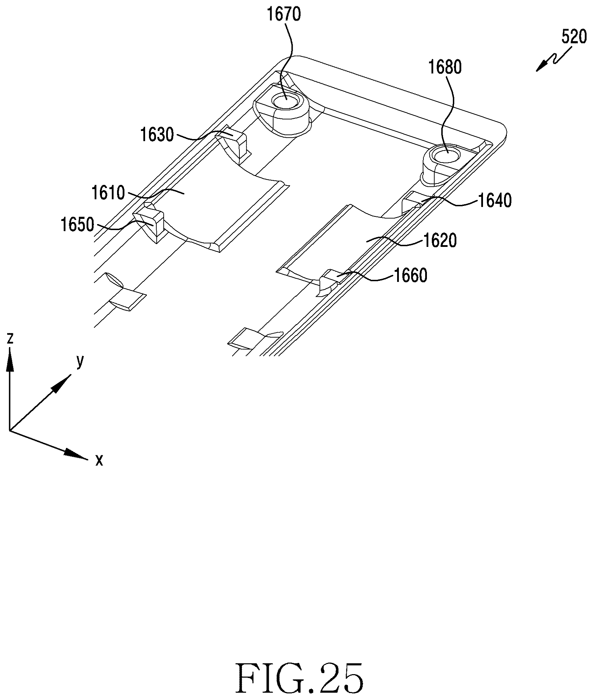

The structure of the hinge housing 520 contacting the first seating portion 1540 and the second seating portion 1550 shall be explained in FIG. 25 to be described.

According to an embodiment of the disclosure, the first rotation arm 610 may include a first sliding hole 1560 into which a first interlocking pin 710 may be inserted. For example, as the first interlocking pin 710 inserted into the first sliding hole 1560 is connected to the first sink arm 630 and the third sink arm 650, the first rotation arm may rotate together with the first sink arm 630 and the third sink arm 650. For example, the first interlocking pin 710 inserted in the first sliding hole 1560 may be disposed to pass through the first insertion hole 1040 of the first sink arm 630, the second insertion hole 1050 of the first sink arm 630, and the fifth insertion hole 1140 of the third sink arm 650, and thus connect the first rotation arm 610, the first sink arm 630 and the third sink arm 650.

According to an embodiment of the disclosure, the second rotation arm 620 may include a second sliding hole into which the second interlocking pin 720 may be inserted. For example, as the second interlocking pin 720 inserted into the second sliding hole is connected to the second sink arm 640 and the fourth sink arm 660, the second rotation arm may rotate together with the second sink arm 640 and the fourth sink arm 660. For example, the second interlocking pin 720 inserted in the second sliding hole may be disposed to pass through the third insertion hole of the second sink arm 640, the fourth insertion hole of the second sink arm 640, and the sixth insertion hole of the fourth sink arm 660, and thus connect the second rotation arm 620, the second sink arm 640 and the fourth sink arm 660.

The interlocking structure of the first rotation arm 610, the first sink arm 630 and the third sink arm 650 by the first interlocking pin 710 shall be explained in FIG. 30 through FIG. 32 to be described. In this way, a foldable electronic device with an optimized interlocking structure between parts within a defined space is achieved, ensuring that the electronic device developed cannot be over-rotated beyond the third state and preventing deviation from the hinge module.

FIG. 25 is a perspective view of a hinge housing according to an embodiment.

According to an embodiment of the disclosure, the hinge housing 520 may include a first rotation guide portion 1610 formed on one side. The first rotation guide portion 1610 of the hinge housing 520 may guide the rotation of the first rotation arm 610. For example, a portion of the first rotation arm 610 between the first rotation portion 1510 and the third rotation portion 1520 may rotate along the first rotation guide portion 1610 of the hinge housing 520.

According to an embodiment of the disclosure, the hinge housing 520 may include a second rotation guide portion 1620 formed on the other side opposite to one side. The second rotation guide portion 1620 of the hinge housing 520 may guide the rotation of the second rotation arm 620. For example, a portion of the second rotation arm 620 between the second rotation portion and the fourth rotation portion may rotate along the second rotation guide portion 1620 of the hinge housing 520.

According to an embodiment of the disclosure, the hinge housing 520 may include a first stopper 1630 formed on one side of the first rotation guide portion 1610 and a third stopper 1650 formed on the other side opposite to one side of the first rotation guide portion 1610. For example, the first stopper 1630 and the third stopper 1650 may include a protruding portion. For example, the protruding portion of the first stopper 1630 may include a surface for contacting the first seating portion 1540 of the first rotation arm 610. For example, the protruding portion of the third stopper 1650 may include a surface for contacting the third seating portion 1550 of the first rotation arm 610. According to an embodiment, in the third state of the foldable electronic device 100, as the first seating portion 1540 and the third seating portion 1550 of the first rotation arm 610 contact the first stopper 1630 and the third stopper 1650 of the hinge housing 520 respectively, the over-rotation of the first rotation arm 610 may be prevented.

According to an embodiment of the disclosure, the hinge housing 520 may include a second stopper 1640 formed on one side of the second rotation guide portion 1620 and a fourth stopper 1660 formed on the other side opposite to one side of the second rotation guide portion 1620. For example, the second stopper 1640 and the fourth stopper 1660 may include a protruding portion. For example, the protruding portion of the second stopper 1640 may include a surface for contacting the second seating portion of the second rotation arm 620. For example, the protruding portion of the fourth stopper 1660 may include a surface for contacting the fourth seating portion of the second rotation arm 620. According to an embodiment, in the third state of the foldable electronic device 100, as the second seating portion and the fourth seating portion of the second rotation arm 620 contact the second stopper 1640 the fourth stopper 1660 of the hinge housing 520 respectively, the over-rotation of the second rotation arm 620 may be prevented.

According to an embodiment of the disclosure, the hinge housing 520 may include a first fastening portion 1670 formed on an edge of one side of the hinge housing 520. For example, the edge of one side of the hinge housing 520 may be formed at a position adjacent to the second housing 120. According to an embodiment, the first fastening member 1310 disposed to pass through the first opening 1450 of the rotation guide bracket 670 may be inserted into the first fastening portion 1670 of the hinge housing 520. For example, by inserting the first fastening member 1310 into the first fastening portion 1670 of the hinge housing 520, one side of the hinge module 510 may be secured to the hinge housing 520.

According to an embodiment of the disclosure, the hinge housing 520 may include a second fastening portion 1680 formed on an edge of the other side which is opposite to one side of the hinge housing 520. For example, the edge of the other side of the hinge housing 520 may be formed at a position adjacent to the third housing 130. According to an embodiment, the second fastening member 1320 disposed to pass through the second opening 1460 of the rotation guide bracket 670 may be inserted into the second fastening portion 1680 of the hinge housing 520. For example, by inserting the second fastening member 1320 into the second fastening portion 1680 of the hinge housing 520, the other side of the hinge module 510 may be secured to the hinge housing 520. In this way, a foldable electronic device with an optimized interlocking structure between parts within a defined space is achieved, ensuring that the electronic device developed cannot be over-rotated beyond the third state and preventing deviation from the hinge module.

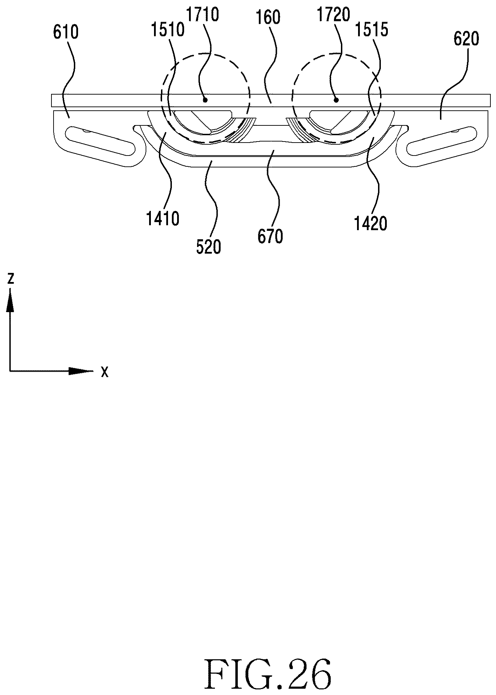

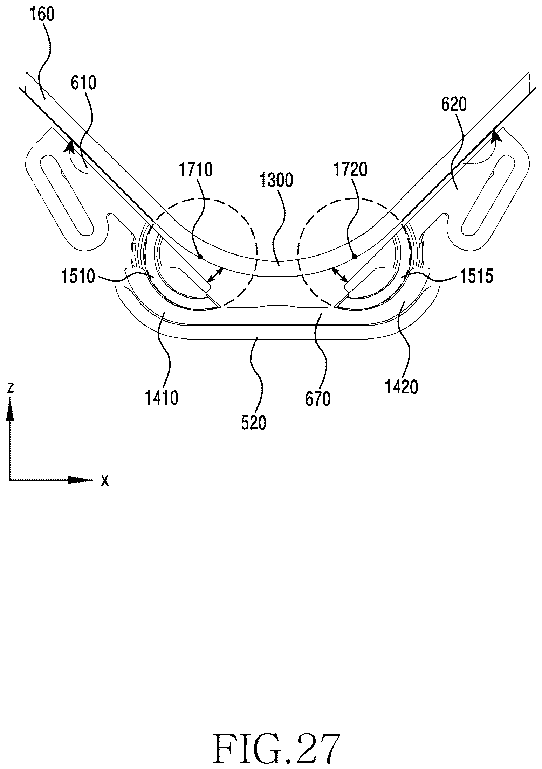

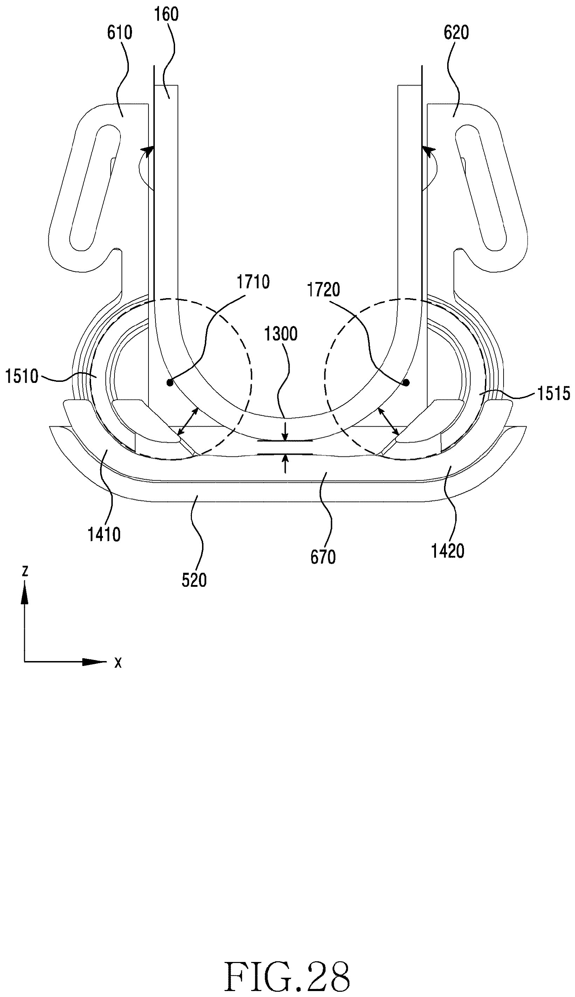

FIG. 26 is a cross-sectional view of a hinge module supporting a flexible display in an unfolded state of a foldable electronic device according to an embodiment. FIG. 27 is a cross-sectional view of a hinge module supporting a flexible display while a foldable electronic device is folded according to an embodiment. FIG. 28 is a cross-sectional view of a hinge module supporting a flexible display in a folded state of a foldable electronic device according to an embodiment.

According to an embodiment of the disclosure, the first rotation portion 1510 of the first rotation arm 610 may be guided by the first rotation support portion 1410 of the rotation guide bracket 670, to rotate about a first rotation axis 1710. The second rotation portion 1515 of the second rotation arm 620 may be guided by the second rotation support portion 1420 of the rotation guide bracket 670, to rotate about a second rotation axis 1720. The first rotation axis 1710 of the first rotation arm 610 and the second rotation axis 1720 of the second rotation arm 620 may be formed side by side.

According to an embodiment of the disclosure, the first rotation axis 1710 of the first rotation arm 610 and the second rotation axis 1720 of the second rotation arm 620 may be formed inside the flexible display 160 or at positions adjacent to the flexible display 160. For example, as the first rotation axis 1710 and the second rotation axis 1720 are formed inside the flexible display 160 or at the positions adjacent to the flexible display 160, the flexible display 160 may be easily folded.

According to an embodiment of the disclosure, referring to FIG. 26 through FIG. 28, while the foldable electronic device 100 is folded, the flexible display 160 may be supported at least in part by the first rotation arm 610 and the second rotation arm 620. For example, as the foldable electronic device 100 is folded, the folding portion 1300 of the flexible display may be folded. For example, other regions than the folding portion 1300 among regions of the flexible display 160 may be supported at least in part by the first rotation arm 610 and the second rotation arm 620.

According to an embodiment of the disclosure, while the foldable electronic device 100 is folded, the folding portion 1300 of the flexible display 160 may move in a direction toward the rotation guide bracket 670. For example, referring to FIG. 27 and FIG. 28, with the foldable electronic device 100 folded, the folding portion 1300 of the flexible display 160 may be positioned at least in part between a virtual straight line connecting the first rotation axis 1710 and the second rotation axis 1720 and the rotation guide bracket 670.

According to an embodiment of the disclosure, referring to FIG. 27, while the foldable electronic device 100 is folded, the folding portion 1300 of the flexible display 160 may be disposed a specific distance away from the first rotation portion 1510 of the first rotation arm 610 and the second rotation portion 1515 of the second rotation arm 620. For example, referring to FIG. 28, in the folded state of the foldable electronic device 100, the folding portion 1300 of the flexible display 160 may be disposed a specific distance away from the rotation guide bracket 670. While the foldable electronic device 100 changes the state from the unfolded state to the folded state, since the folding portion 1300 of the flexible display 160 is disposed the specific distance away from the rotation guide bracket 670, the folding portion 1300 of the flexible display 160 may not be deformed by the force applied by the rotation guide bracket 670. In this way, a foldable electronic device with an optimized interlocking structure between parts within a defined space is achieved, ensuring that the electronic device developed cannot be over-rotated beyond the third state and preventing deviation from the hinge module.

FIG. 29 is a diagram illustrating coupling of a rotation arm and a sink arm having different rotation axes according to an embodiment.

According to an embodiment of the disclosure, the first rotation arm 610 may be seated on one side of the rotation guide bracket 670 to rotate about the first rotation axis 1710. The second rotation arm 620 may be seated to the other side opposite to one side of the rotation guide bracket 670 to rotate about the second rotation axis 1720 parallel to the first rotation axis 1710.

According to an embodiment of the disclosure, the first sink arm 630 may rotate about the first shaft 730 as a third rotation axis 1810. The second sink arm 640 may rotate about the second shaft 740 as a fourth rotation axis 1820. For example, the third rotation axis 1810 and the fourth rotation axis 1820 may be formed in parallel to each other. For example, the third rotation axis 1810 may be formed at a different position from the first rotation axis 1710. For example, the fourth rotation axis 1820 may be formed at a different position from the second rotation axis 1720. For example, the first rotation axis 1710 and the third rotation axis 1810 may be formed in parallel to each other. For example, the second rotation axis 1720 and the fourth rotation axis 1820 may be formed in parallel to each other.

According to an embodiment of the disclosure, as the first rotation axis 1710 of the first rotation arm 610 and the third rotation axis 1810 of the first sink arm 630 are formed at different positions, the hinge module 510 may include a configuration allowing the first rotation arm 610 and the first sink arm 630 to rotate together. For example, the hinge module 510 may include the first interlocking pin 710 for connecting the first rotation arm 610 and the first sink arm 630. In an embodiment, as the first rotation arm 610 and the first sink arm 630 are connected through the first interlocking pin 710, the first rotation arm 610 and the first sink arm 630 may rotate together. For example, as the second housing rotates, the first rotation arm 610 may rotate, and as the first rotation arm 610 rotates, the first sink arm 630 connected to the first rotation arm 610 through the first interlocking pin 710 may rotate.

According to an embodiment of the disclosure, as the second rotation axis 1720 of the second rotation arm 620 and the fourth rotation axis 1820 of the second sink arm 640 are formed at different positions, the hinge module 510 may include a configuration allowing the second rotation arm 620 and the second sink arm 640 to rotate together. For example, the hinge module 510 may include the second interlocking pin 720 for connecting the second rotation arm 620 and the second sink arm 640. In an embodiment, as the second rotation arm 620 and the second sink arm 640 are connected through the second interlocking pin 720, the second rotation arm 620 and the second sink arm 640 may rotate together. For example, as the third housing rotates, the second rotation arm 620 may rotate, and as the second rotation arm 620 rotates, the second sink arm 640 connected to the second rotation arm 620 through the second interlocking pin 720 may rotate.

According to an embodiment of the disclosure, while the first sink arm 630 is rotated, the first shaft 730 may be secured to the rotation guide bracket 670 to block the first shaft 730 corresponding to the third rotation axis 1810 of the first sink arm 630 from deviating from the hinge module 510. For example, one end of the first shaft 730 may be inserted into a first fixing portion 1470 provided on one side of the rotation guide bracket 670. By inserting one end of the first shaft 730 into the first fixing portion 1470 of the rotation guide bracket 670, the first sink arm 630 may be stably rotated with the first rotation arm 610.

According to an embodiment of the disclosure, while the second sink arm 640 is rotated, the second shaft 740 may be secured to the rotation guide bracket 670 to block the second shaft 740 corresponding to the fourth rotation axis 1820 of the second sink arm 640 from deviating from the hinge module 510. For example, one end of the second shaft 740 may be inserted into a second fixing portion 1480 provided on the other side of the rotation guide bracket 670. By inserting one end of the second shaft 740 into the second fixing portion 1480 of the rotation guide bracket 670, the second sink arm 640 may be stably rotated with the second rotation arm 620. In this way, a foldable electronic device with an optimized interlocking structure between parts within a defined space is achieved, ensuring that the electronic device developed cannot be over-rotated beyond the third state and preventing deviation from the hinge module.

The rotation process of the first rotation arm 610 and the first sinking arm 630 by the first interlocking pin 710 shall be explained in FIG. 30 through FIG. 32 to be described.

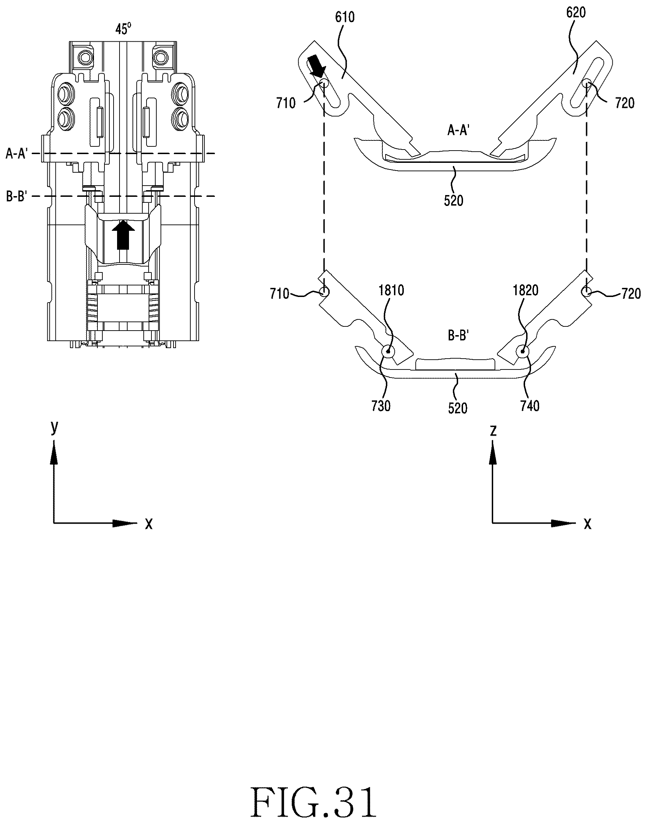

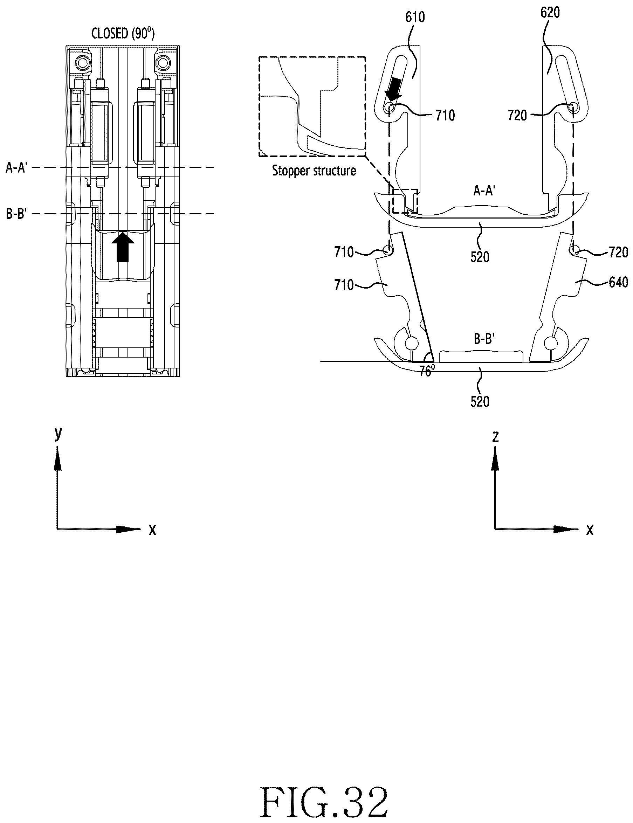

FIG. 30 is a cross-sectional view of a foldable electronic device in an unfolded state of the foldable electronic device according to an embodiment. FIG. 31 is a cross-sectional view of a foldable electronic device while the foldable electronic device is folded according to an embodiment. FIG. 32 is a cross-sectional view of a foldable electronic device in a folded state of the foldable electronic device according to an embodiment.

Referring to FIG. 30 through FIG. 32, according to an embodiment, the first rotation axis 1710 of the first rotation arm 610 may be different from the third rotation axis 1810 of the first sink arm 630 and the third sink arm 650. The second rotation axis 1720 of the second rotation arm 620 may be different from the fourth rotation axis 1820 of the second sink arm 640 and the fourth sink arm 660.

According to an embodiment of the disclosure, as the first rotation axis 1710 and the third rotation axis 1810 are formed at different positions, a rotational radius from the first rotation axis 1710 to the first interlocking pin 710 and a rotational radius from the third rotation axis 1810 to the first interlocking pin 710 may be different. For example, the rotational radius from the first rotation axis 1710 to the first interlocking pin 710 may be greater than the rotational radius from the third rotation axis 1810 to the first interlocking pin 710. For example, the rotational radius of the first rotation arm 610 may be greater than the rotational radius of the first sink arm 630 and the third sink arm 650.

According to an embodiment of the disclosure, as the second rotation axis 1720 and the fourth rotation axis 1820 are formed at different positions, a rotational radius from the second rotation axis 1720 to the second interlocking pin 720 and a rotational radius from the fourth rotation axis 1820 to the second interlocking pin 720 may be different. For example, the rotational radius from the second rotation axis 1720 to the second interlocking pin 720 may be greater than the rotational radius from the fourth rotation axis 1820 to the second interlocking pin 720. For example, the rotational radius of the second rotation arm 620 may be greater than the rotational radius of the second sink arm 640 and the fourth sink arm 660.

According to an embodiment of the disclosure, the first rotation arm 610 and the first sink arm 630 having the different rotational radii may be coupled by the first interlocking pin 710. For example, the first rotation arm 610 and the first sink arm 630 may be slidably coupled by the first interlocking pin 710. For example, while the first rotation arm 610 and the first sink arm 630 are interlocked to rotate, the first interlocking pin 710 may slide within the first sliding hole 1560, to thus maintain the coupling of the first rotation arm 610 and the first sink arm 630 and to allow the first rotation arm 610 and the first sink arm 630 to rotate together.

According to an embodiment of the disclosure, the second rotation arm 620 and the second sink arm 640 having the different rotational radii may be coupled by the second interlocking pin 720. For example, the second rotation arm 620 and the second sink arm 640 may be slidably coupled by the second interlocking pin 720. For example, while the second rotation arm 620 and the second sink arm 640 are interlocked to rotate, the second interlocking pin 720 may slide within the second sliding hole 1565, to thus maintain the coupling of the second rotation arm 620 and the second sink arm 640 and to allow the second rotation arm 620 and the second sink arm 640 to rotate together.

In an embodiment, as the first rotation arm 610 rotates, the first interlocking pin 710 may move inside the first sliding hole 1560 of the first rotation arm 610. For example, as the first rotation arm 610 rotates, the first interlocking pin 710 may slide along the first sliding hole 1560. In an embodiment, as the second rotation arm 620 rotates, the second interlocking pin 720 may move inside the second sliding hole 1565 of the second rotation arm 620. For example, as the second rotation arm 620 rotates, the second interlocking pin 720 may slide along the second sliding hole 1565.

Referring to FIG. 30 through FIG. 32, the first rotation axis 1710 of the first rotation arm 610 and the third rotation axis 1810 of the first sink arm 630 may be formed at different positions, and accordingly the rotational radius or the rotation angle of the first rotation arm 610 and the rotational radius or the rotation angle of the first sink arm 630 may differ from each other. The first interlocking pin 710 may slide within the first sliding hole 1560 to allow the first sink arm 630 to rotate in association with the first rotation arm 610. The shape of the first sliding hole 1560 may be formed based on the rotational radius or the rotation angle of the first sink arm 630. For example, as the rotation angle of the first sink arm 630 increases, the size of the first sliding hole 1560 may increase. For example, if the rotation angle of the first sink arm 630 increases, the size of the first sliding hole 1560 may increase, and if the size of the first sliding hole 1560 increases, the overall size of the hinge module 510 may increase. If the size of the hinge module 510 increases, it may be difficult to manufacture the foldable electronic device 100 to be thin. For example, if the first rotation arm 610 may rotate from 0 degrees to 90 degrees with respect to the hinge housing 520, the first sliding hole 1560 may be formed to allow the first sink arm 630 to rotate from 0 degrees to about 80 degrees with respect to the hinge housing 520.

According to an embodiment of the disclosure, referring to FIG. 30, with the foldable electronic device 100 unfolded, the first interlocking pin 710 connected to the first rotation arm 610 and the first sink arm 630 may be positioned on one side of the first sliding hole 1560. In an embodiment, referring to FIG. 31, while the foldable electronic device 100 is folded, as the first interlocking pin 710 slides inside the first sliding hole 1560, the first interlocking pin 710 may be positioned between one side and the other side of the first sliding hole 1560. In an embodiment, referring to FIG. 32, with the foldable electronic device 100 unfolded, the first interlocking pin 710 may be positioned on the other side of the first sliding hole 1560. For example, referring to FIG. 32, with the foldable electronic device 100 unfolded, the angle of the first sink arm 630 to the hinge housing 520 may be about 76 degrees. For example, in the unfolded state of the foldable electronic device 100, the first sliding hole 1560 may be formed smaller, by forming the angle of the first sink arm 630 to the hinge housing 520 to be smaller than the angle of the first rotation arm 610 to the hinge housing 520. In this way, a foldable electronic device with an optimized interlocking structure between parts within a defined space is achieved, ensuring that the electronic device developed cannot be over-rotated beyond the third state and preventing deviation from the hinge module.

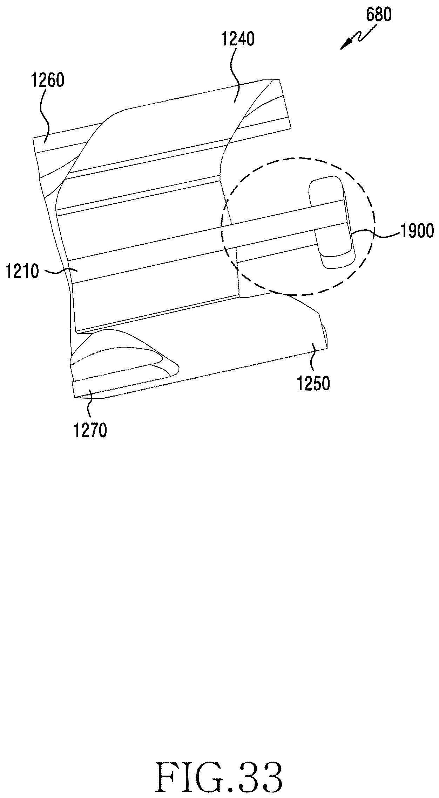

FIG. 33 is a perspective view of a sliding member including a rib according to an embodiment.

According to an embodiment of the disclosure, the connection portion 1210 of the sliding member 680 may include a rib 1900 protruding from the connection portion 1210. For example, the rib 1900 may include a first portion extending from the connection portion 1210 and a second portion formed with a width greater than a width of the first portion. For example, the width of the first portion and the width of the second portion of the rib 1900 may correspond to a length in the direction perpendicular to the movement direction of the sliding member 680. For example, the second portion may be a portion protruding in the direction perpendicular to the movement direction of the sliding member 680. In this way, a foldable electronic device with an optimized interlocking structure between parts within a defined space is achieved, ensuring that the electronic device developed cannot be over-rotated beyond the third state and preventing deviation from the hinge module.

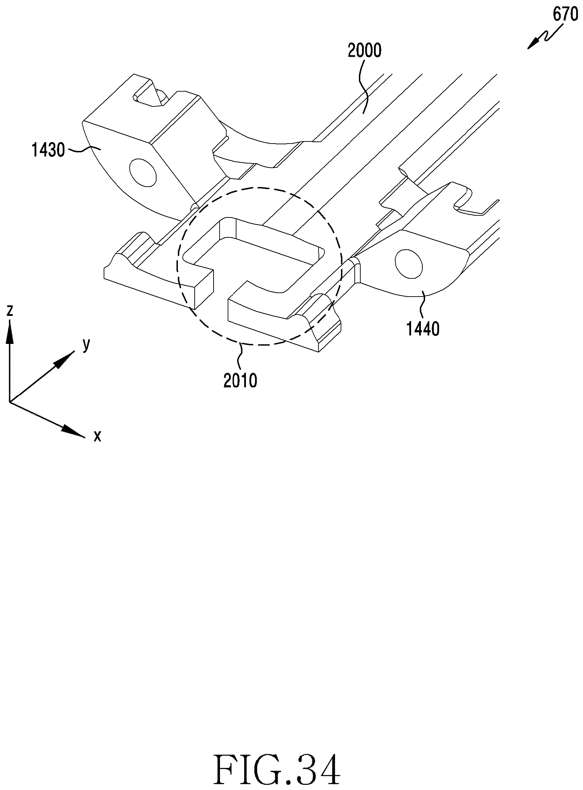

FIG. 34 is a perspective view of a rotation guide bracket including a rib guide portion according to an embodiment.

According to an embodiment of the disclosure, the rotation guide bracket 670 may include a center portion 2000 formed to extend in a direction aligned with the first rotation axis 1710 of the first rotation arm 610 and the second rotation axis 1720 of the second rotation arm 620. For example, the third rotation support portion 1430 may be formed on one side of the center portion 2000. For example, the fourth rotational support portion 1440 may be formed on the other side opposite to one side of the center portion 2000.

According to an embodiment of the disclosure, the rotation guide bracket 670 may include a rib guide portion 2010 formed in a portion adjacent to the third rotation support portion 1430 and the fourth rotation support portion 1440 among portions perpendicular to one side of the center portion 2000 and the other side of the center portion 2000. For example, the rib guide portion 2010 may include a space for moving the second portion of the rib 1900 of the sliding member 680. For example, the rib guide portion 2010 may include a portion for guiding the first portion of the rib 1900 of the sliding member 680 to allow the second portion of the rib 1900 of the sliding member 680 to translationally move in the rib guide portion 2010. In this way, a foldable electronic device with an optimized interlocking structure between parts within a defined space is achieved, ensuring that the electronic device developed cannot be over-rotated beyond the third state and preventing deviation from the hinge module.

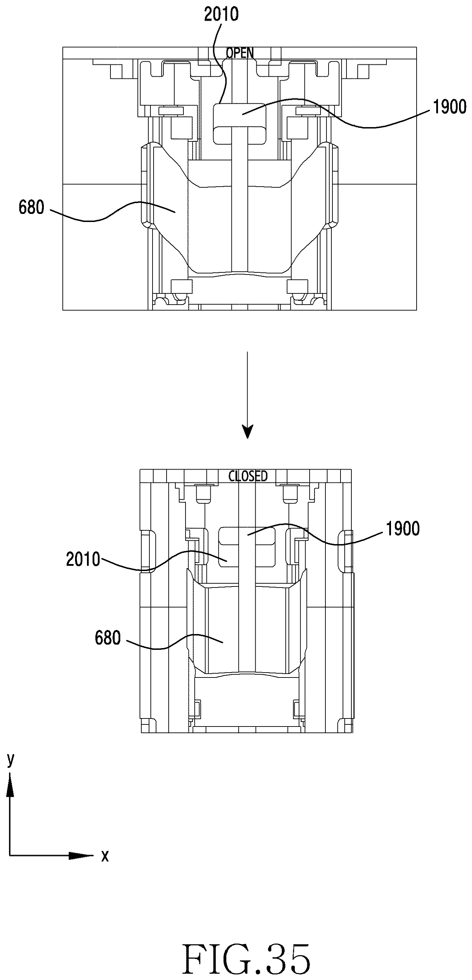

FIG. 35 is a diagram illustrating movement of a rib of a sliding member within a rib guide portion of a rotation guide bracket according to an embodiment.

According to an embodiment of the disclosure, with the foldable electronic device 100 unfolded, one side of the second portion of the rib 1900 of the sliding member 680 may be disposed to contact one side of the rib guide portion 2010 of the rotation guide bracket 670. In an embodiment, as the second housing 120 and/or the third housing 130 rotates, the first sink arm 630, the second sink arm 640, the third sink arm 650 and/or the fourth sink arm 660 may rotate. As the first sink arm 630, the second sink arm 640, the third sink arm 650 and/or the fourth sink arm 660 rotate, the sliding member 680 may move in a direction aligned with the rotation axis of the first sink arm 630, the second sink arm 640, the third sink arm 650 and/or the fourth sink arm 660.

According to an embodiment of the disclosure, with the foldable electronic device 100 folded, the other side opposite to one side of the second portion of the rib 1900 of the sliding member 680 may be disposed to contact the other side of the rib guide portion 2010 of the rotation guide bracket 670. Since the other side of the second portion of the rib 1900 contacts the other side of the rib guide portion 2010, the over-rotation of the foldable electronic device 100 may be prevented.

According to an embodiment of the disclosure, the width of the space of the rib guide portion 2010 for accommodating the rib 1900 of the sliding member 680 of the rotation guide bracket 670 may be formed to correspond to the movement distance of the sliding member 680. For example, the width of the space of the rib guide portion 2010 may correspond to the length of the movement direction of the sliding member 680. In this way, a foldable electronic device with an optimized interlocking structure between parts within a defined space is achieved, ensuring that the electronic device developed cannot be over-rotated beyond the third state and preventing deviation from the hinge module.

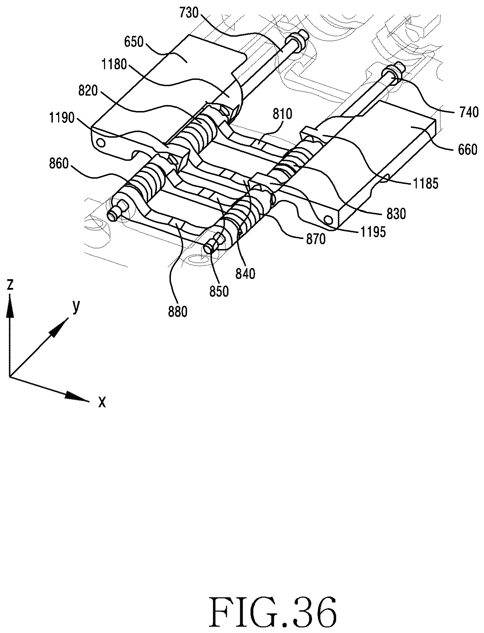

FIG. 36 is a perspective view of a hinge module with a sink arm and a cam structure coupled according to an embodiment.

According to an embodiment of the disclosure, the third sink arm 650 may include the third through hole 1150 coupled with the first shaft 730. The third sink arm 650 may include the first cam portion 1180 formed in the portion surrounding the third through hole 1150. For example, the first cam portion 1180 may be formed on a surface facing a direction parallel to the third rotation axis 1810 of the third sink arm 650 in the portion surrounding the third through hole 1150.

According to an embodiment of the disclosure, the fourth sink arm 660 may include the fourth through hole coupled with the second shaft 740. The fourth sink arm 660 may include a second cam portion 1185 in a portion surrounding the fourth through hole. For example, the second cam portion 1185 may be formed on a surface facing a direction parallel to the fourth rotation axis 1820 of the fourth sink arm 660 in the portion surrounding the fourth through hole.

According to an embodiment of the disclosure, the hinge module 510 may include the first cam member 810 including a first portion formed to face the first cam portion 1180 of the third sink arm 650, a second portion disposed to face the second cam portion 1185 of the fourth sink arm 660, and a body portion for connecting the first portion and the second portion. For example, the first portion of the first cam member 810 may include a cam portion corresponding to the first cam portion 1180 of the third sink arm 650. For example, the second portion of the first cam member 810 may be formed to correspond to the second cam portion 1185 of the fourth sink arm 660. For example, the body portion connecting the first portion and the second portion of the first cam member 810 may be convexly formed in a direction facing the hinge housing 520. For example, the body portion of the first cam member 810 may be disposed perpendicular to the third rotation axis 1810 and the fourth rotation axis 1820.

The shape of the cam portion of the first cam member 810 and the shape of the first cam portion 1180 shall be explained in FIG. 37 to be described.

According to an embodiment of the disclosure, the hinge module 510 may include the first elastic member 820 disposed to contact the first cam member 810. For example, as the first cam portion 1180 of the third sink arm 650 contacts the cam portion of the first portion of the first cam member 810, the first elastic member 820 may be compressed in a direction aligned with the third rotation axis 1810 and the fourth rotation axis 1820.

According to an embodiment of the disclosure, the hinge module 510 may include the second elastic member 830 disposed to contact the first cam member 810. For example, as the second cam portion 1185 of the fourth sink arm 660 contacts the cam portion of the second portion of the first cam member 810, the second elastic member 830 may be compressed in a direction aligned with the third rotation axis 1810 and the fourth rotation axis 1820.

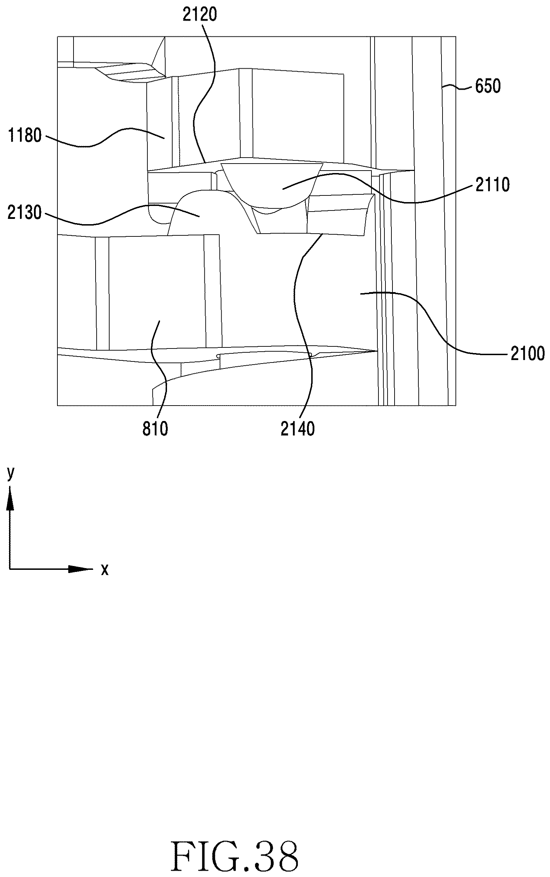

The process in which the first elastic member 820 and the second elastic member 830 are compressed by the first cam member 810 shall be explained in FIG. 38 through FIG. 40 to be described.

According to an embodiment of the disclosure, the hinge module 510 may include the first shaft bracket 840 including a first portion for supporting the first elastic member 820, a second portion for supporting the second elastic member 830, and a connection portion for connecting the first portion and the second portion. For example, the first portion of the first shaft bracket 840 may include a flat surface for supporting the first elastic member 820. For example, the second portion of the first shaft bracket 840 may include a flat surface for supporting the second elastic member 830. For example, the connection portion of the first shaft bracket 840 may be convexly formed toward the hinge housing 520.

According to an embodiment of the disclosure, a surface opposite to the surface supporting the first elastic member 820 in the first portion of the first shaft bracket 840 may be supported by a portion including the fifth through hole 1160 of the third sink arm 650. In an embodiment, the opposite surface of the surface supporting the second elastic member 830 in the second portion of the first shaft bracket 840 may be supported by a portion including the sixth through hole 1160 of the fourth sink arm 660.

According to an embodiment of the disclosure, the third sink arm 650 may include the fifth through hole 1160 coupled with the first shaft 730. The third sink arm 650 may include the third cam portion 1190 formed in a portion surrounding the fifth through hole 1160. For example, the third cam portion 1190 may be formed on a surface facing a direction parallel to the third rotation axis 1810 of the third sink arm 650 in the portion surrounding the fifth through hole 1160.

According to an embodiment of the disclosure, the fourth sink arm 660 may include a sixth through hole coupled with the second shaft 740. The fourth sink arm 660 may include a fourth cam portion 1195 in a portion surrounding the sixth through hole. For example, the fourth cam portion 1195 may be formed on a surface facing a direction parallel to the fourth rotation axis 1820 of the fourth sink arm 660 in the portion surrounding the sixth through hole.

According to an embodiment of the disclosure, the hinge module 510 may include the second cam member 850 including a first portion formed to face the third cam portion 1190 of the third sink arm 650, a second portion disposed to face the fourth cam portion 1195 of the fourth sink arm 660, and a connection portion for connecting the first portion and the second portion. For example, the first portion of the second cam member 850 may include a cam portion corresponding to the third cam portion 1190 the third sink arm 650. For example, the second portion of the second cam member 850 may be formed to correspond to the fourth cam portion 1195 the fourth sink arm 660. For example, the body portion connecting the first portion and the second portion of the second cam member 850 may be convexly formed in a direction toward the hinge housing 520. For example, the body portion of the second cam member 850 may be disposed perpendicular to the third rotation axis 1810 and the fourth rotation axis 1820.

The shape of the cam portion of the second cam member 850 and the shape of the third cam portion 1190 shall be explained in FIG. 37 to be described.

According to an embodiment of the disclosure, the hinge module 510 may include the third elastic member 860 disposed to contact the second cam member 850. For example, as the third cam portion 1190 of the third sink arm 650 contacts the cam portion of the first portion of the second cam member 850, the third elastic member 860 may be compressed in a direction aligned with the third rotation axis 1810 and the fourth rotation axis 1820.

According to an embodiment of the disclosure, the hinge module 510 may include the fourth elastic member 870 disposed to contact the second cam member 850. For example, as the second cam portion 1185 of the fourth sink arm 660 contacts the cam portion of the second portion of the second cam member 850, the fourth elastic member 870 may be compressed in a direction aligned with the third rotation axis 1810 and the fourth rotation axis 1820.

The process in which the third elastic member 860 and the fourth elastic member 870 are compressed by the second cam member 850 shall be explained in FIG. 38 through FIG. 40 to be described.

According to an embodiment of the disclosure, the hinge module 510 may include the second shaft bracket 880 including a first portion for supporting the third elastic member 860, a second portion for supporting the fourth elastic member 870, and a connection portion for connecting the first portion and the second portion. For example, the first portion of the second shaft bracket 880 may include a flat surface for supporting the third elastic member 860. For example, the second portion of the second shaft bracket 880 may include a flat surface for supporting the fourth elastic member 870. For example, the connection portion of the second shaft bracket 880 may be convexly formed toward the hinge housing 520. In this way, a foldable electronic device with an optimized interlocking structure between parts within a defined space is achieved, ensuring that the electronic device developed cannot be over-rotated beyond the third state and preventing deviation from the hinge module.

FIG. 37 is a diagram illustrating a first cam portion of a third sink arm and a third cam portion of a first cam member according to an embodiment.

Although only the shape of the first cam portion 1180 of the third sink arm 650 and the fifth cam portion 2100 of the first portion of the first cam member 810 are depicted in FIG. 37, the third cam portion 1190 of the third sink arm 650, the second cam portion of the second sink arm 640, the fourth cam portion of the second sink arm 640, the sixth cam portion of the first cam member 810, the seventh cam portion of the first portion of the second cam member 850, and the eighth cam portion of the second cam portion of the second cam member 850 may be implemented in the same shape.

According to an embodiment of the disclosure, the first cam portion 1180 may be formed on a surface facing a direction parallel to the third rotation axis 1810 of the third sink arm 650 in the portion of the portion surrounding the fifth through hole 1160 of the third sink arm 650. For example, the first cam portion 1180 of the third sink arm 650 may include a first convex portion 2110 and a first concave portion 2120. For example, referring to FIG. 37, if the first convex portion 2110 is provided in a plural number and the first concave portion 2120 is provided in a plural number, the single first concave portion 2120 may be disposed between two first convex portions 2110.

According to an embodiment of the disclosure, the first portion of the first cam member 810 formed to face the first cam portion 1180 of the third sink arm 650 may include a ninth through hole 2150. For example, the first cam member 810 may be connected to the first shaft 730 through the first shaft 730 disposed to pass through the ninth through hole 2150.

According to an embodiment of the disclosure, the fifth cam portion 2100 may be formed on a surface facing the surface where the first cam portion 1180 of the third sink arm 650 is formed in a portion surrounding the ninth through hole 2150 of the first cam member 810. For example, the fifth cam portion 2100 of the first cam member 810 may include a second convex portion 2130 and a second concave portion 2140. For example, referring to FIG. 37, if the second convex portion 2130 is provided in a plural number and the second concave portion 2140 is provided in a plural number, the single second concave portion 2140 may be disposed between two second convex portions 2130.

According to an embodiment of the disclosure, the fifth cam portion 2100 of the first cam member 810 may be formed to correspond to the first cam portion 1180 of the third sink arm 650. For example, the second convex portion 2130 of the fifth cam portion 2100 of the first cam member 810 may be formed in a shape corresponding to the first concave portion 2120 of the first cam portion 1180 of the third sink arm 650. For example, the first convex portion 2110 of the first cam portion 1180 of the third sink arm 650 may be formed in a shape corresponding to the second concave portion 2140 of the fifth cam portion 2100 of the first cam member 810. In this way, a foldable electronic device with an optimized interlocking structure between parts within a defined space is achieved, ensuring that the electronic device developed cannot be over-rotated beyond the third state and preventing deviation from the hinge module.

FIG. 38 is an arrangement of a first cam portion of a third sink arm and a third cam of a first cam member in a unfolded state of a foldable electronic device according to an embodiment.

Referring to FIG. 38, according to an embodiment, with the foldable electronic device 100 unfolded, the first convex portion 2110 of the first cam portion 1180 of the third sink arm 650 may be positioned in the second concave portion 2140 of the fifth cam portion 2100 of the first cam member 810. With the first convex portion 2110 of the first cam portion 1180 positioned in the second concave portion 2140 of the fifth cam portion 2100, the first elastic member 820 contacting the first portion of the first cam member 810 may have a first length.

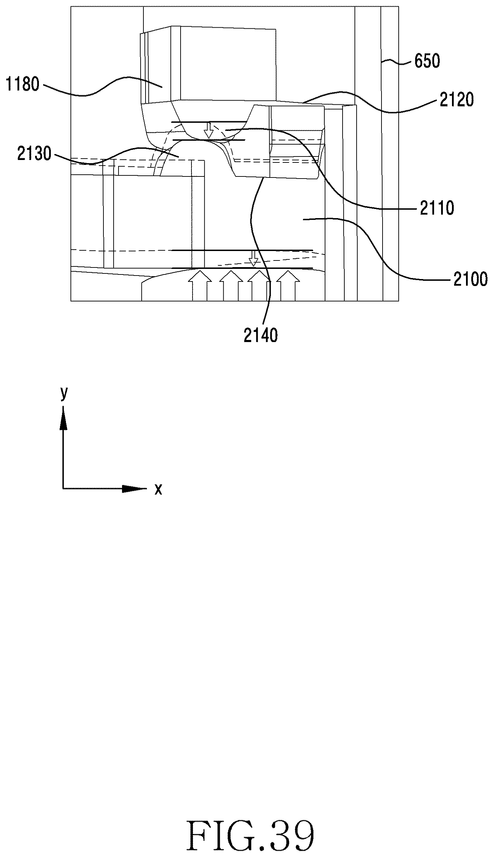

FIG. 39 is an arrangement of a first cam portion of a third sink arm and a third cam portion of a first cam member while a foldable electronic device is folded according to an embodiment.

Referring to FIG. 39, according to an embodiment, while the foldable electronic device 100 is folded, the first convex portion 2110 of the first cam portion 1180 of the third sink arm 650 may contact the second convex portion 2130 of the fifth cam portion 2100 of the first cam member 810. For example, as the first convex portion 2110 of the first cam member 1180 contacts the second convex portion 2130 of the fifth cam member 2100, the first sink arm 630 may move the first cam member 810 in a direction parallel to the third rotation axis 1810. As the first cam member 810 is moved by the third sink arm 650, the first cam member 810 may compress the first elastic member 820. For example, the compressed first elastic member 820 may have a second length which is shorter than the first length. The compressed first elastic member 820 may apply the restoring force to the first cam member 810. For example, the first cam member 810 receiving the restoring force may push the third sink arm 650 in a direction parallel to the third rotation axis 1810. Due to the force exerted on the third sink arm 650 by the first cam member 810, the third sink arm 650 may maintain a specific angle of the foldable electronic device 100. In this way, a foldable electronic device with an optimized interlocking structure between parts within a defined space is achieved, ensuring that the electronic device developed cannot be over-rotated beyond the third state and preventing deviation from the hinge module.

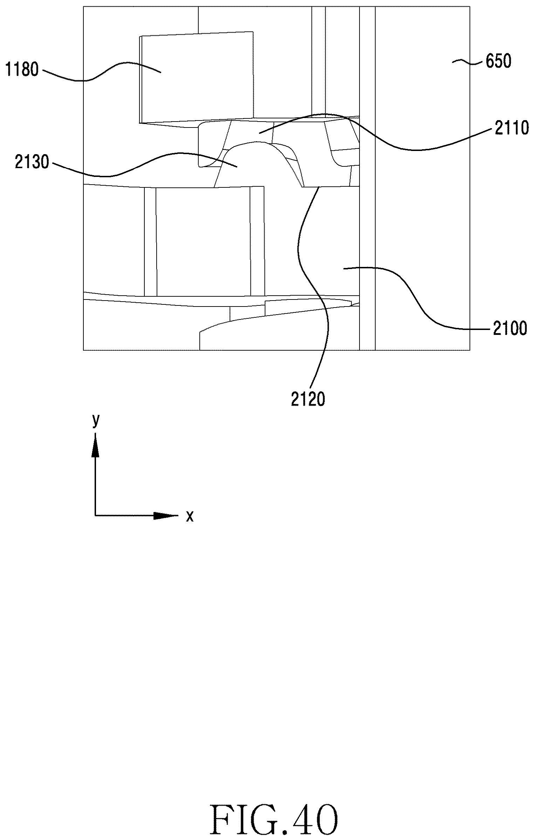

FIG. 40 is an arrangement of a first cam portion of a third sink arm and a third cam portion of a first cam member in a folded state of a foldable electronic device according to an embodiment.

Referring to FIG. 40, according to an embodiment, with the foldable electronic device 100 folded, the first convex portion 2110 of the first cam portion 1180 of the third sink arm 650 may be positioned between the second convex portion 2130 and the second concave portion 2140 of the fifth cam portion 2100 of the first cam member 810. With the first convex portion 2110 of the first cam portion 1180 positioned between the second convex portion 2130 and the second concave portion 2140 of the fifth cam portion 2100, the first elastic member 820 contacting the first portion of the first cam member 810 may have a third length which is shorter than the first length and longer than the second length. Since the first elastic member 820 has the third length, the magnitude of the restoring force exerted by the first elastic member 820 on the first cam member 810 in the folded state of the foldable electronic device 100 may be smaller than the magnitude of the restoring force exerted by the elastic member 820 on the first cam member 810 while the foldable electronic device 100 is folded. As the restoring force on the first cam member 810 received from the first elastic member decreases, the first cam member 810 may exert smaller force on the third sink arm 650 in the folded state of the foldable electronic device 100 than the magnitude of the force exerted by the first cam member 810 on the third sink arm 650 while the foldable electronic device 100 is folded. In this way, a foldable electronic device with an optimized interlocking structure between parts within a defined space is achieved, ensuring that the electronic device developed cannot be over-rotated beyond the third state, and preventing deviation from the hinge module.

FIG. 41 is a perspective view of a shaft bracket according to an embodiment.

Although only the shape of the first shaft bracket 840 is depicted in FIG. 41, the shape of the second shaft bracket 880 may be formed to be identical to the shape of the first shaft bracket 840.

Referring to FIG. 41, according to an embodiment, the first shaft bracket 840 may include a first portion 2210, a second portion 2220, and a connection portion 2230 for connecting the first portion 2210 and the second portion 2220. For example, the first portion 2210 may be formed on one side of the connection portion 2230. For example, the second portion 2220 may be formed on the other side opposite to one side of the connection portion 2230.

According to an embodiment of the disclosure, the first portion 2210 may include a tenth through hole 2240. For example, the first shaft 730 may be disposed to pass through the tenth through hole 2240 of the first shaft bracket 840. For example, since the first shaft 730 is disposed to pass through the tenth through hole 2240 of the first shaft bracket 840, the first portion 2210 of the first shaft bracket 840 may be connected to the first shaft 730.

According to an embodiment of the disclosure, the first portion 2210 may include a surface surrounding the tenth through hole 2240. For example, the surface surrounding the tenth through hole 2240 of the first portion 2210 may be a surface facing in a direction aligned with the third rotation axis 1810 and/or the fourth rotation axis 1820. According to an embodiment, at least a part of the first portion 2210 of the first shaft bracket 840 may contact the first elastic member 820. For example, the surface surrounding the tenth through hole 2240 of the first portion 2210 may contact the first elastic member 820 to support the first elastic member 820.

According to an embodiment of the disclosure, the second portion 2220 may include an eleventh through hole 2250. For example, the second shaft 740 may be disposed to pass through the eleventh through hole 2250 of the first shaft bracket 840. For example, since the second shaft 740 is disposed to pass through the eleventh through hole 2250 of the first shaft bracket 840, the second portion 2220 of the second shaft bracket 880 may be connected to the second shaft 740.

According to an embodiment of the disclosure, the second portion 2220 may include a surface surrounding the eleventh through hole 2250. For example, the surface surrounding the eleventh through hole 2250 of the second portion 2220 may be a surface facing in a direction aligned with the third rotation axis 1810 and/or the fourth rotation axis 1820. According to an embodiment, at least a part of the second portion 2220 of the first shaft bracket 840 may contact the second elastic member 830. For example, the surface surrounding the eleventh through hole 2250 of the second portion 2220 may contact the second elastic member 830 to support the second elastic member 830.

According to an embodiment of the disclosure, the connection portion 2230 for connecting the first portion 2210 and the second portion 2220 may be disposed perpendicular to the third rotation axis 1810 and the fourth rotation axis 1820. For example, the connection portion 2230 may be disposed perpendicular to the first elastic member 820 and the second elastic member 830. According to an embodiment, at least a part of the connection portion 2230 may be convexly formed toward the hinge housing 520. For example, a center portion of the connection portion 2230 may be convexly formed toward the hinge housing 520. For example, the connection portion 2230 may be disposed between a virtual straight line connecting a top portion of the first portion 2210 and a top portion of the second portion 2220 and the hinge housing 520. In this way, a foldable electronic device with an optimized interlocking structure between parts within a defined space is achieved, ensuring that the electronic device developed cannot be over-rotated beyond the third state and preventing deviation from the hinge module.

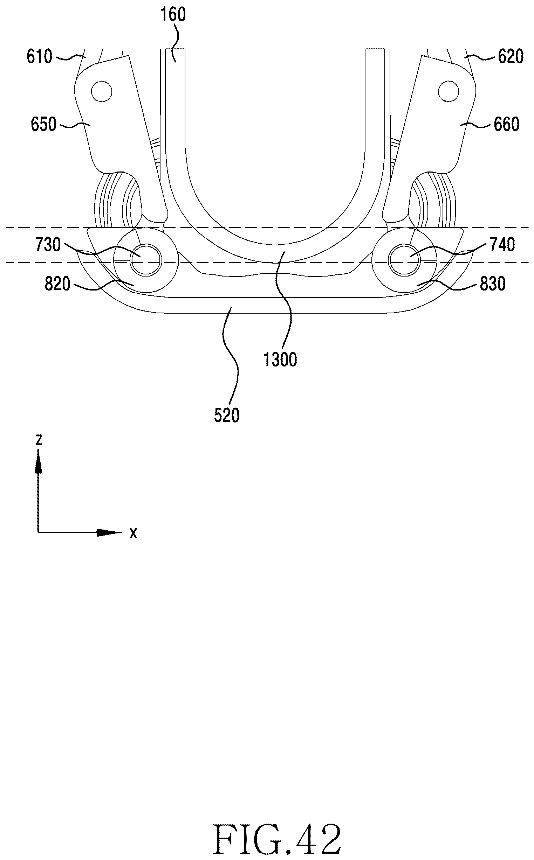

FIG. 42 is an arrangement of a flexible display, elastic members and a hinge housing in a folded state of a foldable electronic device according to an embodiment.

According to an embodiment of the disclosure, as the foldable electronic device 100 is folded, the second housing 120 and/or the third housing 130 may rotate. While the second housing 120 and/or the third housing 130 rotate, the first rotation arm 610 and the second rotation arm 620 may rotate. While the first rotation arm 610 and the second rotation arm 620 rotate, the flexible display 160 may be supported at least in part by the first rotation arm 610 and the second rotation arm 620. While the first rotation arm 610 and the second rotation arm 620 rotate, the first sink arm 630 connected to the first rotation arm 610 and the third sink arm 650 connected to the first sink arm 630 may rotate with the first rotation arm 610. While the first rotation arm 610 and the second rotation arm 620 rotate, the second sink arm 640 connected to the second rotation arm 620 and the fourth sink arm 660 connected to the second sink arm 640 may rotate with the second rotation arm 620.

According to an embodiment of the disclosure, referring to FIG. 42, in the folded state of the foldable electronic device 100, the folding portion 1300 of the flexible display 160 may be folded by the first rotation arm 610 and the second rotation arm 620. For example, the folding portion 1300 may be positioned at least in part on the virtual straight line connecting the first shaft 730 and the second shaft 740. For example, at least a part of the folding portion 1300 may be positioned between the virtual straight line connecting the top portion of the first elastic member 820 and the top portion of the second elastic member 830 and the hinge housing 520.

According to an embodiment of the disclosure, referring to FIG. 42, in the folded state of the foldable electronic device 100, as the folding portion 1300 of the flexible display 160 is positioned at least in part between the virtual straight line connecting the top portion of the first elastic member 820 and the top portion of the second elastic member 830 and the hinge housing 520, the folding portion 1300 may not be interfered by other configurations of the hinge module 510. Since the folding portion 1300 is not interfered, deformation of the folding portion 1300 may not occur. In this way, a foldable electronic device with an optimized interlocking structure between parts within a defined space is achieved, ensuring that the electronic device developed cannot be over-rotated beyond the third state and preventing deviation from the hinge module.

FIG. 43 is a perspective view of a first ring member and a third ring member coupled with a first shaft according to an embodiment.

Although only the first ring member 910 and the third ring member 930 coupled to the first shaft 730 are depicted in FIG. 43, the description of FIG. 43 may be equally applied to the second ring member 920 and the fourth ring member 940 coupled to the second shaft 740.

According to an embodiment of the disclosure, the second shaft bracket 880 may be disposed to prevent the third elastic member 860 and the fourth elastic member 870 from deviating, as the third elastic member 860 and the fourth elastic member 870 are compressed. For example, the first portion formed on one side of the second shaft bracket 880 may contact the third elastic member 860 to support the third elastic member 860. For example, the second portion formed on the other side opposite to one side of the second shaft bracket 880 may contact the fourth elastic member 870 to support the fourth elastic member 870.

According to an embodiment of the disclosure, the hinge module 510 may include the first ring member 910 for supporting the first portion of the second shaft bracket 880. For example, one surface of the first ring member 910 may be disposed to contact one surface of the first portion of the second shaft bracket 880. For example, one surface of the first ring member 910 may be formed as a flat surface to support the second shaft bracket 880.

According to an embodiment of the disclosure, the first ring member 910 may include a twelfth through hole 2310. For example, since the first shaft 730 is disposed to pass through the twelfth through hole 2310, the first ring member 910 may be coupled to the first shaft 730. For example, one surface surrounding the twelfth through hole 2310 of the first ring member 910 may be a surface supporting the first portion of the second shaft bracket 880.

According to an embodiment of the disclosure, the hinge module 510 may include a third ring member 930 for supporting the first ring member 910, to prevent the first ring member 910 from deviating from the first shaft 730. The third ring member 930 may include a fastening hole 2320 for fastening to the first shaft 730. For example, the fastening hole 2320 may be fastened at one end of the first shaft 730. For example, the fastening hole 2320 may be fastened to a fastening portion 2330 formed at one end of the first shaft 730. For example, a diameter of the fastening portion 2330 of the first shaft 730 may be smaller than a diameter of one end of the first shaft 730. For example, the fastening hole 2320 may be formed to correspond to the fastening portion 2330 of the first shaft 730. For example, the third ring member 930 may be fastened to the fastening portion 2330 of the first shaft 730 through the fastening hole 2320 in a direction perpendicular to the first shaft 730. In this way, a foldable electronic device with an optimized interlocking structure between parts within a defined space is achieved, ensuring that the electronic device developed cannot be over-rotated beyond the third state and preventing deviation from the hinge module.

FIG. 44 is a perspective view of a fixing bracket according to an embodiment.

According to an embodiment of the disclosure, the hinge module 510 may include the fixing bracket 950 for securing the hinge module 510 to the hinge housing 520. One side of the fixing bracket 950 may include a first guide slot 2410 connected to one end of the first shaft 730. For example, the first shaft 730 may be secured to the fixing bracket 950, by coupling one end of the first shaft 730 to the first guide slot 2410 of the fixing bracket 950. The first guide slot 2410 may be formed to correspond to the shape of the first shaft 730. For example, the first guide slot 2410 may be formed in a half-ring shape to be coupled with the first shaft 730. For example, the fixing bracket 950 may be coupled to the first shaft 730 through the first guide slot 2410 in a direction perpendicular to the first shaft 730.

According to an embodiment of the disclosure, the other side opposite to one side of the fixing bracket 950 may include a second guide slot 2420 connected to one end of the second shaft 740. For example, the second shaft 740 may be secured to the fixing bracket 950, by coupling one end of the second shaft 740 to the second guide slot 2420 of the fixing bracket 950. The second guide slot 2420 may be formed to correspond to the shape of the second shaft 740. For example, the second guide slot 2420 may be formed in a half-ring shape to be coupled with the second shaft 740. For example, the fixing bracket 950 may be coupled to the second shaft 740 through the second guide slot 2420 in a direction perpendicular to the second shaft 740.

According to an embodiment of the disclosure, a fifth opening 2430 may be formed at a position adjacent to the first guide slot 2410 on one side of the fixing bracket 950. One side of the fixing bracket 950 may be secured to the hinge housing 520 through the fifth opening 2430. A sixth opening 2440 may be formed at a position adjacent to the second guide slot 2420 on the other side of the fixing bracket 950. The other side of the fixing bracket 950 may be secured to the hinge housing 520 through the sixth opening 2440. In this way, a foldable electronic device with an optimized interlocking structure between parts within a defined space is achieved, ensuring that the electronic device developed cannot be over-rotated beyond the third state and preventing deviation from the hinge module.

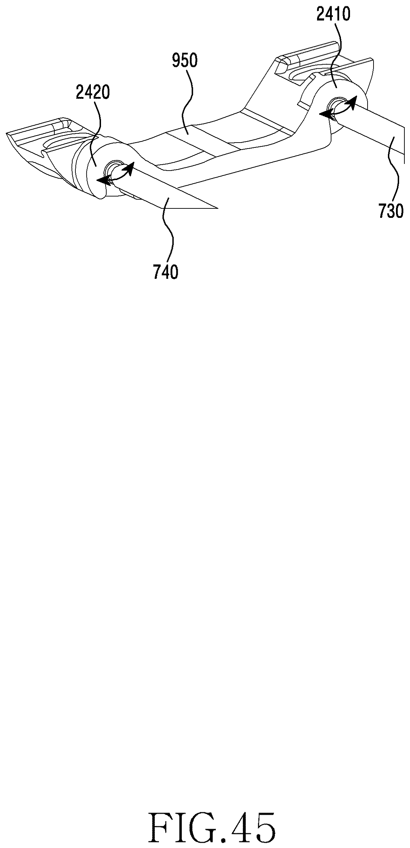

FIG. 45 is a diagram of shafts coupled to a fixing bracket according to an embodiment.

Referring to FIG. 45, for example, by fastening one end of the first shaft 730 to the first guide slot 2410 of the fixing bracket 950, the first shaft 730 may not deviate from the hinge module 510, while the foldable electronic device 100 is folded or unfolded. For example, by fastening one end of the first shaft 730 to the first guide slot 2410 of the fixing bracket 950 secured to the hinge housing 520, the first shaft 730 may be secured to the hinge housing 520.

Referring to FIG. 45, for example, by fastening one end of the second shaft 740 to the second guide slot 2420 of the fixing bracket 950, the second shaft 740 may not deviate from the hinge module 510, while the foldable electronic device 100 is folded or unfolded. For example, by fastening one end of the second shaft 740 to the second guide slot 2420 of the fixing bracket 950 secured to the hinge housing 520, the second shaft 740 may be secured to the hinge housing 520. In this way, a foldable electronic device with an optimized interlocking structure between parts within a defined space is achieved, ensuring that the electronic device developed cannot be over-rotated beyond the third state and preventing deviation from the hinge module.

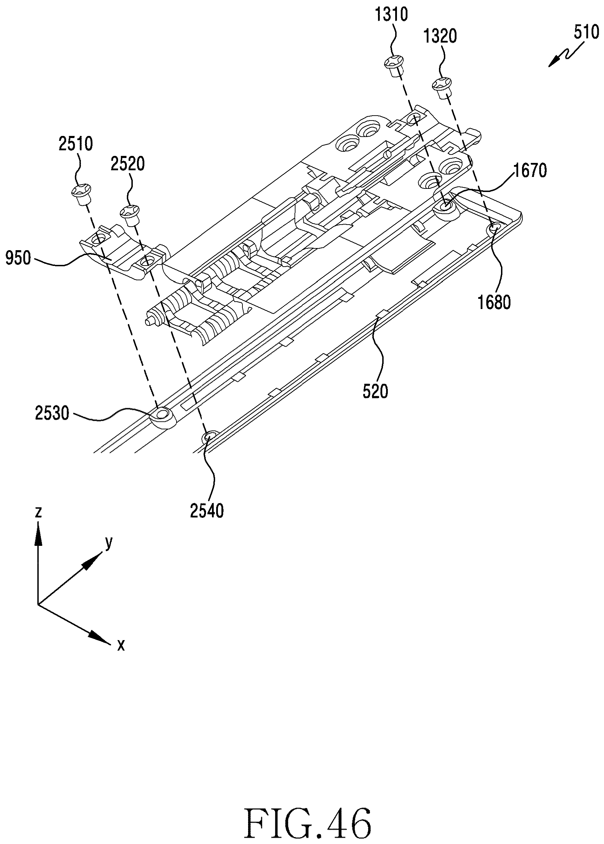

FIG. 46 is a diagram illustrating coupling of a hinge housing and a hinge module according to an embodiment.

According to an embodiment of the disclosure, the hinge module 510 may be coupled to the hinge housing 520 through a plurality of fastening members. For example, the hinge module 510 may be secured to the hinge housing 520, by inserting the first fastening member 1310 disposed to pass through an opening formed on one edge of one side into the first fastening portion 1670 of the hinge housing 520. For example, the opening formed on one edge of one side may be the first opening 1450 of the rotation guide bracket 670. For example, the hinge module 510 may be secured to the hinge housing 520, by inserting the second fastening member 1320 disposed to pass through an opening formed on another edge opposite to the position of one edge of one side into the second fastening portion 1680 of the hinge housing 520. For example, the opening formed on another edge of one side may be the second opening 1460 of the rotation guide bracket 670.

According to an embodiment of the disclosure, for example, the hinge module 510 may be secured to the hinge housing 520, by inserting a third fastening member 2510 disposed to pass through an opening formed on one edge of the other side into a third fastening portion 2530 of the hinge housing 520. For example, the opening formed on one edge of one side may be the fifth opening 2430 of the fixing bracket 950. For example, the hinge module 510 may be secured to the hinge housing 520, by inserting a fourth fastening member 2520 disposed to pass through an opening formed on another edge opposite to the position of one edge of the other side into a fourth fastening portion 2540 of the hinge housing 520. For example, the opening formed on another edge of one side may be the sixth opening 2440 of the fixing bracket 950. In this way, a foldable electronic device with an optimized interlocking structure between parts within a defined space is achieved, ensuring that the electronic device developed cannot be over-rotated beyond the third state and preventing deviation from the hinge module.

FIG. 47 is a diagram of a support plate in an unfolded state of a foldable electronic device according to an embodiment.

According to an embodiment of the disclosure, the support plate 530 for supporting at least in part the flexible display 160 may include a first support plate 2610 and a second support plate 2620. For example, the first support plate 2610 and the second support plate 2620 may be formed symmetrically to each other. For example, with the foldable electronic device 100 unfolded, the first support plate 2610 and the second support plate 2620 may support at least in part the folding portion 1300 of the flexible display 160.

According to an embodiment of the disclosure, the first support plate 2610 may be coupled to one side of the first rotation arm 610. For example, at least a part of the first support plate 2610 may be inserted into the coupling groove formed in one surface of the first rotation arm 610 and coupled with the first rotation arm 610. In an embodiment, the first support plate 2610, which is coupled to one side of the first rotation arm 610 may rotate together, as the first rotation arm 610 rotates about the first rotation axis 1710.

According to an embodiment of the disclosure, the second support plate 2620 may be coupled to one side of the second rotation arm 620. For example, at least a part of the second support plate 2620 may be inserted into the coupling groove formed in one surface of the second rotation arm 620 and coupled with the second rotation arm 620. In an embodiment, the second support plate 2620, which is coupled to one side of the second rotation arm 620, may rotate together, as the second rotation arm 620 rotates about the second rotation axis 1720.

According to an embodiment of the disclosure, in the unfolded state of the foldable electronic device 100, the first support plate 2610 and the second support plate 2620 may be disposed side by side. For example, in the unfolded state of the foldable electronic device 100, the first support plate 2610 and the second support plate 2620 may be disposed to be flat to support at least in part the folding portion 1300 of the flexible display 160. For example, in the unfolded state of the foldable electronic device 100, the first support plate 2610 and the second support plate 2620 may contact each other and form a single flat surface to flatly support the folding portion 1300 of the flexible display 160. In this way, a foldable electronic device with an optimized interlocking structure between parts within a defined space is achieved, ensuring that the electronic device developed cannot be over-rotated beyond the third state and preventing deviation from the hinge module.

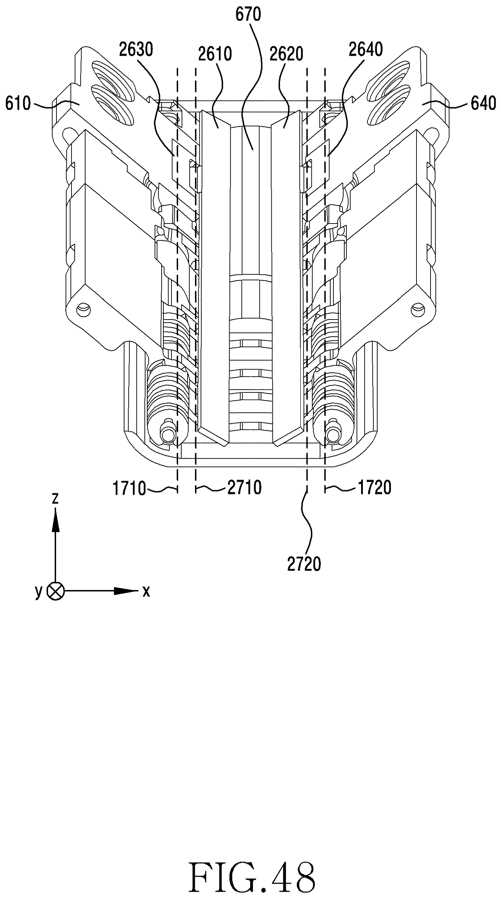

FIG. 48 is a diagram illustrating a support plate in a folded state of a foldable electronic device according to an embodiment.

According to an embodiment of the disclosure, while the foldable electronic device 100 is folded, the first support plate 2610 and the second support plate 2620 may be spaced apart from each other. For example, as the second housing 120 rotates, the first rotation arm 610 may rotate, and the first support plate 2610 coupled to the first rotation arm 610 may move toward one side of the hinge module 510. For example, as the third housing 130 rotates, the second rotation arm 620 may rotate, and the second support plate 2620 coupled to the second rotation arm 620 may move toward the other side opposite to one side of the hinge module 510. For example, as the first support plate 2610 moves toward one side of the hinge module 510 and the second support plate 2620 moves toward the other side of the hinge module 510, the first support plate 2610 and the second support plate 2620 may be arranged to be spaced apart from each other.

According to an embodiment of the disclosure, while the first support plate 2610 rotates with the first rotation arm 610, the first support plate 2610 may rotate about a fifth rotation axis 2710 which is different from the first rotation axis 1710. For example, while the first support plate 2610 rotates with the first rotation arm 610, the first support plate 2610 may rotate about the fifth rotation axis 2710, until the first support plate 2610 changes from the contact state with the rotation guide bracket 670 to the folded state of the foldable electronic device 100. For example, the fifth rotation axis 2710 may be formed parallel to the first rotation axis 1710. For example, the first support plate 2610 may rotate along the rotation guide bracket 670, about the fifth rotation axis 2710.

According to an embodiment of the disclosure, while the second support plate 2620 rotates with the second rotation arm 620, the second support plate 2620 may rotate about a sixth rotation axis 2720 which is different from the second rotation axis 1720. For example, while the second support plate 2620 rotates with the second rotation arm 620, the second support plate 2620 may rotate about the sixth rotation axis 2720, until the second support plate 2620 changes from the contact state with the rotation guide bracket 670 to the folded state of the foldable electronic device 100. For example, the sixth rotation axis 2720 may be formed parallel to the second rotation axis 1720. For example, the second support plate 2620 may rotate along the rotation guide bracket 670, about the sixth rotation axis 2720. In this way, a foldable electronic device with an optimized interlocking structure between parts within a defined space is achieved, ensuring that the electronic device developed cannot be over-rotated beyond the third state and preventing deviation from the hinge module.

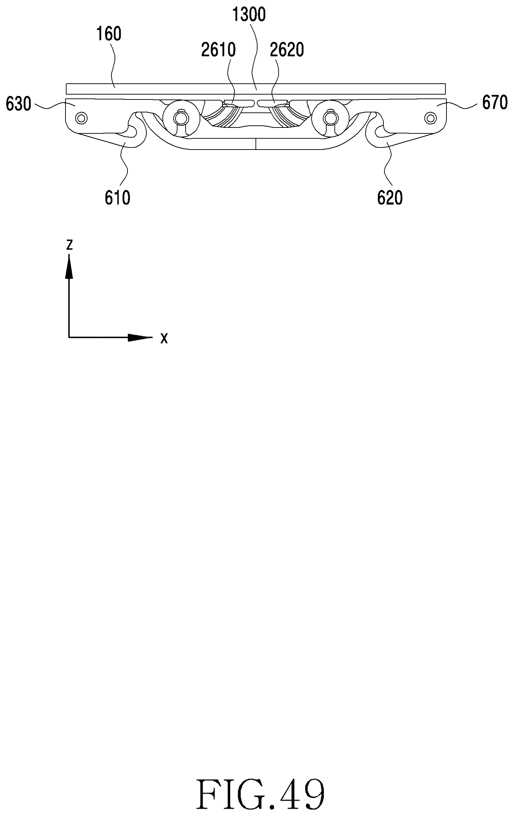

FIG. 49 is an arrangement of a flexible display and a support plate in an unfolded state of a foldable electronic device according to an embodiment.

According to an embodiment of the disclosure, in the unfolded state of the foldable electronic device 100, one side of the flexible display 160 may be supported by the first rotation arm 610 and the first sink arm 630, and the other side opposite to one side of the flexible display may be supported by the second rotation arm 620 and the second sink arm 640. In an embodiment, the folding portion 1300 of the flexible display 160 may be supported at least in part by the support plate 530. For example, one side of the folding portion 1300 may be supported by the first support plate 2610. For example, the other side of the folding portion 1300 may be supported by the second support plate 2620.

According to an embodiment of the disclosure, in the unfolded state of the foldable electronic device 100, the first support plate 2610 and the second support plate 2620 may flatly support the folding portion 1300 of the flexible display 160. For example, a single flat surface formed by one surface of the first support plate 2610 and one surface of the second support plate 2620 may support the folding portion 1300 of the flexible display 160. In this way, a foldable electronic device with an optimized interlocking structure between parts within a defined space is achieved, ensuring that the electronic device developed cannot be over-rotated beyond the third state and preventing deviation from the hinge module.

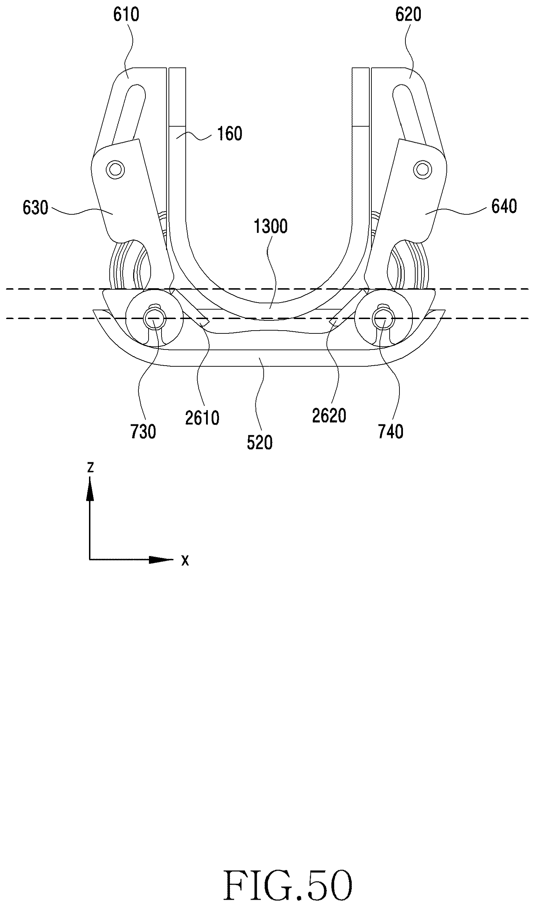

FIG. 50 is an arrangement of a flexible display and a support plate in a folded state of a foldable electronic device according to an embodiment.

According to an embodiment of the disclosure, in the folded state of the foldable electronic device 100, the folding portion 1300 of the flexible display 160 may be positioned between a virtual straight line connecting the top of the first shaft 730 and the top of the second shaft 740 and the hinge housing 520. For example, the folding portion 1300 of the flexible display 160 may be positioned at least in part on the virtual straight line connecting the first shaft 730 and the second shaft 740.

According to an embodiment of the disclosure, in the folded state of the foldable electronic device 100, the first support plate 2610 and the second support plate 2620 may be spaced apart from each other such that the folding portion 1300 of the flexible display 160 is positioned between the virtual straight line connecting the top of the first shaft 730 and the top of the second shaft 740 and the hinge housing 520. Since the first support plate 2610 and the second support plate 2620 are spaced apart from each other, in the folded state of the foldable electronic device 100, the folding portion 1300 of the flexible display 160 may not contact the first support plate 2610 and the second support plate 2620. For example, the first support plate 2610 may be moved to one side of the hinge module 510 and the second support plate 2620 may be moved to the other side of the hinge module 510, such that the first support plate 2610 and the second support plate 2620 are spaced apart by a specific distance from the folding portion 1300.

An embodiment of the disclosure is an apparatus for providing a wide hinge structure for arranging a first housing between a second housing and a third housing, in a folded state of a multi-foldable electronic device.

An embodiment of the disclosure may provide a foldable electronic device including an interlocking pin for connecting a rotation arm and a sink arm which rotate about different rotation axes, while the foldable electronic device is folded or unfolded.

An embodiment of the disclosure may provide a foldable electronic device allowing housings to maintain a specific angle, by arranging a cam portion of a sink arm and a cam portion of a cam member to engage.

An embodiment of the disclosure may provide a foldable electronic device including a sliding member for guiding rotation of a sink arm by a spiral portion of the sliding member connected to the spiral portion of the sink arm.

Technical problems to be achieved in the disclosure are not limited to the technical problems mentioned above, and other technical problems not mentioned may be clearly understood by those skilled in the art of the technical field which the disclosure belongs to.

According to an embodiment of the disclosure, a foldable electronic device may include a housing including a first housing, a second housing, and a hinge housing positioned at least in part between the first housing and the second housing, a flexible display accommodated at least in part in the first housing and the second housing, and a hinge module connected to the first housing and the second housing. The hinge module may include a first shaft corresponding to a first rotation axis, a second shaft corresponding to a second rotation axis, and a first sink arm configured to rotate about the first rotation axis while the first housing rotates. The first sink arm may include a first through hole which the first shaft passes through and a first spiral portion. The hinge module may include a second sink arm configured to rotate about the second rotation axis while the second housing rotates. The second sink arm may include a second through hole which the first shaft passes through and a second spiral portion. The hinge module may include a sliding member configured to move in a direction parallel to the first rotation axis and the second rotation axis while at least one of the first housing or the second housing rotates. The sliding member may include a third through hole which the first shaft passes through, a fourth through hole which the second shaft passes through, a third spiral portion corresponding to the first spiral portion, and a fourth spiral portion corresponding to the second spiral portion. A folding portion of the flexible display may be positioned at least in part between a virtual line connecting a top of the third spiral portion and a top of the fourth spiral portion of the sliding member and the hinge housing, with the housing folded.

According to an embodiment of the disclosure, the folding portion of the flexible display may be positioned at least in part between the first shaft and the second shaft, with the housing folded, when the flexible display is viewed from a direction perpendicular to the hinge housing.

According to an embodiment of the disclosure, the hinge module may include a third sink arm configured to rotate about the first rotation axis while the first housing rotates. The third sink arm may include a fifth through hole which the first shaft passes through and a fifth spiral portion. A fourth sink arm configured to rotate about the second rotation axis while the second housing rotates may be included. The fourth sink arm may include a sixth through hole which the second shaft passes through and a sixth spiral portion.

According to an embodiment of the disclosure, the sliding member may include a seventh spiral portion corresponding to the fifth spiral portion and an eighth spiral portion corresponding to the sixth spiral portion.

According to an embodiment of the disclosure, while the first housing rotates, the first spiral portion of the first sink arm may rotate along the third spiral portion of the sliding member, and the fifth spiral portion of the third sink arm may rotate along the seventh spiral portion of the sliding member, and the sliding member may move in the direction parallel to the first rotation axis and the second rotation axis, by the rotation of the first spiral portion and the rotation of the fifth spiral portion.

According to an embodiment of the disclosure, a first cam portion may be formed on a surface in a direction parallel to the first rotation axis in a portion surrounding the fifth through hole of the third sink arm. A second cam portion may be formed on a surface in a direction parallel to the second rotation axis in a portion surrounding the sixth through hole of the fourth sink arm.

According to an embodiment of the disclosure, the hinge module may include a camber member including a third cam portion corresponding to the first cam portion, a fourth cam portion corresponding to the second cam portion, and a body portion connecting the third cam portion and the fourth cam portion.

According to an embodiment of the disclosure, a center portion of the connection portion may be formed in a convex shape toward the hinge housing.

According to an embodiment of the disclosure, the third sink arm may include a seventh through hole which the first shaft passes through. The fourth sink arm may include an eighth through hole which the second shaft passes through. A fifth cam portion may be formed on a surface in a direction parallel to the first rotation axis in a portion surrounding the seventh through hole of the third sink arm. A sixth cam portion may be formed on a surface in a direction parallel to the second rotation axis in a portion surrounding the eighth through hole of the fourth sink arm.

According to an embodiment of the disclosure, the hinge module may include a shaft bracket including a first portion adjacent to the portion surrounding the seventh through hole of the third sink arm, a second portion adjacent to the portion surrounding the eighth through hole of the fourth sink arm, and a connection portion positioned between the first portion and the second portion.

According to an embodiment of the disclosure, the hinge module may include a first elastic member positioned between the third cam portion of the cam member and the first portion of the shaft bracket, and a second elastic member positioned between the fourth cam portion of the cam member and the second portion of the shaft bracket.

According to an embodiment of the disclosure, the hinge module may include a first rotation arm slidably connected to the first sink arm, and configured to rotate about the third rotation axis while the first housing rotates. The hinge module may include a second rotation arm slidably connected to the second sink arm, and configured to rotate about the fourth rotation axis while the second housing rotates. With the housing folded, the flexible display may be configured to be supported at least in part by the first rotation arm and the second rotation arm.

According to an embodiment of the disclosure, the hinge module may include a first pin member inserted into a first sliding hole of the first rotation arm and a first insertion hole of the sink arm. While the first housing rotates, the first rotation arm and the first sink arm may rotate together by the pin member. While the first housing rotates, the first pin member may slide inside the first sliding hole.

According to an embodiment of the disclosure, the hinge module may include a first support member connected to the first rotation arm, and extending in a direction parallel to the first rotation axis. The hinge module may include a second support member connected to the second rotation arm, and extending in a direction parallel to the second rotation axis. With the housing folded, the flexible display may be supported at least in part by the first support member and the second support member.

According to an embodiment of the disclosure, the first support member and the second support member may be configured to be adjacent to each other with the housing folded, and to separate from each other with the housing folded. With the housing folded, the folding portion of the flexible display may be positioned at least in part between the first support member and the second support member.

According to an embodiment of the disclosure, the first rotation arm may include a first seating portion disposed to contact a first stopper of the hinge housing with the housing folded. The second rotation arm may include a second seating portion disposed to contact a second stopper of the hinge housing with the housing folded.

According to an embodiment of the disclosure, the hinge module may include a rotation guide bracket mounted on the hinge housing. A first end of the first shaft and a first end of the second shaft may be secured to the rotation guide bracket. A second end of the first shaft and a second end of the second shaft may be secured to the hinge housing.

According to an embodiment of the disclosure, the hinge module may include a rotation guide bracket mounted on the hinge housing. A rib guide portion may be formed at one end toward the sliding member of the rotation guide bracket. A rib received in the rib guide portion may be formed at one end toward the rotation guide bracket of the sliding member. As the sliding member moves in a direction parallel to the first rotation axis and the second rotation axis while at least one of the first housing or the second housing rotates, the rib may be configured to move inside the rib guide member in a direction parallel to the first rotation axis and the second rotation axis.

According to an embodiment of the disclosure, the hinge module may be secured to the hinge housing on a first edge adjacent to the first housing and a second edge adjacent to the second housing.

According to an embodiment of the disclosure, the housing may include a third housing, and other hinge housing positioned at least in part between the second housing and the third housing. With the housing folded, the third housing may be positioned between the first housing and the second housing.

According to an embodiment of the disclosure, a foldable electronic device may include a housing including a first housing, a second housing, and a hinge housing positioned at least in part between the first housing and the second housing, a flexible display received at least in part in the first housing and the second housing, and a hinge module connected to the first housing and the second housing. The hinge module may include a first shaft corresponding to a first rotation axis, a second shaft corresponding to a second rotation axis, and a first sink arm configured to rotate about the first rotation axis while the first housing rotates. The first sink arm may include a first through hole which the first shaft passes through and a first spiral portion. A first cam portion may be formed on a surface in a direction parallel to the first rotation axis in a portion surrounding the first through hole of the first sink arm. The hinge module may include a second sink arm configured to rotate about the second rotation axis while the second housing rotates. The second sink arm may include a second through hole which the first shaft passes through and a second spiral portion. A second cam portion may be formed on a surface in a direction parallel to the second rotation axis in a portion surrounding the second through hole of the second sink arm. The hinge module may include a camber member including a third cam portion corresponding to the first cam portion, a fourth cam portion corresponding to the second cam portion, and a connection portion for connecting the third cam portion and the fourth cam portion. A center portion of the connection portion may be positioned at least in part between a virtual line connecting the first shaft and the second shaft and the hinge housing. The hinge module may include a sliding member configured to move in a direction parallel to the first rotation axis and the second rotation axis while at least one of the first housing or the second housing rotates. The sliding member may include a third through hole which the first shaft passes through, a fourth through hole which the second shaft passes through, a third spiral portion corresponding to the first spiral portion, and a fourth spiral portion corresponding to the second spiral portion.

According to an embodiment of the disclosure, the flexible display may be positioned at least in part between the first shaft and the second shaft, with the housing folded.

According to an embodiment of the disclosure, the first sink arm may include a fifth through hole which the first shaft passes through. The second sink arm may include a sixth through hole which the second shaft passes through. A fifth cam portion may be formed on a surface in a direction parallel to the first rotation axis in a portion surrounding the fifth through hole of the first sink arm. A sixth cam portion may be formed on a surface in a direction parallel to the second rotation axis in a portion surrounding the sixth through hole of the second sink arm.

According to an embodiment of the disclosure, the hinge module may include a shaft bracket including a first portion adjacent to the portion surrounding the fifth through hole of the first sink arm, a second portion adjacent to the portion surrounding the sixth through hole of the second sink arm, and a connection portion positioned between the first portion and the second portion.

According to an embodiment of the disclosure, the hinge module may include a first elastic member positioned between the third cam portion of the cam member and the first portion of the shaft bracket, and a second elastic member positioned between the fourth cam portion of the cam member and the second portion of the shaft bracket.

According to an embodiment of the disclosure, a foldable electronic device including a wide hinge structure which allows housings to have a wide rotational radius may be provided.

According to an embodiment of the disclosure, a foldable electronic device allowing a sink arm to be rotated by rotation of a rotation arm may be provided, by connecting the sink arm and the rotation arm which rotate about different rotation axes through a pin member.

According to an embodiment of the disclosure, a foldable electronic device secured at a desired angle of a user may be provided, by arranging a cam structure of a sink arm and a cam structure of a cam member to engage, while the foldable electronic device is folded.

Besides, various effects directly or indirectly obtained from the disclosure may be provided.

In the specific embodiments of the disclosure, the component included in the disclosure is expressed in a singular or plural form. However, the singular or plural expression is appropriately selected according to a proposed situation for the convenience of explanation, the disclosure is not limited to a single component or a plurality of components, the components expressed in the plural form may be configured as a single component, and the components expressed in the singular form may be configured as a plurality of components.

In addition, a term such as "unit" or "module" in the disclosure may be a hardware component such as a processor or a circuit, and/or a software component executed by a hardware component such as a processor.

Specific implementations described in this disclosure are merely an embodiment, and are not intended to limit the scope of the disclosure in any way. For the sake of brevity of the specification, disclosure of conventional electronic configurations, control systems, software, and other functional aspects of the systems may be omitted.

In addition, in the disclosure, "including at least one of a, b, or c" may indicate "including a alone, including b alone, including c alone, or including a combination of two or more (including a and b, including b and c, including a and c, or including all of a, b, and c).

Meanwhile, while the specific embodiment has been described in the detailed explanation of the disclosure, it will be noted that various modifications may be made without departing from the scope of the disclosure. Therefore, the scope of the disclosure is not limited and defined by the described embodiment and is defined by not only the scope of the claims as below but also their equivalents.

## Claims

1. A foldable electronic device comprising:
a housing comprising a first housing, a second housing, and a hinge housing positioned at least in part between the first housing and the second housing;
a flexible display supported by the first housing and the second housing; and
a hinge module rotatably coupling the first housing and the second housing,
wherein the hinge module comprises:
a first shaft corresponding to a first rotation axis;
a second shaft corresponding to a second rotation axis;
a first sink arm configured to rotate about the first rotation axis while the first housing rotates, the first sink arm comprising a first through hole which the first shaft passes through and a first spiral portion extending from a surface in which the first through hole is formed;
a second sink arm configured to rotate about the second rotation axis while the second housing rotates, the second sink arm comprising a second through hole which the first shaft passes through and a second spiral portion extending from a surface in which the second through hole is formed; and
a sliding member configured to move in a direction parallel to the first rotation axis and the second rotation axis while at least one of the first housing or the second housing rotates, the sliding member comprising a third through hole which the first shaft passes through, a fourth through hole which the second shaft passes through, a third spiral portion corresponding to the first spiral portion, and a fourth spiral portion corresponding to the second spiral portion,
wherein a folding portion of the flexible display is positioned at least in part between a virtual line connecting a top of the third spiral portion and a top of the fourth spiral portion of the sliding member and the hinge housing, with the housing folded.

2. The foldable electronic device of claim 1, wherein the folding portion of the flexible display is positioned at least in part between the first shaft and the second shaft, with the housing folded, when the flexible display is viewed from a direction perpendicular to the hinge housing.

3. The foldable electronic device of claim 1, wherein the hinge module comprises:
a third sink arm configured to rotate about the first rotation axis while the first housing rotates, the third sink arm comprising a fifth through hole which the first shaft passes through and a fifth spiral portion extending from a surface in which the fifth through hole is formed; and
a fourth sink arm configured to rotate about the second rotation axis while the second housing rotates, the fourth sink arm comprising a sixth through hole which the second shaft passes through and a sixth spiral portion extending from a surface in which the sixth through hole is formed.

4. The foldable electronic device of claim 3, wherein the sliding member comprises a seventh spiral portion corresponding to the fifth spiral portion and an eighth spiral portion corresponding to the sixth spiral portion.

5. The foldable electronic device of claim 4, wherein, while the first housing rotates, the first spiral portion of the first sink arm rotates along the third spiral portion of the sliding member, and the fifth spiral portion of the third sink arm rotates along the seventh spiral portion of the sliding member, and
the sliding member moves in the direction parallel to the first rotation axis and the second rotation axis, by the rotation of the first spiral portion and the rotation of the fifth spiral portion.

6. The foldable electronic device of claim 3, wherein a first cam portion is formed on a surface in a direction parallel to the first rotation axis in a portion surrounding the fifth through hole of the third sink arm, and
a second cam portion is formed on a surface in a direction parallel to the second rotation axis in a portion surrounding the sixth through hole of the fourth sink arm.

7. The foldable electronic device of claim 6, wherein the hinge module comprises:
a camber member comprising a third cam portion corresponding to the first cam portion, a fourth cam portion corresponding to the second cam portion, and a connection portion connecting the third cam portion and the fourth cam portion.

8. The foldable electronic device of claim 7, wherein a center portion of the connection portion is formed in a convex shape toward the hinge housing and is positioned at least in part between a virtual line connecting the first shaft and the second shaft and the hinge housing.

9. The foldable electronic device of claim 7, wherein the third sink arm comprises a seventh through hole which the first shaft passes through,
the fourth sink arm comprises an eighth through hole which the second shaft passes through,
a fifth cam portion is formed on a surface in a direction parallel to the first rotation axis in a portion surrounding the seventh through hole of the third sink arm, and
a sixth cam portion is formed on a surface in a direction parallel to the second rotation axis in a portion surrounding the eighth through hole of the fourth sink arm.

10. The foldable electronic device of claim 9, wherein the hinge module comprises:
a shaft bracket comprising a first portion adjacent to the portion surrounding the seventh through hole of the third sink arm, a second portion adjacent to the portion surrounding the eighth through hole of the fourth sink arm, and a connection portion positioned between the first portion and the second portion.

11. The foldable electronic device of claim 10, wherein the hinge module comprises:
a first elastic member positioned between the third cam portion of the cam member and the first portion of the shaft bracket; and
a second elastic member positioned between the fourth cam portion of the cam member and the second portion of the shaft bracket.

12. The foldable electronic device of claim 1, wherein the hinge module comprises:
a first rotation arm slidably connected to the first sink arm, and configured to rotate about a third rotation axis while the first housing rotates; and
a second rotation arm slidably connected to the second sink arm, and configured to rotate about a fourth rotation axis while the second housing rotates, and
with the housing folded, the flexible display is configured to be supported at least in part by the first rotation arm and the second rotation arm.

13. The foldable electronic device of claim 12, wherein the hinge module comprises:
a first pin member inserted into a first sliding hole of the first rotation arm and a first insertion hole of the sink arm,
while the first housing rotates, the first rotation arm and the first sink arm rotate together by the pin member, and
while the first housing rotates, the first pin member slides inside the first sliding hole.

14. The foldable electronic device of claim 1, wherein the housing comprises a third housing, and an other hinge housing positioned at least in part between the second housing and the third housing, and
with the housing folded, the third housing is positioned between the first housing and the second housing.

15. A foldable electronic device comprising:
a housing comprising a first housing, a second housing, and a hinge housing positioned at least in part between the first housing and the second housing;
a flexible display received at least in part in the first housing and the second housing; and
a hinge module connected to the first housing and the second housing,
wherein the hinge module comprises:
a first shaft corresponding to a first rotation axis;
a second shaft corresponding to a second rotation axis;
a first sink arm configured to rotate about the first rotation axis while the first housing rotates, the first sink arm comprising a first through hole which the first shaft passes through and a first spiral portion, a first cam portion formed on a surface in a direction parallel to the first rotation axis in a portion surrounding the first through hole of the first sink arm;
a second sink arm configured to rotate about the second rotation axis while the second housing rotates, the second sink arm comprising a second through hole which the first shaft passes through and a second spiral portion, a second cam portion formed on a surface in a direction parallel to the second rotation axis in a portion surrounding the second through hole of the second sink arm;
a camber member comprising a third cam portion corresponding to the first cam portion, a fourth cam portion corresponding to the second cam portion, and a connection portion for connecting the third cam portion and the fourth cam portion, a center portion of the connection portion positioned at least in part between a virtual line connecting the first shaft and the second shaft and the hinge housing; and
a sliding member configured to move in a direction parallel to the first rotation axis and the second rotation axis while at least one of the first housing or the second housing rotates, the sliding member comprising a third through hole which the first shaft passes through, a fourth through hole which the second shaft passes through, a third spiral portion corresponding to the first spiral portion, and a fourth spiral portion corresponding to the second spiral portion.
